# EUROPÄISCHE PATENTSCHRIFT

(11) **EP 1 373 756 B1**
(45) Veröffentlichungstag und Bekanntmachung des Hinweises auf die Patenterteilung: **25.04.2012**
(21) Anmeldenummer: 02730069.8
(22) Anmeldetag: 27.03.2002
(51) Int. Cl.: F16H 3/66

(54) **MEHRSTUFENGETRIEBE**
MULTISTEP REDUCTION GEAR
DEMULTIPLICATEUR A PLUSIEURS ETAGES

(30) Priorität: 30.03.2001 DE 10115995
(43) Veröffentlichungstag der Anmeldung: 02.01.2004
(73) Patentinhaber: ZF Friedrichshafen AG, 88038 Friedrichshafen (DE)
(72) Erfinder: ZIEMER, Peter, 88069 Tettnang (DE)
(86) Internationale Anmeldenummer: PCT/EP2002/003433
(87) Internationale Veröffentlichungsnummer: WO 2002/079669

(56) Entgegenhaltungen:
- DE-A- 19 949 507
- JP-A- 50 072 066
- US-A- 3 956 946
- US-A- 3 971 268
- US-A- 4 046 031
- US-A- 4 683 776
- PATENT ABSTRACTS OF JAPAN vol. 001, no. 134 (M-045), 5. November 1977 (1977-11-05) & JP 52 074766 A (AISIN SEIKI CO LTD), 23. Juni 1977 (1977-06-23)

## Beschreibung

Die vorliegende Erfindung betrifft ein Mehrstufengetriebe nach dem Oberbegriff des Patentanspruchs 1.

In der älteren Deutschen Patentanmeldung P 199 49 507.4 der Anmelderin werden mehrere Getriebeschemata für ein automatisches Mehrstufengetriebe mit verschiedenen Kombinationen gekoppelter Planetenradsätze beschrieben. Durch geeignete Anbindung einer nichtschaltbaren Vorschaltradsatzkombination an eine schaltbare Nachschaltradsatzkombination können jeweils mindestens sieben Vorwärtsgänge ohne Gruppenschaltung geschaltet werden. Die Anzahl der schaltbaren Vorwärtsgänge ist dabei mindestens um zwei größer als die Anzahl der Schaltelemente.

Die DE-P 199 49 507.4 schlägt dabei vor, die schaltbare Nachschaltradsatzkombination als Zweisteg-Vierwellen-Getriebe mit zwei schaltbaren Nachschalt-Planetenradsätzen auszubilden. Unter Zweisteg-Vierwellen-Getriebe ist hierbei eine Anordnung von zwei einzelnen mechanisch gekoppelten Einsteg-Planetenradsätzen zu verstehen, bei denen die gekoppelte Einheit infolge einer zweifachen Bauteilbindung vier sogenannte "freie Wellen" aufweist, wobei eine "Welle" ein Sonnenrad, ein Hohlrad oder auch ein Steg eines Planetenradsatzes sein kann.

Aus der gattungsgemaßen US 4,683,776 ist ein Mehrstufengetriebe bekannt, bei dem unter Verwendung von vier Planetenradsätzen, zwei Kupplungen und vier Bremsen neun Vorwärtsgänge gruppenschaltungsfrei schaltbar sind. Hierbei bilden zwei der Planetenradsätze einen als Zweisteg-Vierwellen-Getriebe ausgeführten schaltbaren Vorschaltsatz, der ständig mit der Antriebswelle des Mehrstufengetriebes verbunden ist und nur eine Ausgangswelle aufweist. Die erste und die zweite der vier Bremsen wirken ausschließlich auf diesen Vorschaltsatz. Die beiden anderen Planetenradsätze bilden einen als Zweisteg-Vierwellen-Getriebe ausgeführten schaltbaren Nachschaltsatz, dessen erste freie Welle ständig mit der Ausgangswelle des Vorschaltsatzes verbunden und über die dritte der vier Bremsen festsetzbar ist, dessen zweite freie Welle über eine der beiden Kupplungen mit der Antriebswelle verbindbar ist, dessen dritte freie Welle über die andere der beiden Kupplungen mit der Antriebswelle verbindbar und über die vierte der vier Bremsen festsetzbar ist, und dessen vierte freie Welle ständig mit der Abtriebswelle des Mehrstufengetriebes verbunden ist. Die beiden Kupplungen und die vierte Bremse wirken also ausschließlich auf diesen Nachschaltsatz. Da die Ausgangswelle des Vorschaltsatzes und die erste freie Welle des Nachschaltsatzes ständig miteinander verwunden sind, wirkt die dritte Bremse des Getriebes sowohl auf den Vorschaltsatz als auch auf den Nachschaltsatz.

Die Aufgabe der vorliegenden Erfindung besteht nun darin, ausgehend vom genannten Stand der Technik ein Mehrstufengetriebe mit wenigstens sieben ohne Gruppenschaltung schaltbaren Vorwärtsgängen hinsichtlich vergleichsweise geringerem Bauaufwand weiterzuentwickeln, bei unverändert günstiger Gangstufung und großer Spreizung.

Diese Aufgabe wird durch ein die Merkmale des Hauptanspruchs 1 aufweisendes Mehrstufengetriebe gelöst.

Ausgehend vom Stand der Technik der DE-P 199 49 507.4, weist das Mehrstufengetriebe einen mit der Antriebswelle des Getriebes verbundenen Vorschaltsatz und einen mit der Abtriebswelle des Getriebes verbundenen Nachschaltsatz auf.

Erfindungsgemäß sind sowohl der Vorschaltsatz als auch der Nachschaltsatz jeweils als gekoppelte, schaltbare Planetenradsätze ausgebildet und über eine einzige Verbindungswelle miteinander verbunden. Dabei wird der Vorschaltsatz aus zwei gekoppelten, schaltbaren Vorschaltplanetenradsätzen und maximal zwei weiteren nicht schaltbaren Vorschalt-Planetenradsätzen gebildet.

Der schaltbare Nachschaltsatz ist immer über mindestens ein Schaltelement mit der Antriebswelle des Getriebes verbindbar und immer fest mit der Verbindungswelle - also dem Ausgang des schaltbaren Vorschaltsatzes - verbunden.

Erfindungsgemäß wird durch selektives Schalten der auf den schaltbaren Vorschaltsatz wirkenden Schaltelemente am Ausgang des Vorschaltsatzes eine bestimmte Drehzahl erzeugt, mit der die Verbindungswelle rotiert. Die Verbindungswelle ist nicht mit einem Schaltelement verbunden.

In jedem geschalteten Gang sind mindestens zwei Schaltelemente des Mehrstufengetriebes geschaltet, wobei durch selektives Schalten der Schaltelemente eine Eingangsdrehzahl der Antriebswelle zur Schaltung von mindestens neun Vorwärtsgängen auf die Abtriebswelle übertragbar ist. Beim Umschalten von einem Gang in den nächsten wird dabei lediglich ein Schaltelement abgeschaltet und ein weiteres Schaltelement zugeschaltet, wodurch schaltqualitätskritische Gruppenschaltungen, bei denen mehrere Schaltelemente gleichzeitig zu- bzw. abgeschaltet werden müssen, vermieden werden.

Aus den Unteransprüchen gehen bevorzugte Ausgestaltungen der Erfindung hervor, bei denen mit einer möglichst kleinen Anzahl von Schaltelementen und Planetenradsätzen möglichst viele Gänge schaltbar und die Mehrstufengetriebe entsprechend kostengünstig herstellbar sind.

Im Folgenden wird die Erfindung anhand der in den Figuren dargestellten Ausführungsformen eines Mehrstufengetriebes beispielhaft erläutert. Es zeigen:
- Figuren 1A und 1B eine erste Ausführungsform eines erfindungsgemäßen Mehrstufengetriebes mit neun Vorwärtsgängen und einem Rückwärtsgang;
- Figuren 2A und 2B eine zweite Ausführungsform eines erfindungsgemäßen Mehrstufengetriebes mit neun Vorwärtsgängen und einem Rückwärtsgang;
- Figuren 3A und 3B eine dritte Ausführungsform eines erfindungsgemäßen Mehrstufengetriebes mit neun Vorwärtsgängen und einem Rückwärtsgang;
- Figuren 4A und 4B eine vierte Ausführungsform eines erfindungsgemäßen Mehrstufengetriebes mit elf Vorwärtsgängen und einem Rückwärtsgang;
- Figuren 5A und 5B eine fünfte Ausführungsform eines erfindungsgemäßen Mehrstufengetriebes mit elf Vorwärtsgängen und einem Rückwärtsgang;
- Figuren 6A und 6B eine sechste Ausführungsform eines erfindungsgemäßen Mehrstufengetriebes mit fünfzehn Vorwärtsgängen und einem Rückwärtsgang;
- Figuren 7A und 7B eine siebte Ausführungsform eines erfindungsgemäßen Mehrstufengetriebes mit neun Vorwärtsgängen und einem Rückwärtsgang;
- Figuren 8A und 8B eine achte Ausführungsform eines erfindungsgemäßen Mehrstufengetriebes mit elf Vorwärtsgängen und drei Rückwärtsgängen;
- Figuren 9A und 9B eine neunte Ausführungsform eines erfindungsgemäßen Mehrstufengetriebes mit elf Vorwärtsgängen und drei Rückwärtsgängen;
- Figuren 10A und 10B eine zehnte Ausführungsform eines erfindungsgemäßen Mehrstufengetriebes mit siebzehn Vorwärtsgängen, ohne Rückwärtsgang;
- Figuren 11A und 11B eine elfte Ausführungsform eines erfindungsgemäßen Mehrstufengetriebes mit siebzehn Vorwärtsgängen, ohne Rückwärtsgang;
- Figuren 12A und 12B eine zwölfte Ausführungsform eines erfindungsgemäßen Mehrstufengetriebes mit vierundzwanzig Vorwärtsgängen, ohne Rückwärtsgang;
- Figuren 13A und 13B eine dreizehnte Ausführungsform eines erfindungsgemäßen Mehrstufengetriebes mit sechsundzwanzig Vorwärtsgängen, ohne Rückwärtsgang;
- Figuren 14A und 14B eine erste Ausführungsform eines erfindungsgemäßen zweiten Nachschaltsatzes;
- Figuren 14C und 14D eine zweite Ausführungsform eines erfindungsgemäßen zweiten Nachschaltsatzes;
- Figuren 14E und 14F eine vierzehnte Ausführungsform eines erfindungsgemäßen Mehrstufengetriebes mit fünfunddreißig Vorwärtsgängen, ohne Rückwärtsgang.

In den Figuren sind entsprechend der jeweiligen Ausführungsform des Mehrstufengetriebes das Getriebeschema (Figuren-Index A bzw. C bzw. E) sowie die Schaltlogik mit zugehörigen beispielhaften Übersetzungen der einzelnen Gänge, Gangstufung, Getriebes_{]} 5A ung und Standübersetzungen der einzelnen Planetenradsätze (Figuren-Index B bzw. D bzw. F) dargestellt.

Um gegenüber der DE-P P 199 49 507.4 vergleichsweise kostengünstig herstellbare Mehrstufengetriebe mit mindestens sieben Vorwärtsgängen zu schaffen, wird die Vorschaltradsatzkombination an der Antriebswelle der Getriebes schaltbar ausgeführt. Durch diese Anordnung wird in Abhängigkeit der betätigten Schaltelemente eine weitere Drehzahl erzeugt, die zusätzlich zu der über die Antriebswelle eingeleitete Eingangsdrehzahl auf die ebenfalls schaltbar ausgeführte Nachschaltsatzkombination an der Abtriebswelle des Getriebes wirkt. Der Vorschaltsatz kann entsprechend der Betätigungslogik der Schaltelemente wahlweise auch verblockt oder festgesetzt werden.

Im eingangs beschriebenen bekannten Mehrstufengetriebe werden durch einen mit der Antriebswelle verbundenen Vorschaltsatz zwei zusätzliche Drehzahlen erzeugt, die zusammen mit der Antriebsdrehzahl auf den Nachschaltsatz wirken. Im Gegensatz zur vorliegenden Erfindung werden diese beiden Drehzahlen durch die Anordnung von zwei nicht schaltbaren Vorschalt-Planetenradsätzen erzeugt.

Durch Betätigen der Schaltelemente werden bei der vorliegenden Erfindung also die Ausgangsdrehzahl der Vorschaltradsatzkombination und die Eingangsdrehzahl des Getriebes entsprechend dem geschalteten Kraftfluß auf die Abtriebswelle übertragen. Durch die besondere Anordnung der Schaltelemente und Planetenradsätze lassen sich verschiedene, im folgenden detailliert beschriebene Mehrstufengetriebe mit mindestens sieben Vorwärtsgängen konzipieren, insbesondere für Personenkraftwagen, Busse und Lastkraftwagen. Für den Einsatz in Motorrädern und Fahrrädern können Vielganggetriebe ohne Rückwärtsgang dargestellt werden.

In allen Figuren ist mit 1 eine Antriebswelle des Getriebes und mit 3 eine Abtriebswelle des Mehrstufengetriebes bezeichnet. Das Mehrstufengetriebe weist stets einen schaltbaren Vorschaltsatz VS und einen mit diesem über eine Verbindungswelle 2 verbundenen schaltbaren Nachschaltsatz NS auf. Die Antriebswelle 1 rotiert mit einer Eingangsdrehzahl n. Wenn zwei Schaltelemente des Vorschaltsatzes VS gemäß der Schaltlogik des Getriebes geschaltet, d.h. geschlossen sind, rotiert die Verbindungswelle 2 mit einer Ausgangsdrehzahl nvs des Vorschaltsatzes VS. Die Abtriebswelle 3 rotiert mit einer Ausgangsdrehzahl nns des Nachschaltsatzes NS. VS1, VS2, Vsa und VSb bezeichnen einen je nach Ausführungsform vorhandenen ersten, zweiten, dritten und vierten Vorschalt-Planetenradsatz. NS1, NS2, NS3 und NS4 bezeichnen einen je nach Ausführungsform vorhandenen ersten, zweiten, dritten und vierten Nachschalt-Planetenradsatz. Je nach Ausführungsform sind bis zu fünf auf den Vorschaltsatz VS wirkende Schaltelemente (Kupplungen oder Bremsen) A, B, C, D und E vorgesehen, sowie bis zu fünf auf den Nachschaltsatz NS wirkende Schaltelemente (Kupplungen oder Bremsen) M, H, L, M' und H'.

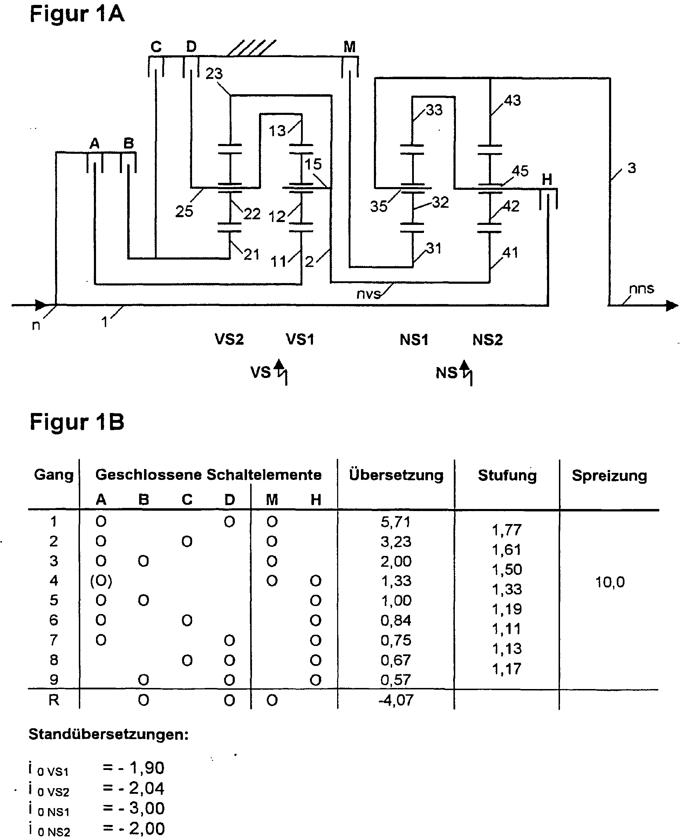

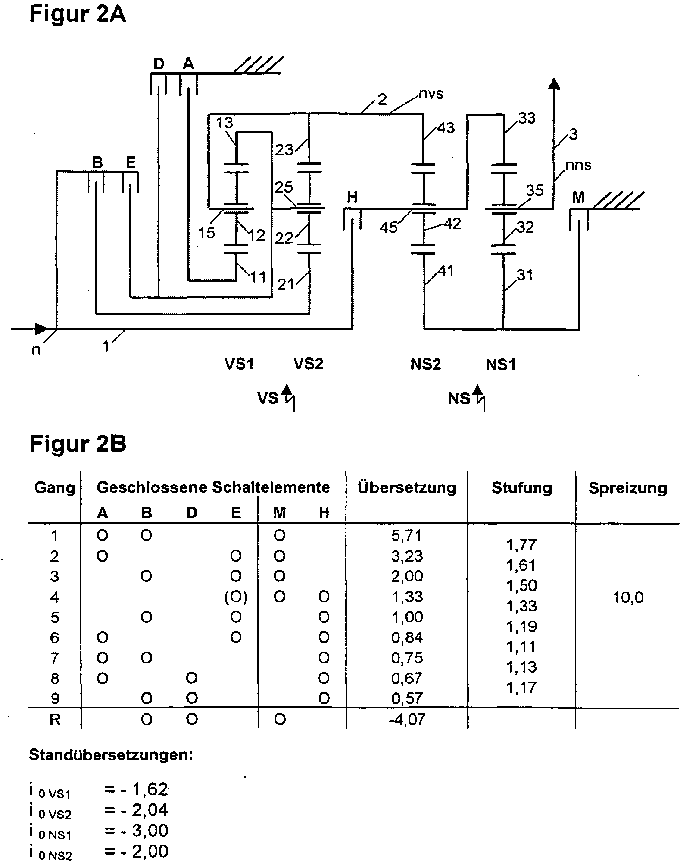

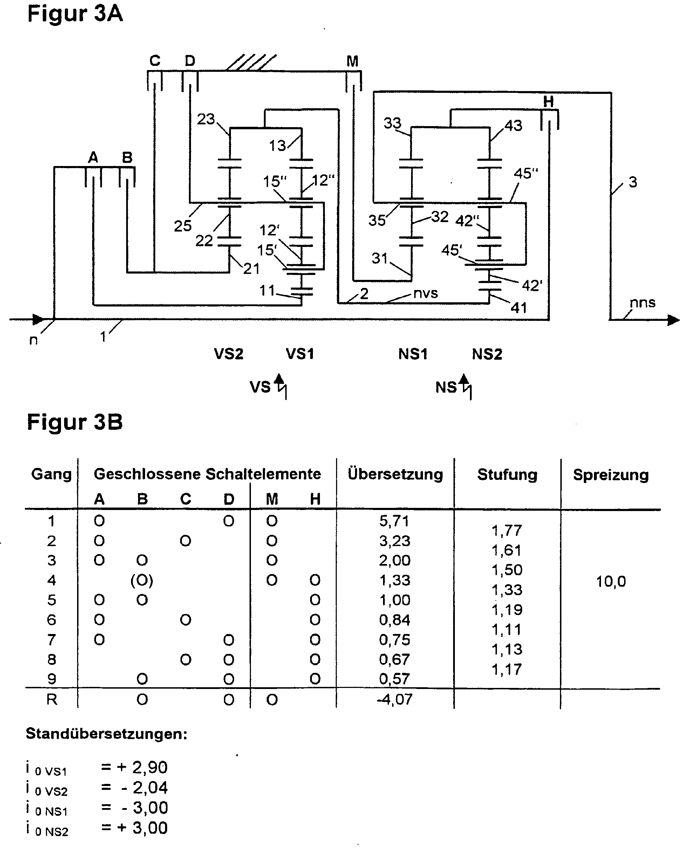

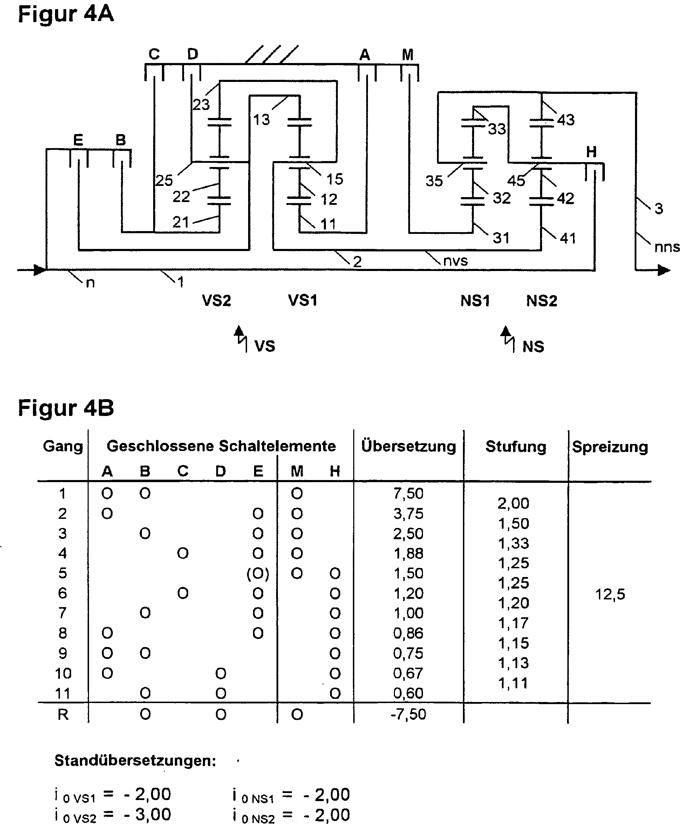

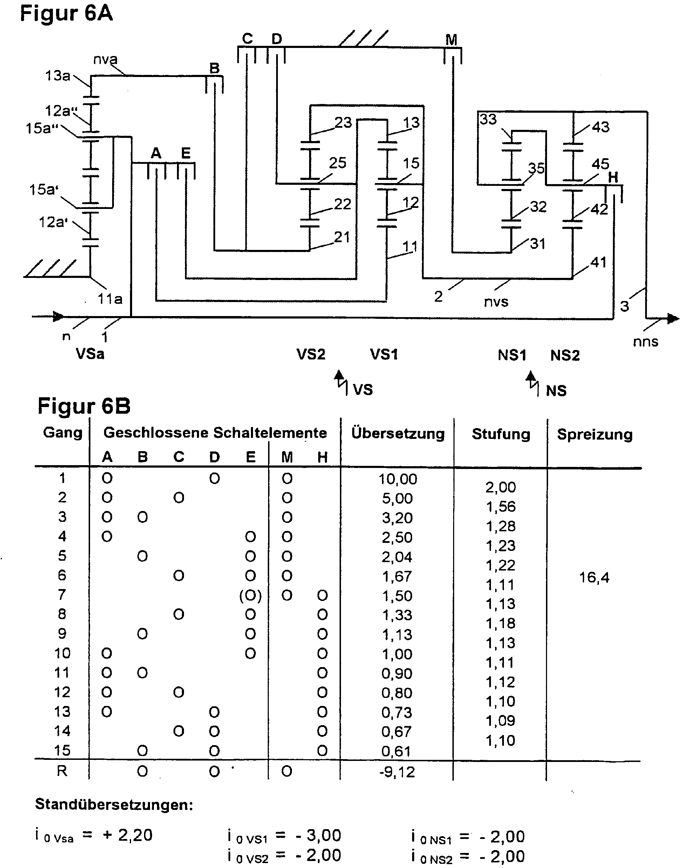

Im folgenden werden anhand der Figuren 1A und 1B bis 6A und 6B beispielhaft sechs erfindungsgemäße Mehrstufengetriebevarianten erläutert, die durch vier Schaltelemente A, B, C, D (Figuren 1A, 1B und 3A, 3B) bzw. vier Schaltelemente A, B, D, E (Figuren 2A, 2B) bzw. fünf Schaltelemente A, B, C, D, E (Figuren 4A, 4B bis 6A, 6B) im Vorschaltsatz VS und zwei Schaltelemente M, H im Nachschaltsatz NS schaltbar sind.

Der Vorschaltsatz VS ist dabei als ein schaltbares Zweisteg-Vierwellen-Getriebe mit zwei gekoppelten Vorschalt-Planetenradsätzen VS1 und VS2 ausgebildet, wobei mindestens eine freie Welle dieses Zweisteg-Vierwellen-Getriebes über eines der Schaltelemente A, B, C, D oder E mit der Antriebswelle 1 verbindbar ist und mindestens eine freie Welle dieses Zweisteg-Vierwellen-Getriebes über ein weiteres der Schaltelemente A bis E festgesetzt werden kann. Die - je nach betätigten Schaltelementen - am Ausgang des Vorschaltsatzes VS erzeugte Drehzahl nvs wird über die Verbindungswelle 2 starr auf den Nachschaltsatz NS übertragen. Die Drehzahl nvs kann auch null sein, d.h. der Vorschaltsatz gegen das Getriebegehäuse verblockt sein. Ebenso kann die Drehzahl nvs auch gleich der Eingangsdrehzahl n der Antriebswelle 1 sein, d.h. der Vorschaltsatz VS kann auch als Block umlaufen.

Nicht gekoppelt sind im Vorschaltsatz VS jeweils ein mit dem ersten Schaltelement A verbundenes Zentralrad des ersten Vorschalt-Planetenradsatzes VS1, ein mit dem zweiten und dritten Schaltelement B und C verbundenes Zentralrad des zweiten Vorschalt-Planetenradsatzes VS2, sowie ein mit dem vierten Schaltelement D und/oder fünften Schaltelement E verbundener Steg des zweiten Vorschalt-Planetenradsatzes VS2 und die Verbindungswelle 2 zwischen Vorschalt- und Nachschaltsatz. Hierbei ist ein Zentralrad definiert als Sonnenrad oder Hohlrad.

Bei dem schaltbaren Nachschaltsatz NS handelt es sich ebenfalls um ein schaltbares Zweisteg-Vierwellen-Getriebe, das die gekoppelten Nachschalt-Planetenradsätze NS1 und NS2 und die Schaltelemente M und H umfaßt. Hierbei ist der Nachschaltsatz NS über sein erstes Schaltelement M mit dem Getriebegehäuse und über sein zweites Schaltelement H mit der Antriebswelle 1 verbindbar.

Nicht gekoppelt sind im Nachschaltsatz NS jeweils ein mit dem als Bremse ausgebildeten Schaltelement M verbundenes Zentralrad des ersten Nachschalt-Planetenradsatzes NS1 und ein mit der Verbindungswelle 2 verbundenes Zentralrad des zweiten Nachschalt-Planetenradsatzes NS2, sowie eine mit dem Schaltelement H verbundene Welle des zweiten Nachschalt-Planetenradsatzes NS2 und die Abtriebswelle 3. Unter Zentralrad ist hier wieder entweder ein Sonnenrad oder ein Hohlrad des entsprechenden Planetenradsatzes zu verstehen.

Bei den ersten sechs erfindungsgemäßen Ausführungsformen des Mehrstufengetriebes gemäß der Figuren 1 bis 6 werden die Gängen stets über Vor- und Nachschaltsatz gebildet, es sind jeweils zwei Schaltelemente im Vorschaltsatz VS und ein Schaltelement im Nachschaltsatz NS geschlossen.

Für die Drehzahlen an den Wellen und Schaltelementen gilt bei der ersten erfindunggemäßen Lösung der Aufgabe und speziell bei der ersten bis sechsten Ausführungsform des erfindungsgemäßen Mehrstufengetriebes gemäß Figuren 1 bis 6 folgendes:
1. Die Drehzahl an der Antriebswelle 1 und an den Schaltelementen E und H ist gleich (Eingangsdrehzahl n);
2. die Drehzahl am geschalteten Schaltelement A liegt im Bereich zwischen größer/gleich null bis kleiner/gleich der Eingangsdrehzahl n der Antriebswelle 1;
3. die Drehzahl am geschalteten Schaltelement D ist größer/gleich null und kleiner als die Eingangsdrehzahl n der Antriebswelle 1;
4. die Drehzahl an dem mit der Verbindungswelle 2 verbundenen Zentralrad des zweiten Nachschalt-Planetenradsatzes NS2 ist bei geschalteten Schaltelementen H und M gleich/größer als eine der durch den Vorschaltsatz VS erzeugten Drehzahlen nvs;
5. die Drehzahl an der Welle, welche die Schaltelemente B und/oder C mit einem Zentralrad des zweiten Vorschalt-Planetenradsatzes VS2 verbindet, ist bei geschalteten Schaltelementen A und D kleiner/gleich als die bei betätigtem Schaltelement B bzw. C erzeugte Drehzahl;
6. die Drehzahl an der Welle, welche die Schaltelemente B und/oder C mit dem Zentralrad des zweiten Vorschalt-Planetenradsatzes VS2 verbindet, ist bei geschalteten Schaltelementen A und E größer/gleich als die bei betätigtem Schaltelement B bzw. C erzeugte Drehzahl; und
7. die Drehzahl am geschalteten Schaltelement M ist gleich null.

Die mechanischen Koppelungen der Vorschalt-Planetenradsatz-Komponenten miteinander sind bei der ersten, vierten und sechsten Ausführungsformen eines erfindungsgemäßen Mehrstufengetriebes jeweils identisch, ebenso die mechanischen Koppelungen der Nachschalt-Planetenradsatz-Komponenten. Die zweite und dritte Ausführungsform eines erfindungsgemäßen Mehrstufengetriebes sind aus der ersten Ausführungsform abgeleitet, jeweils mit anderer Koppelung innerhalb des Vorschaltsatzes VS und des Nachschaltsatzes NS. Die fünfte Ausbildungsform eines erfindungsgemäßen Mehrstufengetriebes ist aus der vierten Ausbildungsform abgeleitet, ebenfalls mit einer anderen Koppelung innerhalb des Nachschaltsatzes NS. Selbstverständlich sind in anderen Weiterbildungen auch noch andere mechanische Koppelungen der Planetenradsatzkomponenten möglich.

Die Figuren 1A und 1B zeigen nun beispielhaft eine erste Ausführungsform eines erfindungsgemäßen Mehrstufengetriebes, mit neun Vorwärtsgängen und einem Rückwärtsgang. Wie in Figur 1A dargestellt, weist diese erste Ausführungsform des erfindungsgemäßen Mehrstufengetriebes zwei zu einem Zweisteg-Vierwellen-Getriebe gekoppelte, schaltbare Vorschalt-Planetenradsätze VS1 und VS2 und zwei ebenfalls zu einem Zweisteg-Vierwellen-Getriebe gekoppelte, schaltbare Nachschalt-Planetenradsätze NS1 und NS2 auf. Der erste schaltbare Vorschalt-Planetenradsatz VS1 umfaßt ein Sonnenrad 11, einen Steg 15 mit Planetenrädern 12 und ein Hohlrad 13. Analog zu dieser Nomenklatur sind mit 21, 31 und 41 jeweils Sonnenräder, mit 25, 35 und 45 jeweils Stege mit Planetenrädern 22, 32 und 42, sowie mit 23, 33 und 43 jeweils Hohlräder des zweiten Vorschalt-Planetenradsatzes VS2, ersten Nachschalt-Planetenradsatzes NS1 und zweiten Nachschalt-Planetenradsatzes NS2 bezeichnet.

Die Antriebswelle 1 (Drehzahl n) ist über eine erste Kupplung A des Vorschaltsatzes VS mit dem Sonnenrad 11 und über eine zweite Kupplung B des Vorschaltsatzes VS mit dem Sonnenrad 21 und über eine zweite Kupplung H des Nachschaltsatzes NS mit dem Steg 45 der Planetenräder 42 verbindbar. Das Sonnenrad 21 ist über ein als Bremse ausgebildetes drittes Schaltelement C des Vorschaltsatzes VS festsetzbar. Der Steg 25 mit den Planetenrädern 22 ist mit dem Hohlrad 13 verbunden und über ein als Bremse ausgebildetes viertes Schaltelement D des Vorschaltsatzes VS festsetzbar. Weiterhin ist das Hohlrad 23 mit dem Steg 15 der Planetenräder 12 und über die Verbindungswelle 2 (Drehzahl nvs) mit dem Sonnenrad 41 verbunden. Das Sonnenrad 31 ist über ein als Bremse ausgebildetes erstes Schaltelement M des Nachschaltsatzes NS festsetzbar. Der Steg 45 mit den Planetenrädern 42 ist mit dem Hohlrad 33 verbunden, und der Steg 35 mit den Planetenrädern 32 ist mit dem Hohlrad 43 und mit der Abtriebswelle 3 (Drehzahl nns) verbunden.

Durch selektives Schalten der insgesamt sechs Schaltelemente A, B, C, D, M und H können gemäß der in Figur 1B dargestellten Schaltlogik insgesamt neun Vorwärtsgänge und ein Rückwärtsgang R geschaltet werden.

Gegenüber vergleichbarer Getriebekonstruktionen gemäß dem genannten Stand der Technik weist das erfindungsgemäße Mehrstufengetriebe in vorteilhafter Weise insgesamt drei Bremsen auf. Insbesondere hinsichtlich der Druckölzuführung zur Betätigung der Schaltelemente ergibt sich somit eine deutlich einfachere konstruktive Gestaltung.

Die Figuren 2A und 2B zeigen beispielhaft eine zweite Ausführungsform eines erfindungsgemäßen Mehrstufengetriebes, mit neun Vorwärtsgängen und einem Rückwärtsgang. Im Vorschaltsatz VS sind zwei schaltbare, gekoppelte Vorschalt-Planetenradsätze VS1 und VS2 sowie vier Schaltelemente A, B, D und E vorgesehen, im Nachschaltsatz NS zwei schaltbare, gekoppelte Nachschalt-Plantetenradsätze NS1 und NS2 sowie zwei Schaltelemente M und H.

Der erste schaltbare Vorschalt-Planetenradsatz VS1 umfaßt dabei ein Sonnenrad 11, einen Steg 15 mit Planetenrädern 12 und ein Hohlrad 13. Analog zu dieser Nomenklatur sind mit 21, 31 und 41 jeweils Sonnenräder, mit 25, 35 und 45 jeweils Stege mit Planetenrädern 22, 32 und 42, sowie mit 23, 33 und 43 jeweils Hohlräder des zweiten Vorschalt-Planetenradsatzes VS2, ersten Nachschalt-Planetenradsatzes NS1 und zweiten Nachschalt-Planetenradsatzes NS2 bezeichnet.

Gegenüber der zuvor beschriebenen ersten Ausführungsform ist die dort vorgesehene Bremse C, welche im geschalteten Zustand an der mit ihr verbundenen freien Welle des Zweisteg-Vierwellen-Getriebes stets eine Drehzahl null erzeugt, entfallen. Die Bremse D bildet also nunmehr das dritte Schaltelement des Vorschaltsatzes VS. Als viertes Schaltelement ist nunmehr eine Kupplung E vorgesehen, die im geschalteten Zustand an der mit ihr verbundenen freien Welle des Zweisteg-Vierwellen-Getriebes stets eine Drehzahl gleich der Eingangsdrehzahl n des Antriebswelle 1 erzeugt.

Wie in Figur 2A gezeigt, ist die Antriebswelle 1 (Drehzahl n) über ein als Kupplung ausgebildetes zweites Schaltelement B des Vorschaltsatzes VS mit dem Sonnenrad 21 und über eine zweite Kupplung H des Nachschaltsatzes NS mit dem Steg 45 der Planetenräder 42 verbindbar. Das Sonnenrad 11 ist über ein als Bremse ausgebildetes erstes Schaltelement A des Vorschaltsatzes VS festsetzbar. Der Steg 25 mit den Planetenrädern 22 ist mit dem Hohlrad 13 verbunden, über das als Bremse ausgebildete dritte Schaltelement D festsetzbar, sowie über das als Kupplung ausgebildete vierte Schaltelement E des Vorschaltsatzes VS mit der Antriebswelle 1 verbindbar. Das Hohlrad 23 ist mit dem Steg 15 der Planetenräder 12 und über die Verbindungswelle 2 (Drehzahl nvs) mit dem Hohlrad 43 verbunden. Die Sonnenräder 31 und 41 sind miteinander verbunden und über ein als Bremse ausgebildetes erstes Schaltelement M des Nachschaltsatzes NS festsetzbar. Der Steg 45 mit den Planetenrädern 42 ist mit dem Hohlrad 33 verbunden, und der Steg 35 der Planetenrädern 32 ist mit der Abtriebswelle 3 (Drehzahl nns) verbunden.

Durch selektives Schalten der insgesamt sechs Schaltelemente A, B, D, E, M und H können gemäß der in Figur 2B dargestellten Schaltlogik insgesamt neun Vorwärtsgänge und ein Rückwärtsgang R geschaltet werden. Insbesondere wegen der Anbindung der Verbindungswelle 2 an das Hohlrad 43 des zweiten Nachschalt-Planetenradsatzes NS2, wegen der durch die Bremse M festsetzbaren gekoppelten Sonnenräder 31, 41 der Nachschalt-Planetenradsätze NS1, NS2 und wegen des Abtriebs über den Steg 35 des ersten Nachschalt-Planetenradsatzes NS1 eignet sich die beschriebene zweite Ausführungsform eines erfindungsgemäßen Mehrstufengetriebes besonders für eine Anwendung mit quer zur Antriebsachse liegendem Abtrieb, beispielsweise für eine Kraftfahrzeug mit Frontantrieb und querliegendem Antriebsmotor. Ein weiterer Vorteil dieser zweiten Auführungsform ist, daß bei geschaltetem ersten Gang im Nachschaltsatz NS keine Blindleistung entsteht.

Die Figuren 3A und 3B zeigen beispielhaft eine dritte Ausführungsform eines erfindungsgemäßen Mehrstufengetriebes, ebenfalls mit neun Vorwärtsgängen und einem Rückwärtsgang, abgeleitet aus der zuvor beschriebenen ersten Ausführungsform. Im Vorschaltsatz VS sind wiederum zwei schaltbare, gekoppelte Vorschalt-Planetenradsätze VS1 und VS2 sowie vier Schaltelemente A, B, C und D vorgesehen, im Nachschaltsatz NS zwei schaltbare, gekoppelte Nachschalt-Planetenradsätze NS1 und NS2 sowie zwei Schaltelemente M und H.

Der erste schaltbare Vorschalt-Planetenradsatz VS1 ist nunmehr als Plus-Getriebe mit Doppelplaneten ausgebildet und umfaßt ein Sonnenrad 11, ein Hohlrad 13, einen Steg 15' mit inneren Planetenrädern 12', sowie einen Steg 15" mit äußeren Planetenrädern 12", wobei beide Stege 15' und 15" miteinander verbunden sind. Der zweite schaltbare Vorschalt-Planetenradsatz VS2 weist ein Sonnenrad 21, ein Hohlrad 23 und einen Steg 25 mit Planetenrädern 22 auf. Der erste Nachschalt-Planetensatz NS1 weist ein Sonnenrad 31, ein Hohlrad 33 und einen Steg 35 mit Planetenrädern 32 auf. Der zweite Nachschalt-Planetenradsatz NS2 ist als Plus-Getriebe mit Doppelplaneten ausgebildet und umfaßt ein Sonnenrad 41, ein Hohlrad 43, einen Steg 45' mit inneren Planetenrädern 42', sowie einen Steg 45" mit äußeren Planetenrädern 42", wobei beide Stege 45' und 45" miteinander verbunden sind.

Wie in Figur 3A gezeigt, ist die Antriebswelle 1 (Drehzahl n) über eine erste Kupplung A des Vorschaltsatzes VS mit dem Sonnenrad 11 und über eine zweite Kupplung B des Vorschaltsatzes VS mit dem Sonnenrad 21 verbindbar. Weiterhin ist die Antriebswelle 1 über eine zweite Kupplung H des Nachschaltsatzes NS mit den gekoppelten Hohlrädern 33 und 43 verbindbar. Das Sonnenrad 21 ist über ein als Bremse ausgebildetes drittes Schaltelement C des Vorschaltsatzes VS festsetzbar. Der Steg 25 ist mit den gekoppelten Stegen 15" und 15' verbunden und über ein als Bremse ausgebildetes viertes Schaltelement D des Vorschaltsatzes VS festsetzbar. Weiterhin sind die Hohlräder 13 und 23 gekoppelt und über die Verbindungswelle 2 (Drehzahl nvs) mit dem Sonnenrad 41 verbunden. Das Sonnenrad 31 ist über ein als Bremse ausgebildetes erstes Schaltelement M des Nachschaltsatzes NS festsetzbar. Die gekoppelten Stege 45" und 45' sind mit dem Steg 35 verbunden. Der Steg 35 wiederum ist mit der Abtriebswelle 3 (Drehzahl nns) verbunden.

Durch selektives Schalten der insgesamt sechs Schaltelemente A, B, C, D, M und H können gemäß der in Figur 3B dargestellten Schaltlogik insgesamt neun Vorwärtsgänge und ein Rückwärtsgang R geschaltet werden.

Im folgenden wird nun anhand der Figuren 4A und 4B beispielhaft eine vierte Ausführungsform der vorliegenden Erfindung beschrieben. Bereits im Zusammenhang mit der Figur 1A erläuterte Einzelheiten sind in Figur 4A identisch bezeichnet. Im Vergleich zur ersten bis dritten Ausführungsform weist die vierte erfindungsgemäße Ausführungsform im Vorschaltsatzes VS zusätzlich zu den vier Schaltelementen A bis D ein fünftes Schaltelement E auf, bei unverändert zwei Schaltelementen M und H im Nachschaltsatz NS. Die Koppelung der zwei Vorschalt-Planetenradsätze VS1 und VS2 ist identisch zur ersten Ausführungsform, ebenso die Koppelung der zwei Nachschalt-Planetenradsätze NS1 und NS2.

Wie in Figur 4A beschrieben, ist der Steg 25 der Planetenräder 22 mit dem Hohlrad 13 verbunden und über eine fünfte Kupplung E des Vorschaltsatzes VS mit der Antriebswelle 1 (Drehzahl n) verbindbar und über die Bremse D festsetzbar. Das Sonnenrad 21 ist über die Kupplung B mit der Antriebswelle 1 verbindbar und über die Bremse C festsetzbar. Das Sonnenrad 11 ist über das nunmehr als Bremse ausgebildete erste Schaltelement des Vorschaltsatzes A festsetzbar. Der Steg 15 mit den Planetenrädern 12 ist mit dem Hohlrad 23 und über die Verbindungswelle 2 (Drehzahl nvs) mit dem Sonnenrad 41 verbunden. Der Steg 45 mit den Planetenrädern 42 ist mit dem Hohlrad 33 gekoppelt und über die Kupplung H mit der Antriebswelle 1 verbindbar. Das Sonnenrad 31 ist über die Bremse M festsetzbar. Der Steg 35 mit den Planetenrädern 32 ist mit dem Hohlrad 43 und mit der Abtriebswelle 3 (Drehzahl nns) verbunden.

Durch selektives Schalten der sieben Schaltelemente A bis E, M und H können entsprechend der in Figur 4B dargestellten Schaltlogik insgesamt elf Vorwärtsgänge und ein Rückwärtsgang R geschaltet werden. In vorteilhafter Weise können mit dieser vierten Ausführungsform des erfindungsgemäßen Mehrstufengetriebes mit vier Radsätzen im Vergleich zum Stand der Technik mehr Gänge erzeugt werden, bei gleichzeitig konstruktiv einfacher Druckzuführung der Schaltelemente (vier Bremsen).

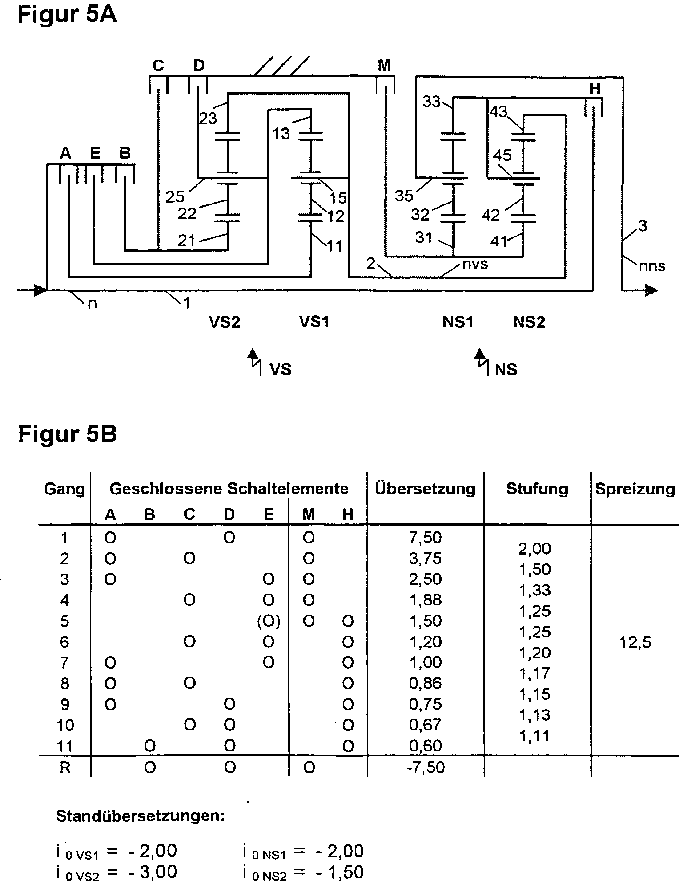

Anhand der Figuren 5A und 5B wird nun eine fünfte beispielhafte Ausführungsform eines erfindungsgemäßen Mehrstufengetriebes erläutert, die aus der vierten Ausführungsform abgeleitet ist. Der als Zweisteg-Vierwellen-Getriebe ausgebildete Vorschaltsatz VS umfaßt wiederum fünf Schaltelemente A, B, C, D und E, einen schaltbaren ersten Vorschalt-Planetenradsatz VS1 mit einem Sonnenrad 11, einem Hohlrad 13 und einem Steg 15 mit Planetenrädern 12, sowie einen schaltbaren zweiten Vorschalt-Planetenradsatz VS2 mit einem Sonnenrad 21, einem Hohlrad 23 und einem Steg 25 mit Planetenrädern 22. Der ebenfalls als Zweisteg-Vierwellen-Getriebe ausgebildete Nachschaltsatz NS umfaßt zwei Schaltelemente M und H, einen schaltbaren ersten Nachschalt-Planetenradsatz NS1 mit einem Sonnenrad 31, einem Hohlrad 33 und einem Steg 35 mit Planetenrädern 32, sowie einen schaltbaren zweiten Nachschalt-Planetenradsatz NS2 mit einem Sonnenrad 41, einem Hohlrad 43 und einem Steg 45 mit Planetenrädern 42.

Im Unterschied zur vierten Ausführungsform ist bei dieser fünften Ausführungsform eines erfindungsgemäßen Mehrstufengetriebes ist die Bauteilekopplung innerhalb des Nachschaltsatzes NS modifiziert. Unverändert gekoppelt sind das Hohlrad 33 des ersten Nachschalt-Planetenradsatzes NS1 und der Steg 45 des zweiten Nachschalt-Planetenradsatzes NS2. Im Unterschied zur vierten Ausführungsform sind nunmehr die Sonnenräder 31 und 41 der beiden Nachschalt-Planetenradsätze NS1 und NS2 gekoppelt, die mechanische Verbindung zum Vorschaltsatz VS erfolgt nunmehr über das Hohlrad 43 des zweiten Nachschalt-Planetenradsatzes NS2 und der Abtrieb des Nachschaltsatzes NS ausschließlich über den Steg 35 des ersten Nachschalt-Planetenradsatzes NS1.

Ein weitere Unterschied der fünften Ausführungsform eines erfindungsgemäßen Mehrstufengetriebes zur vierten Ausführungsform ergibt sich aus der Ausbildung des ersten Schaltelement A der Vorschaltsatzes VS als Kupplung. Das Sonnenrad 11 des ersten Vorschalt-Planetenradsatzes VS1 ist nunmehr mit der Antriebswelle 1 verbindbar und nicht mehr festsetzbar.

Wie in Figur 5A gezeigt, sind das Hohlrad 13 und der Steg 25 miteinander verbunden, über das vierte Schaltelement D des Vorschaltsatzes VS festsetzbar und über das fünfte Schaltelement E des Vorschaltsatzes VS mit der Antriebswelle 1 verbindbar. Das Hohlrad 23 und der Steg 15 sind miteinander und über die Verbindungswelle 2 mit dem Hohlrad 43 verbunden. Das Hohlrad 33 und der Steg 45 sind miteinander verbunden und über das zweite Schaltelement H des Nachschaltsatzes NS mit der Antriebswelle 1 verbindbar. Der Steg 35 ist mit der Abtriebswelle 3 verbunden. Das Sonnenrad 11 ist über das erste Schaltelement A des Vorschaltsatzes VS mit der Antriebswelle 1 verbindbar. Das Sonnenrad 21 ist über das zweite Schaltelement B des Vorschaltsatzes VS mit der Antriebswelle 1 verbindbar und über das dritte Schaltelement C des Vorschaltsatzes VS festsetzbar. Die Sonnenräder 31 und 41 sind miteinander verbunden und über das erste Schaltelement M des Nachschaltsatzes NS festsetzbar.

Wie aus der Schaltlogik gemäß Figur 5B ersichtlich, können durch selektives Schalten der sieben Schaltelemente A bis E, M und H insgesamt elf Vorwärtsgänge und ein Rückwärtsgang R geschaltet werden. Wie mit der vierten Ausführungsform, können auch mit dieser fünften Ausführungsform des erfindungsgemäßen Mehrstufengetriebes im Vergleich zum Stand der Technik in vorteilhafter Weise mit vier Radsätzen mehr Gänge erzeugt werden.

Figur 6A zeigt beispielhaft eine sechste Ausführungsform des erfindungsgemäßen Mehrstufengetriebes. Entsprechend der in Figur 6B dargestellten Schaltlogik sind insgesamt fünfzehn Vorwärtsgänge und ein Rückwärtsgang schaltbar. Die schaltbaren Vorschalt-Planetenradsätze VS1 und VS2 sowie die schaltbaren Nachschalt-Planetenradsätze NS1 und NS2 sind aufgebaut wie die entsprechenden Radsätze der ersten und vierten Ausführungsform des erfindungsgemäßen Mehrstufengetriebes und auch in gleicher Weise miteinander gekoppelt. Die sechste Ausführungsform weist jedoch gegenüber der vierten Ausführungsform einen zusätzlichen nicht schaltbaren Vorschalt-Planetenradsatz Vsa auf, bei unveränderter Anzahl der Schaltelemente (fünf im Vorschaltsatz VS und zwei im Nachschaltsatz NS, nunmehr vier Kupplungen und drei Bremsen).

Wie in Figur 6A dargestellt, weist der zusätzliche dritte - nicht schaltbare - Vorschalt-Planetenradsatz VSa ein Sonnenrad 11a, einen Steg 15a' mit inneren Planetenrädern 12a', einen Steg 15a" mit äußeren Planetenrädern 12a", sowie ein Hohlrad 13a auf. Das Sonnenrad 11a ist dabei festgesetzt (Drehzahl null). Der Steg 15a' der inneren Planetenräder 12a' und der Steg 15a" der äußeren Planetenräder 12a" sind gemeinsam mit der Antriebswelle 1 (Drehzahl n) verbunden. Das Hohlrad 13a rotiert mit einer Drehzahl nva.

Der Steg 25 mit den Planetenrädern 22 des zweiten schaltbaren Vorschalt-Planetenradsatzes VS2 ist mit dem Hohlrad 13 des ersten schaltbaren Vorschalt-Planetenrad-, satz VS1 verbunden und über die Kupplung E mit der Antriebswelle 1 verbindbar und über die Bremse D festsetzbar. Das Sonnenrad 21 des zweiten schaltbaren Vorschalt-Planetenradsatzes VS2 ist über die Kupplung B mit dem Hohlrad 13a des dritten Vorschalt-Planetenradsatzes VSa verbindbar und rotiert dann mit der Drehzahl nva. Wahlweise ist das Sonnenrad 21 auch über die Bremse C festsetzbar, wobei Kupplung B und Bremse C gemäß der in Figur 6B dargestellten Schaltlogik nie gleichzeitig betätigt werden. Das Sonnenrad 11 des ersten schaltbaren Vorschalt-Planetenradsatzes VS1 ist über das als Kupplung ausgebildete erste Schaltelement A des Vorschaltsatzes VS mit der Antriebswelle 1 verbindbar. Der Steg 15 mit den Planetenrädern 12 des ersten schaltbaren Vorschalt-Planetenradsatzes VS1 ist mit dem Hohlrad 23 des zweiten schaltbaren Vorschalt-Planetenradsatzes VS2 und über die Verbindungswelle 2 (Drehzahl nvs) mit dem Sonnenrad 41 des zweiten Nachschalt-Planetenradsatzes NS2 verbunden. Der Steg 45 mit den Planetenrädern 42 des zweiten Nachschalt-Planetenradsatzes NS2 ist mit dem Hohlrad 33 des ersten Nachschalt-Planetenradsatzes NS1 gekoppelt und über die zweite Kupplung H des Nachschaltsatzes NS mit der Antriebswelle 1 verbindbar. Das Sonnenrad 31 des ersten Nachschalt-Planetenradsatzes NS1 ist über die Bremse M des Nachschaltsatzes NS festsetzbar. Der Steg 35 mit den Planetenrädern 32 des ersten Nachschalt-Planetenradsatzes NS1 ist mit dem Hohlrad 43 des zweiten Nachschalt-Planetenrad-satzes NS2 und mit der Abtriebswelle 3 (Drehzahl nns) verbunden.

Der Vorteil im Vergleich zum genannten Stand der Technik besteht darin, daß mit diesem erfindungsgemäßen Mehrstufengetriebes mit fünf Radsätzen und sieben Schaltelementen mehr Gänge erzeugt werden können, bei vergleichsweise identischem konstruktiven Aufwand.

In einer Weiterbildung der sechsten erfindungsgemäßen Ausführungsform des Mehrstufengetriebes kann vorgesehen sein, den dritten Vorschalt-Planetenradsatz VSa schaltbar auszuführen. Hierbei wird das zweite Schaltelement B des Vorschaltsatzes VS nicht zwischen dem Hohlrad 13a des dritten Vorschalt-Planetenradsatzes VSa und dem Sonnenrad 21 des zweiten Vorschalt-Planetenradsatzes VS2 angeordnet, sondern entweder zwischen der Antriebswelle 1 und den gekoppelten Stegen 15a', 15a" des dritten Vorschalt-Planetenradsatzes VSa oder als Bremse an dem Sonnenrad 11a des dritten Vorschalt-Planetenradsatzes VSa. Hohlrad 13a und Sonnenrad 21 sind dann selbstverständlich miteinander verbunden.

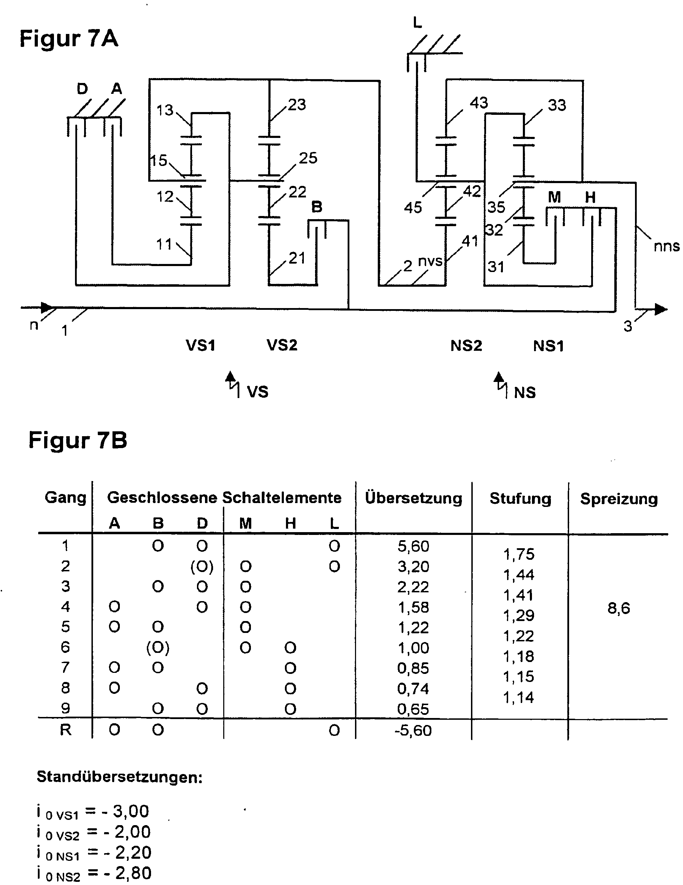

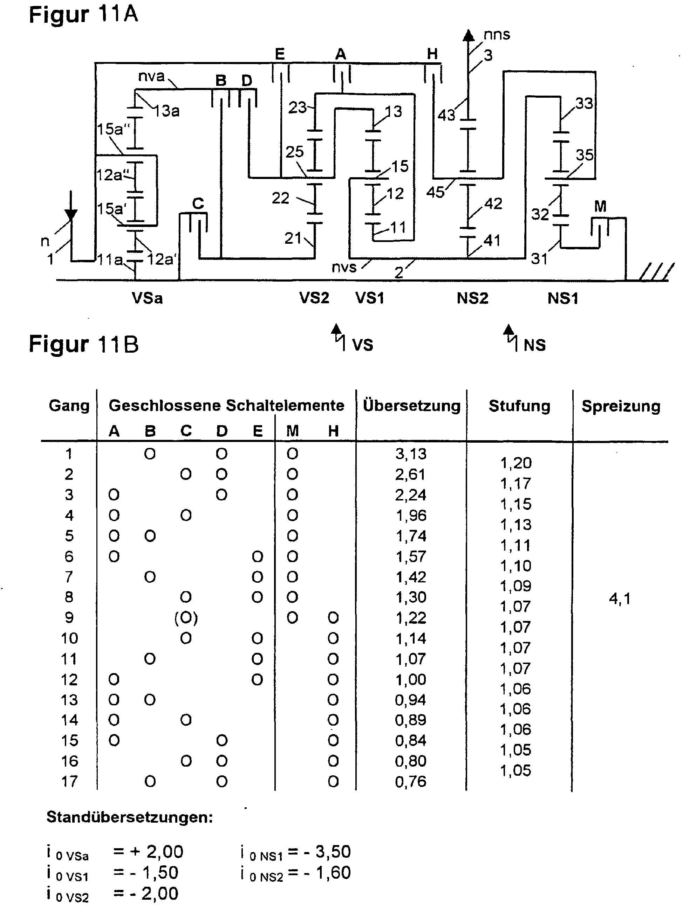

Anhand der Figuren 7A, 7B bis 11A, 11B werden nun weitere beispielhafte Ausführungsformen eines erfindungsgemäßen Mehrstufengetriebes beschrieben. Im Unterschied zu den zuvor beschriebenen ersten sechs Ausführungsformen ist bei diesen weiteren Ausführungsformen am Steg des zweiten Nachschalt-Planetenradsatzes NS2 zusätzlich zur zweiten Kupplung H des Nachschaltsatzes NS ein drittes Schaltelement L des Nachschaltsatzes NS angeschlossen.

Wie bei der ersten bis sechsten Aufführungsform eines erfindungsgemäßen Mehrstufengetriebes sind auch bei der siebten, zehnten und elften Ausführungsform bei den Gängen, die über Vor- und Nachschaltsatz gebildet werden, jeweils zwei Schaltelemente im Vorschaltsatz VS und eine Schaltelement im Nachschaltsatz NS geschlossen. Bei den Gängen, die nur über den Nachschaltsatz NS gebildet werden, ist im Vorschaltsatz maximal ein Schaltelement des nächsthöheren bzw. nächstniedrigeren Ganges geschlossen.

Neben den schon genannten Drehzahlbedingungen 1. bis 6. gelten zusätzlich die folgenden Bedingungen:
8. die Drehzahl an dem mit der Verbindungswelle 2 verbundenen Zentralrad des zweiten Nachschalt-Planetenradsatzes NS2 ist bei geschalteten Schaltelementen L und M kleiner/gleich als die durch den Vorschaltsatz VS erzeugte Drehzahl nvs;
9. die Drehzahl am geschalteten Schaltelement L ist größer/gleich null und kleiner als die Eingangsdrehzahl n der Antriebswelle 1; und
   anstelle der 7. Drehzahlbedingung gilt:
10. die Drehzahl am geschalteten Schaltelement M ist größer null und kleiner/gleich der Eingangsdrehzahl n der Antriebswelle 1.

Die siebte und zehnte beispielhafte erfindungsgemäße Ausführungsform eines Mehrstufengetriebes weisen jeweils identische mechanischen Bauteil-Koppelungen innerhalb des Vorschaltsatzes VS und innerhalb des Nachschaltsatzes NS auf. Die achte und neunte erfindungsgemäße Ausführungsform ist jeweils aus der siebten Ausführungsform abgeleitet, mit jeweils unterschiedlichen Koppelungen innerhalb des Vorschaltsatzes VS und des Nachschaltsatzes NS. Die elfte erfindungsgemäße Ausführungsform ist aus der zehnten Ausführungsform abgeleitet, ebenfalls mit unterschiedlichen Koppelungen innerhalb des Vorschaltsatzes VS und des Nachschaltsatzes NS. Selbstverständlich können in anderen Weiterbildungen auch noch andere mechanische Koppelungen der Planetenradsatzkomponenten vorgesehen sein.

Figur 7A zeigt nun beispielhaft das Getriebeschema einer siebten Ausführungsform eines erfindungsgemäßen Mehrstufengetriebes, mit zwei zu einem Zweisteg-Vierwellen-Getriebe gekoppelten, schaltbaren Vorschalt-Planetenradsätzen VS1, VS2 und drei Schaltelementen A, B, D im Vorschaltsatz VS, sowie mit zwei zu einem Zweisteg-Vierwellen-Getriebe gekoppelten, schaltbaren Nachschalt-Planetenradsätzen NS1, NS2 und drei Schaltelementen M, H, L im Nachschaltsatz NS. Mit der Anordnung der Figur 7A lassen sich durch selektives Schließen der sechs Schaltelemente die in Figur 7B tabellarisch aufgeführten neun Vorwärtsgänge und ein Rückwärtsgang schalten. Dabei sind drei der Vorwärtsgänge als Overdrive-Gänge ausgeführt.

Wie in Figur 7A gezeigt, ist hierbei die Antriebswelle 1 (Drehzahl n) über die zweite Kupplung B des Vorschaltsatzes VS mit dem Sonnenrad 21 des zweiten schaltbaren Vorschalt-Planetenradsatzes VS2, über die zweite Kupplung H des Nachschaltsatzes NS mit dem Steg 45 der Planetenräder 42 des zweiten Nachschalt-Planetenradsatzes NS2, sowie über die erste Kupplung M des Nachschaltsatzes NS mit dem Sonnenrad 31 des ersten Nachschalt-Planetenradsatzes NS1 verbindbar. Der Steg 25 mit den Planetenrädern 22 des zweiten schaltbaren Vorschalt-Planetenradsatzes VS2 und das Hohlrad 13 des ersten schaltbaren Vorschalt-Planetenradsatzes VS1 sind gekoppelt und über das als Bremse ausgebildete dritte Schaltelement D des Vorschaltsatzes VS festsetzbar. Das Sonnenrad 11 des ersten schaltbaren Vorschalt-Planetenradsatzes VS1 ist über das als Bremse ausgebildete erste Schaltelement A des Vorschaltsatzes VS festsetzbar. Der Steg 15 mit den Planetenrädern 12 des ersten schaltbaren Vorschalt-Planetenradsatzes VS1 ist mit dem Hohlrad 23 des zweiten schaltbaren Vorschalt-Planetenradsatzes VS2 und über die Verbindungswelle 2 (Drehzahl nvs) mit dem Sonnenrad 41 des zweiten Nachschalt-Planetenradsatzes NS2 verbunden. Der Steg 45 mit den Planetenrädern 42 des zweiten Nachschalt-Planetenradsatzes NS2 ist mit dem Hohlrad 33 des ersten Nachschalt-Planetenradsatzes NS1 gekoppelt und über das als Bremse ausgebildete dritte Schaltelement L des Nachschaltsatzes NS festsetzbar. Der Steg 35 mit den Planetenrädern 32 des ersten Nachschalt-Planetenradsatzes NS1 ist mit dem Hohlrad 43 des zweiten Nachschalt-Planetenradsatzes NS2 und mit der Abtriebswelle 3 (Drehzahl nns) verbunden.

Gegenüber dem beschriebenen Stand der Technik weist die in den Figuren 7A, 7B dargestellte siebte Ausführungsform eines erfindungsgemäßen Mehrstufengetriebes den gleichen Vorteil auf wie die erste Ausführungsform gemäß Figuren 1A und 1B. Im Vergleich zur ersten Ausführungsform ist die Gangabstufung der siebten Ausführungsform günstiger. Ansonsten entspricht der schematische Getriebeaufbau dem der vierten Ausführungsform. In vorteilhafter Weise sind also vier der insgesamt sechs Schaltelemente als Bremsen ausgebildet, mit den bekannten konstruktiven Vorteilen hinsichtlich deren Druckölversorgung.

Figur 7D zeigt die Schaltlogik dieser erfindungsgemäßen Weiterbildung der siebten Ausführungsform eines erfindungsgemäßen Mehrstufengetriebes. Wie bei der siebten Ausführungsform sind neun Vorwärtsgänge und ein Rückwärtsgang schaltbar.

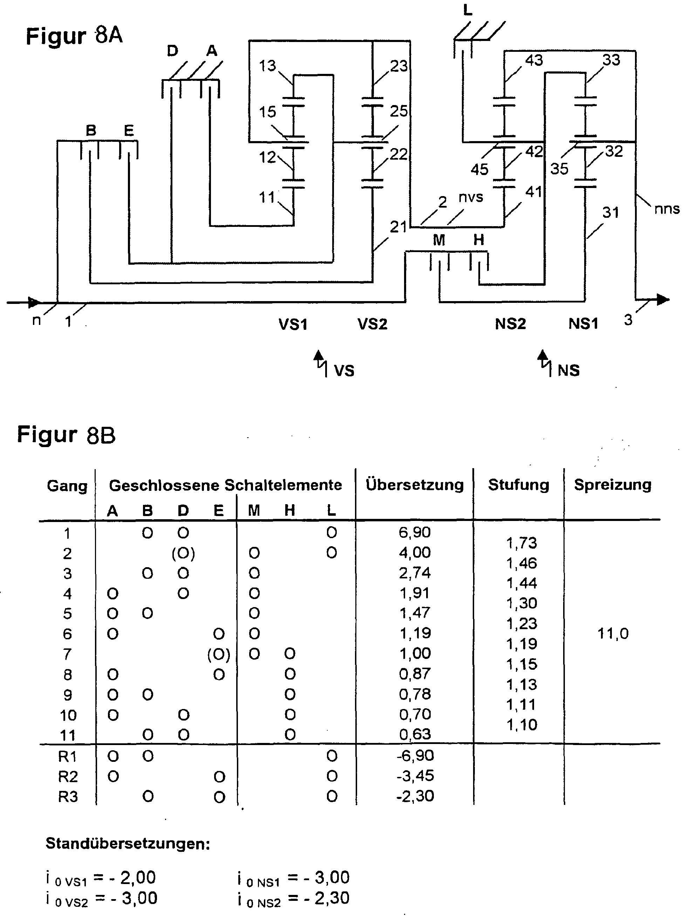

In den Figuren 8A und 8B wird nun eine achte beispielhafte Ausführungsform eines erfindungsgemäßen Mehrstufengetriebes erläutert, die aus der siebten Ausführungsform abgeleitet ist und im Vorschaltsatz VS drei Schaltelemente A, B, D und zwei schaltbare Vorschalt-Planetenradsätze VS1, VS2 aufweist, sowie im Nachschaltsatz drei Schaltelemente M, H, L und zwei schaltbare Nachschalt-Planetenradsätze NS1, NS2. Im Unterschied zu der zuvor in Figur 7A beschriebenen siebten Ausführungsform sind nunmehr alle drei Schaltelemente A, B, D des Vorschaltsatzes VS als Bremse ausgebildet und die Bauteilekoppelung innerhalb des Vorschaltsatzes VS und innerhalb des Nachschaltsatzes NS modifiziert. Der zweite schaltbare Vorschalt-Planetenradsatz VS2 und der erste schaltbare Nachschalt-Planetenradsatz NS1 sind nunmehr als Plus-Getriebe ausgebildet. Unverändert ist der Abtrieb des Vorschaltsatzes VS (Drehzahl nvs) über die Verbindungswelle 2 starr mit einem Zentralrad des Nachschaltsatzes NS verbunden, wie bei der siebten Ausführungsform mit dem Sonnenrad 41 des zweiten Nachschalt-Planetenradsatzes NS2.

Wie in Figur 8A gezeigt, umfaßt der erste schaltbare Vorschalt-Planetenradsatz VS1 ein Sonnenrad 11, ein Hohlrad 13 und einen Steg 15 mit Planetenrädern 12. Der zweite schaltbare Vorschalt-Planetenradsatz VS2 ist als Doppelplanetenradsatz ausgebildet und umfaßt ein Sonnenrad 21, ein Hohlrad 23 und zwei gekoppelte Stege 25', 25" mit inneren und äußeren Planetenrädern 22', 22 ". Das Sonnenrad 11 ist über die Bremse A festsetzbar. Das Sonnenrad 21 ist mit der Antriebswelle 1 verbunden. Die Hohlräder 13 und 23 sind miteinander verbunden und über die Bremse D festsetzbar. Die Stege 15, 25', 25" sind miteinander verbunden und über die Bremse B festsetzbar. Weiterhin bilden die gekoppelten Stege 15, 25', 25" den Abtrieb des Vorschaltsatzes VS (Drehzahl nvs) und sind über die Verbindungswelle 2 fest mit einem Sonnenrad 41 des zweiten Nachschalt-Planetenradsatzes NS2 verbunden. Der erste Nachschalt-Planetenradsatz NS1 ist als Doppelplanetenradsatz ausgebildet und umfaßt ein Sonnenrad 31, ein Hohlrad 33 und zwei gekoppelte Stege 35', 35" mit inneren und äußeren Planetenrädern 32', 32". Der zweite Nachschalt-Planetenradsatz NS2 umfaßt das Sonnenrad 41, ein Hohlrad 43 und einen Steg 45 mit Planetenrädern 42. Das Sonnenrad 31 ist über das als Kupplung ausgebildete erste Schaltelement M des Nachschaltsatzes NS mit der Antriebswelle 1 verbindbar. Die Stege 35', 35" und 45 sind miteinander verbunden, über das als Kupplung ausgebildete zweite Schaltelement H des Nachschaltsatzes NS mit der Antriebswelle 1 verbindbar, sowie über das als Bremse ausgebildete dritte Schaltelement L des Nachschaltsatzes NS festsetzbar. Die Hohlräder 33 und 43 sind miteinander verbunden und bilden gleichzeitig den Abtrieb des Nachschaltsatzes NS (Drehzahl nns), sind also mit der Abtriebswelle 3 verbunden.

Wie bei der siebten Ausführungsform sind auch bei der beschriebenen achten Ausführungsform eines erfindungsgemäßen Mehrstufengetriebes durch selektives Schalten der sechs Schaltelemente A, B, D und M, H, L insgesamt neun Vorwärtsgänge und ein Rückwärtsgang ohne Gruppenschaltung schaltbar, wie in Figur 8B dargestellt.

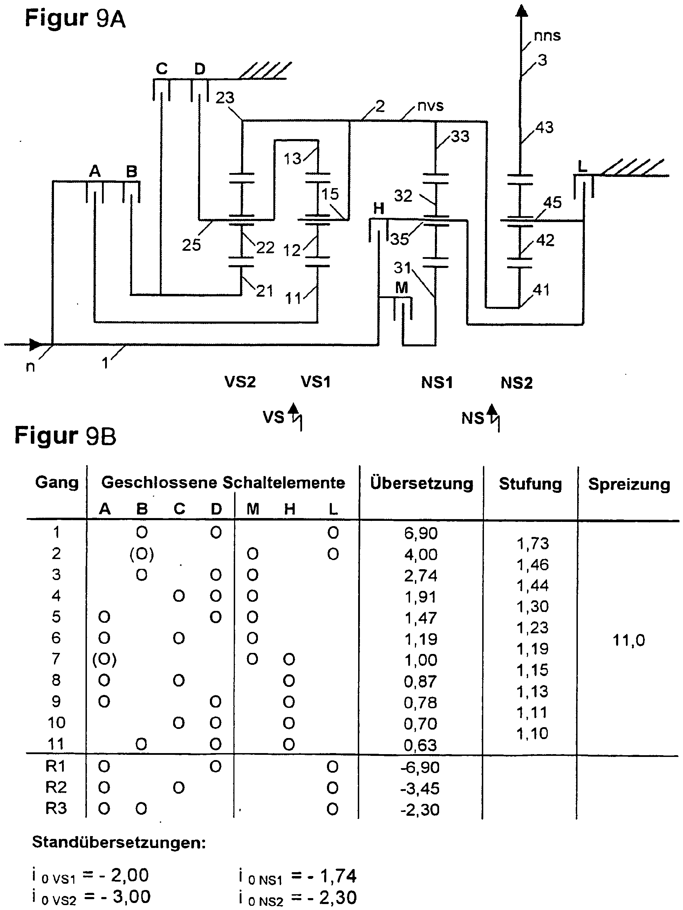

In den Figuren 9A und 9B wird nun eine neunte beispielhafte Ausführungsform eines erfindungsgemäßen Mehrstufengetriebes erläutert, die ebenfalls aus der siebten Ausführungsform abgeleitet ist und im Vorschaltsatz VS drei Schaltelemente A, B, D und zwei schaltbare Vorschalt-Planetenradsätze VS1, VS2 aufweist, sowie im Nachschaltsatz drei Schaltelemente M, H, L und zwei schaltbare Nachschalt-Planetenradsätze NS1, NS2. Im Unterschied zu der zuvor in Figur 7A beschriebenen siebten Ausführungsform sind nunmehr alle drei Schaltelemente A, B, D des Vorschaltsatzes VS als Bremse ausgebildet und die Bauteilekoppelung innerhalb des Vorschaltsatzes VS und innerhalb des Nachschaltsatzes NS modifiziert. Unverändert ist der Abtrieb des Vorschaltsatzes VS (Drehzahl nvs) über die Verbindungswelle 2 starr mit einem Zentralrad des Nachschaltsatzes NS verbunden, im Unterschied zur siebten Ausführungsform jedoch mit dem Hohlrad 43 des zweiten Nachschalt-Planetenradsatzes NS2.

Wie in Figur 9A gezeigt, umfaßt der erste schaltbare Vorschalt-Planetenradsatz VS1 ein Sonnenrad 11, ein Hohlrad 13 und einen Steg 15 mit Planetenrädern 12. Der zweite schaltbare Vorschalt-Planetenradsatz VS2 umfaßt ein Sonnenrad 21, ein Hohlrad 23 und einen Steg 25 mit Planetenrädern 22. Die Sonnenräder 11 und 21 sind miteinander verbunden und über die Bremse A festsetzbar. Das Hohlrad 23 ist mit der Antriebswelle 1 verbunden. Das Hohlrad 13 und der Steg 25 sind miteinander verbunden und über die Bremse D festsetzbar. Der Steg 15 ist über die Bremse B festsetzbar. Weiterhin bildet der Steg 15 den Abtrieb des Vorschaltsatzes VS (Drehzahl nvs) und ist über die Verbindungswelle 2 fest mit einem Hohlrad 43 des zweiten Nachschalt-Planetenradsatzes NS2 verbunden. Der erste Nachschalt-Planetenradsatz NS1 umfaßt ein Sonnenrad 31, ein Hohlrad 33 und einen Steg 35 mit Planetenrädern 32. Der zweite Nachschalt-Planetenradsatz NS2 umfaßt ein Sonnenrad 41, das Hohlrad 43 und einen Steg 45 mit Planetenrädern 42. Die Sonnenräder 31 und 41 sind miteinander verbunden und über das als Kupplung ausgebildete erste Schaltelement M des Nachschaltsatzes NS mit der Antriebswelle 1 verbindbar. Das Hohlrad 33 und der Steg 45 sind miteinander verbunden, über das als Kupplung ausgebildete zweite Schaltelement H des Nachschaltsatzes NS mit der Antriebswelle 1 verbindbar, sowie über das als Bremse ausgebildete dritte Schaltelement L des Nachschaltsatzes NS festsetzbar. Der Steg 35 bildet den Abtrieb des Nachschaltsatzes NS (Drehzahl nns) und ist mit der Abtriebswelle 3 verbunden.

Wie bei der siebten Ausführungsform sind auch bei der beschriebenen neunten Ausführungsform eines erfindungsgemäßen Mehrstufengetriebes durch selektives Schalten der sechs Schaltelemente A, B, D und M, H, L gemäß der in Figur 9B dargestellten Schaltlogik insgesamt neun Vorwärtsgänge und ein Rückwärtsgang ohne Gruppenschaltung schaltbar. Dabei sind - wie auch bei den in Figur 7C und 8A beschriebenen Ausführungsformen - in jedem geschalteten Gang stets nur zwei Schaltelemente geschlossen. Gegenüber der siebten Ausführungsform ist die Spreizung leicht vergrößert und die Bauteilekoppelung des Nachschaltsatzes NS hinsichtlich der Blindleistung im ersten Gang günstiger.

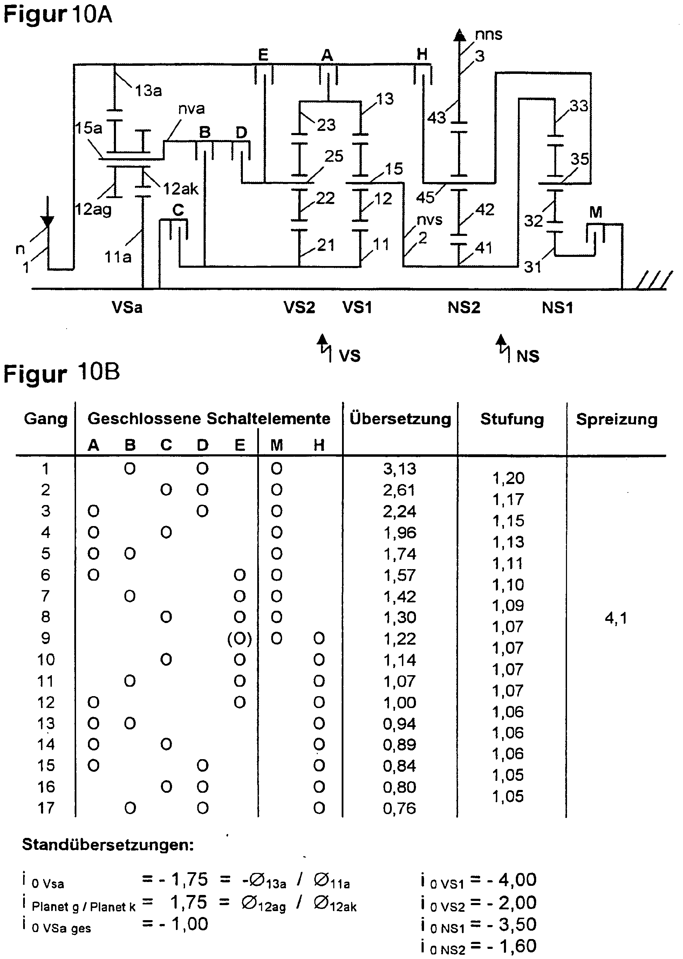

Eine beispielhafte achte Ausführungsform eines erfindungsgemäßen Mehrstufengetriebes gemäß Figur 8A weist im Vergleich zur siebten, achten und neunten Ausführungsform im Vorschaltsatz VS ein weiteres, als Kupplung ausgebildetes viertes Schaltelement E auf. Durch selektives Schalten der sieben Schaltelemente A, B, D, E und H, M, L können gemäß der in Figur 10B dargestellten Schaltlogik insgesamt elf Vorwärtsgänge und drei Rückwärtsgänge geschaltet werden.

Wie in Figur 8A dargestellt, sind das erste und dritte Schaltelement A, D des Vorschaltsatzes VS als Bremse und ausgebildet, das zweite und vierte Schaltelement B, E des Vorschaltsatzes VS als Kupplung. Das erste und das zweite Schaltelement M, H des Nachschaltsatzes NS sind Kupplungen, das dritte Schaltelement L des Nachschaltsatzes NS eine Bremse.

Die Antriebswelle 1 (Drehzahl n) ist dabei über die Kupplung B mit dem Sonnenrad 21 des zweiten schaltbaren Vorschalt-Planetenradsatz VS2, über die Kupplung H mit dem Steg 45 der Planetenräder 42 des zweiten Nachschalt-Planetenradsatzes NS2, über die Kupplung M mit dem Sonnenrad 31 des ersten Nachschalt-Planetenradsatzes NS1, sowie über die Kupplung E mit dem Steg 25 der Planetenräder 22 des zweiten schaltbaren Vorschalt-Planetenradsatzes VS2 verbindbar. Der Steg 25 mit den Planetenrädern 22 des zweiten schaltbaren Vorschalt-Planetenradsatzes VS2 und das Hohlrad 13 des ersten schaltbaren Vorschalt-Planetenradsatzes VS1 sind gekoppelt und über die Bremse D festsetzbar. Das Sonnenrad 11 des ersten schaltbaren Vorschalt-Planetenradsatzes VS1 ist über die Bremse A festsetzbar. Der Steg 15 mit den Planetenrädern 12 des ersten schaltbaren Vorschalt-Planetenradsatzes VS1 ist mit dem Hohlrad 23 des zweiten schaltbaren Vorschalt-Planetenradsatzes VS2 und über die Verbindungswelle 2 (Drehzahl nvs) mit dem Sonnenrad 41 des zweiten Nachschalt-Planetenradsatzes NS2 verbunden. Der Steg 45 mit den Planetenrädern 42 des zweiten Nachschalt-Planetenradsatzes NS2 ist mit dem Hohlrad 33 des ersten Nachschalt-Planetenradsatzes NS1 gekoppelt und über die Bremse L festsetzbar. Der Steg 35 mit den Planetenrädern 32 des ersten Nachschalt-Planetenradsatzes NS1 ist mit dem Hohlrad 43 des zweiten Nachschalt-Planetenradsatzes NS2 und mit der Abtriebswelle 3 (Drehzahl nns) verbunden.

Vorteilhaft gegenüber dem beschriebenen Stand der Technik ist, daß mit dem erfindungsgemäßen Mehrstufengetriebes gemäß Figur 8A, 8B mit vier Radsätzen mehr Gänge erzeugt werden können. Im Vergleich zur vierten und fünften Ausführungsform des erfindungsgemäßen Mehrstufengetriebes sind in vorteilhafter Weise bis zu drei Rückwärtsgängen schaltbar. Ein spezieller, gegenüber dem "normalen" Rückwärtsgang "längerer" Rückwärtsgang kann beispielsweise in ein Winterfahrprogramm des Automatgetriebes einbezogen werden. Ein zusätzlicher, gegenüber dem "normalen" Rückwärtsgang "kürzerer" Rückwärtsgang ist beispielsweise für ein Geländefahrzeug oder für einen Anhängerbetrieb des Fahrzeugs günstig.

In den Figuren 9A und 9B wird nun eine neunte beispielhafte Ausführungsform eines erfindungsgemäßen Mehrstufengetriebes erläutert, die aus der achten Ausführungsform abgeleitet ist. Im Vorschaltsatz VS sind wieder vier Schaltelemente A, B, C, D und zwei gekoppelte, schaltbare Vorschalt-Planetenradsätze VS1 und VS2 vorgesehen, sowie im Nachschaltsatz drei Schaltelemente M, H, L und zwei gekoppelte, schaltbare Nachschalt-Planetenradsätze NS1 und NS2. Im Unterschied zur zuvor beschriebenen zehnten Ausführungsform ist das erste Schaltelement A des Vorschaltsatzes VS nunmehr eine Kupplung und das vierte Schaltelement D des Vorschaltsatzes VS eine Bremse. Wegen einer durchgängigen Nomenklatur sind das dritte und vierte Schaltelement in der elften Ausführungsform mit C und D bezeichnet, da die Bezeichnung "E" bisher und auch in den noch folgenden Ausführungsformen erfindungsgemäßer Mehrstufengetriebe stets für eine Kupplung verwendet wird. Weitere Unterschiede zur zehnten Ausführungsform betreffen die Bauteilekoppelung innerhalb des Vorschaltsatzes VS und innerhalb des Nachschaltsatzes NS.

Wie in Figur 9A dargestellt, ist das Sonnenrad 11 des ersten Vorschalt-Planetenradsatzes VS1 über das als Kupplung ausgebildete erste Schaltelement A des Vorschaltsatzes VS mit der Antriebswelle 1 verbindbar. Das Sonnenrad 21 des zweiten Vorschalt-Planetenradsatzes VS2 ist über das als Kupplung ausgebildete zweite Schaltelement B des Vorschaltsatzes VS mit der Antriebswelle 1 verbindbar, sowie über das Bremse ausgebildete dritte Schaltelement C des Vorschaltsatzes VS festsetzbar. Das Hohlrad 13 des ersten Vorschalt-Planetenradsatzes VS1 und der Steg 25 des zweiten Vorschalt-Planetenradsatzes VS2 sind miteinander verbunden und über das vierte als Bremse ausgebildete Schaltelement D des Vorschaltsatzes VS festsetzbar. Das Hohlrad 23 des zweiten Vorschalt-Planetenradsatzes VS2 und der Steg 15 des ersten Vorschalt-Planetenradsatzes VS1 sind miteinander verbunden, bilden gleichzeitig den Abtrieb des Vorschaltsatzes VS und sind über die Verbindungswelle 2 (Drehzahl nvs) mit dem Sonnenrad 41 des zweiten Nachschalt-Planetenradsatzes NS2 und dem an dieses Sonnenrad 41 angekoppelten Hohlrad 33 des ersten Nachschalt-Planetenradsatzes NS1 verbunden. Das Sonnenrad 31 des ersten Nachschalt-Planetenradsatzes NS1 ist über das als Kupplung ausgebildete erste Schaltelement M des Nachschaltsatzes NS mit der Antriebswelle 1 verbindbar. Die Stege 35, 45 der Planetenräder 32, 42 beider Nachschalt-Planetenradsätze NS1, NS2 sind miteinander verbunden, über das als Kupplung ausgebildete zweite Schaltelement H des Nachschaltsatzes NS mit der Antriebswelle 1 verbindbar, sowie über das als Bremse ausgebildete dritte Schaltelement L des Nachschaltsatzes NS festsetzbar. Das Hohlrad 43 des zweiten Nachschalt-Planetenradsatzes NS2 bildet den Abtrieb des Nachschaltsatzes NS und ist mit der Abtriebswelle 3 verbunden.

Wie aus der in Figur 9B dargestellten Schaltlogik ersichtlich, sind wie bei der achten Ausführungsform auch bei der beschriebenen neunten Ausführungsform eines erfindungsgemäßen Mehrstufengetriebes durch selektives Schalten der Schaltelemente A, B, C, D, M, H, L insgesamt elf Vorwärtsgänge und drei Rückwärtsgänge ohne Gruppenschaltung schaltbar, mit harmonischer Gang-Stufung bei großer Spreizung.

Im Folgenden werden nun weitere Ausführungsformen eines erfindungsgemäßen Mehrstufengetriebes beschrieben, die ohne schaltbaren Rückwärtsgang ausgebildet sind und sich besonders für Fahrräder, Motorräder und vielgängige Sonderfahrzeuge eignen.

Hierbei sind in den Vorwärtsgängen, die über Vor- und Nachschaltsatz gebildet werden, stets jeweils zwei Schaltelemente im Vorschaltsatz VS und ein Schaltelement im Nachschaltsatz NS geschlossen. Bei den Vorwärtsgängen, die nur über den Nachschaltsatz NS gebildet werden, ist stets im Vorschaltsatz VS maximal ein Schaltelement des nächsthöheren bzw. nächstniedrigeren Ganges geschlossen.

Figur 10A zeigt nun beispielhaft eine zehnte Ausführungsform eines erfindungsgemäßen Mehrstufengetriebes, die in Bezug auf Anzahl der Radsätze und Schaltelemente im Vorschalt- und Nachschaltsatz vergleichbar ist mit der zuvor beschriebenen sechsten Ausführungsform eines erfindungsgemäßen Mehrstufengetriebes. Jedoch ist bei dieser zehnten Ausführungsform die kleinste Drehzahl an der Verbindungswelle 2, also die Ausgangsdrehzahl nvs des Vorschaltsatzes, bei positiver Eingangsdrehzahl n auch stets positiv.

Wie in Figur 10A dargestellt, weist der Vorschaltsatz VS zwei gekoppelte, schaltbare Vorschalt-Planetenradsätze VS1 und VS2, einen dritten, nicht schaltbaren Vorschalt-Planetenradsatz Vsa sowie vier Kupplungen A, B, D, E und eine Bremse C auf, der schaltbare Nachschaltsatz NS zwei gekoppelte Nachschalt-Planetenradsätze NS1 und NS2 sowie eine Bremse M und eine Kupplung H auf. Vorschaltsatz VS und Nachschaltsatz sind über die Verbindungswelle 2 miteinander verbunden.

Die Antriebswelle 1 (Drehzahl n) ist dabei mit dem Hohlrad 13a des dritten Vorschalt-Planetenradsatzes VSa verbunden, sowie über die Kupplung E mit dem Steg 25 der Planetenräder 22 des zweiten schaltbaren Vorschalt-Planetenradsatzes VS2 und über die Kupplung A mit dem Hohlrad 13 des ersten schaltbaren Vorschalt-Planetenradsatzes VS1 und über die Kupplung H mit dem Steg 45 der Planetenräder 42 des zweiten Nachschalt-Planetenradsatzes NS2 verbindbar. Die Planetenräder 12a des dritten Vorschalt-Planetenradsatzes VSa sind als Stufenplanetenräder mit kleinen Planetenrädern 12ak und großen Planetenrädern 12ag ausgebildet. Der Steg 15a (Drehzahl nva) mit den Planetenrädern 12ak und 12ag des dritten Vorschalt-Planetenradsatzes VSa sind über die Kupplung B mit dem Sonnenrad 21 des zweiten schaltbaren Vorschalt-Planetenradsatzes VS2 und über die Kupplung D mit dem Steg 25 der Planetenräder 22 des zweiten schaltbaren Vorschalt-Planetenradsatzes VS2 verbindbar. Das Hohlrad 13a des dritten Vorschalt-Planetenradsatzes VSa kämmt auf den großen Planetenrädern 12ag des dritten Vorschalt-Planetenradsatzes VSa. Das Sonnenrad 11a des dritten Vorschalt-Planetenradsatzes VSa ist festgesetzt und kämmt mit den kleinen Planetenrädern 12ak des dritten Vorschalt-Planetenradsatzes VSa. Das Sonnenrad 21 des zweiten schaltbaren Vorschalt-Planetenradsatzes VS2 ist mit dem Sonnenrad 11 des ersten schaltbaren Vorschalt-Planetenradsatzes VS1 verbunden und über die Bremse C festsetzbar. Das Hohlrad 13 des ersten schaltbaren Vorschalt-Planetenradsatzes VS1 ist mit dem Hohlrad 23 des zweiten schaltbaren Vorschalt-Planetenradsatzes VS2 verbunden. Der Steg 15 mit den Planetenrädern 12 des ersten schaltbaren Vorschalt-Planetenradsatzes VS1 ist über die Verbindungswelle 2 (Drehzahl nvs) mit dem Sonnenrad 41 des zweiten Nachschalt-Planetenradsatzes NS2 und mit dem Hohlrad 33 des ersten Nachschalt-Planetenradsatzes NS1 verbunden. Der Steg 45 mit den Planetenrädern 42 des zweiten Nachschalt-Planetenradsatzes NS2 und der Steg 35 mit den Planetenrädern 32 des ersten Nachschalt-Planetenradsatzes NS1 sind gekoppelt, d.h. miteinander verbunden. Das Sonnenrad 31 des ersten Nachschalt-Planetenradsatzes NS1 ist über die Bremse M festsetzbar. Das Hohlrad 43 des zweiten Nachschalt-Planetenradsatzes NS2 ist mit der Abtriebswelle 3 (Drehzahl nns) verbunden.

Durch selektives Schalten der sieben Schaltelemente A bis E, H und M sind - gemäß der in Figur 10B dargestellten Schaltlogik - insgesamt siebzehn Vorwärtsgänge ohne Gruppenschaltung schaltbar. Ein Rückwärtsgang ist nicht vorgesehen. Der Vorteil im Vergleich zum genannten Stand der Technik liegt darin, daß die siebzehn Vorwärtsgänge mit einem Schaltelement weniger und einem Radsatz weniger realisiert werden.

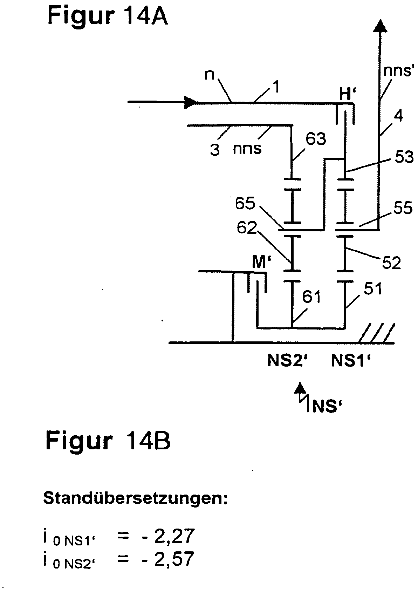

In den Figuren 11A und 11B wird nun eine beispielhafte elfte Ausführungsform eines erfindungsgemäßen Mehrstufengetriebes erläutert, die aus der dreizehnten Ausführungsform abgeleitet ist. So ist die Ausgestaltung des Nachschaltsatzes NS identisch, ebenso die Art und die Anzahl der Schaltelemente im Vorschaltsatz und die Anzahl der Radsätze im Vorschaltsatz VS. Entsprechend identisch ist auch die Anzahl der ohne Gruppenschaltung schaltbaren Gänge, wie aus der Schaltlogik in Figur 14B ersichtlich Modifiziert sind die Bauteile-Koppelungen innerhalb des ersten und zweiten Vorschalt-Planetenradsatzes VS1 und VS2, sowie die Ausbildung des dritten, nicht schaltbaren Vorschalt-Planetenradsatzes VSa.

Wie in Figur 11A gezeigt, ist der nicht schaltbare dritte Vorschalt-Planetenradsatz VSa nunmehr als Plus-Getriebe in Doppelplanetenbauweise ausgebildet und umfaßt ein Sonnenrad 11a, ein Hohlrad 13a und zwei gekoppelte Stege 15a', 15a" mit inneren und äußeren Planetenrädern 12a', 12a". Das Sonnenrad 11a ist festgesetzt. Die gekoppelten Stege 15a', 15a" sind mit der Antriebswelle 1 verbunden. Das Hohlrad 13a ist über das als Kupplung ausgebildete zweite Schaltelement B des Vorschaltsatzes VS mit dem Sonnenrad 21 des zweiten Vorschalt-Planetenradsatzes VS2 verbindbar. Weiterhin ist das Hohlrad 13a über das vierte als Kupplung ausgebildete Schaltelement D des Vorschaltsatzes VS mit dem Steg 25 des zweiten Vorschalt-Planetenradsatzes VS2 verbindbar. Dieser Steg 25 ist wiederum mit dem Hohlrad 13 des ersten Vorschalt-Planetenradsatzes VS1 gekoppelt und über das fünfte als Kupplung ausgebildete Schaltelement E des Vorschaltsatzes VS mit der Antriebswelle 1 verbindbar. Das Sonnenrad 21 ist auch über das als Bremse ausgebildete dritte Schaltelement C des Vorschaltsatzes VS festsetzbar. Das Hohlrad 23 des zweiten Vorschalt-Planetenradsatzes VS2 ist mit dem Sonnenrad 11 des ersten Vorschalt-Planetenradsatzes VS1 gekoppelt und über das erste als Kupplung ausgebildete Schaltelement A des Vorschaltsatzes VS verbindbar. Der Steg 15 des ersten Vorschalt-Planetenradsatzes VS1 bildet den Abtrieb des Vorschaltsatzes VS und ist mit der Verbindungswelle 2 (Drehzahl nvs) verbunden. Nachschaltsatzseitig ist die Verbindungswelle 2 mit dem Sonnenrad 41 des zweiten Nachschalt-Planetenradsatzes NS2 und dem an dieses Sonnenrad 41 gekoppelte Hohlrad 33 des ersten Nachschalt-Planetenradsatzes NS1 verbunden. Die Stege 35 und 45 der beiden Nachschalt-Planetenradsätze NS1 und NS2 sind gekoppelt und über das zweite als Kupplung ausgebildete Schaltelement H des Nachschaltsatzes NS mit der Antriebswelle 1 verbindbar. Das Sonnenrad 31 des ersten Nachschalt-Planetenradsatzes NS1 ist über das erste als Bremse ausgebildete Schaltelement M des Nachschaltsatzes NS festsetzbar. Das Hohlrad 43 des zweiten Nachschalt-Planetenradsatzes NS2 bildet den Abtrieb des Nachschaltsatzes NS (Drehzahl nns) und ist mit der Abtriebswelle 3 verbunden.

Ähnlich wie die zehnte Ausführungsform eignet sich auch die beschriebene elfte Ausführungsform eines erfindungsgemäßen Mehrstufengetriebes besonders für eine Fahrzeug- oder Fahrrad-Anwendung mit quer zur Fahrtrichtung liegendem An- und Abtrieb, aber auch für eine Antriebseinheit mit quer zum Antrieb liegendem Abtrieb.

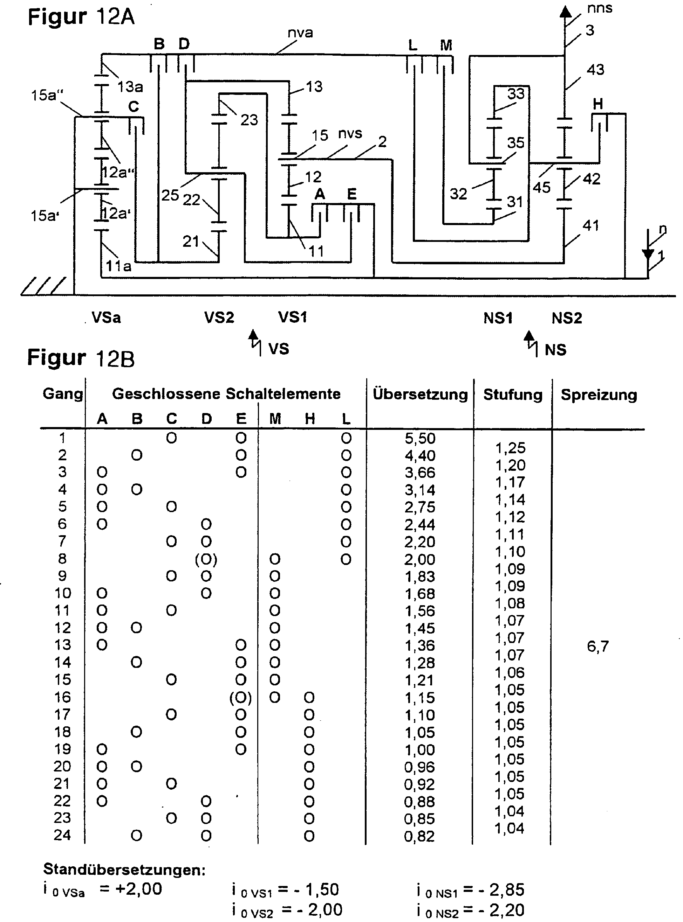

Figur 12A zeigt beispielhaft eine zwölfte Ausführungsform eines erfindungsgemäßen Mehrstufengetriebes, die in Bezug auf Anzahl der Schaltelemente im Nachschaltsatz NS vergleichbar ist mit der siebten bis neunten Ausführungsform des erfindungsgemäßen Mehrstufengetriebes. Insgesamt sind acht Schaltelemente, davon sieben Kupplungen und eine Bremse, sowie fünf Planetenradsätze vorgesehen. Der schaltbare Vorschaltsatz VS umfaßt zwei gekoppelte, schaltbare Vorschalt-Planetenradsätze VS1 und VS2, einen dritten, nicht schaltbaren Vorschalt-Planetenradsatz Vsa, vier Kupplungen A, B, D und E sowie eine Bremse C. Dabei ist der dritte Vorschalt-Planetenradsatz VSa in Doppelplanetenrad-Bauweise ausgebildet, mit inneren Planetenrädern 12a' und äußeren Planetenrädern 12a" und entsprechend zwei Stegen 15a' und 15a". Der schaltbare Nachschaltsatz NS umfaßt zwei gekoppelte Nachschalt-Planetenradsätze NS1, NS2 sowie drei Kupplungen M, H, L. Vorschaltsatz VS und Nachschaltsatz NS sind über die Verbindungswelle 2 miteinander verbunden.

Hierbei ist die Antriebswelle 1 (Drehzahl n) mit dem Sonnenrad 11a des dritten Vorschalt-Planetenradsatzes VSa verbunden, sowie über die Kupplung A mit dem Sonnenrad 11 des ersten schaltbaren Vorschalt-Planetenradsatzes VS1 und über die Kupplung E mit dem Steg 25 der Planetenräder 22 des zweiten schaltbaren Vorschalt-Planetenradsatzes VS2 und über die Kupplung H mit dem Steg 45 der Planetenräder 42 des zweiten Nachschalt-Planetenradsatzes NS2 verbindbar. Der Steg 15a' der inneren Planetenräder 12a' des dritten Vorschalt-Planetenradsatzes VSa und der Steg 15a" der äußeren Planetenräder 12a" des dritten Vorschalt-Planetenradsatzes VSa sind gekoppelt und festgesetzt. Das Sonnenrad 21 des zweiten schaltbaren Vorschalt-Planetenradsatzes VS2 ist über die Bremse C durch den Steg 15a" der äußeren Planetenräder 12a" des dritten Vorschalt-Planetenradsatzes VSa festsetzbar. Das Hohlrad 13a (Drehzahl nva) des dritten Vorschalt-Planetenradsatzes VSa ist über die Kupplung B mit dem Sonnenrad 21 des zweiten schaltbaren Vorschalt-Planetenradsatzes VS2, über die Kupplung D mit dem Steg 25 der Planetenräder 22 des zweiten schaltbaren Vorschalt-Planetenradsatzes VS2, über die Kupplung L mit dem Steg 45 der Planetenräder 42 des zweiten Nachschalt-Planetenradsatzes NS2 und über die Kupplung M mit dem Sonnenrad 31 des ersten Nachschalt-Planetenradsatzes NS1 verbindbar. Der Steg 25 mit den Planetenrädern 22 des zweiten schaltbaren Vorschalt-Planetenradsatzes VS2 und das Hohlrad 13 des ersten schaltbaren Vorschalt-Planetenradsatzes VS1 sind miteinander gekoppelt. Das Sonnenrad 11 des ersten schaltbaren Vorschalt-Planetenradsatzes VS1 und das Hohlrad 23 des zweiten schaltbaren Vorschalt-Planetenradsatzes VS2 sind ebenfalls miteinander gekoppelt. Der Steg 15 (Drehzahl nvs) mit den Planetenrädern 12 des ersten schaltbaren Vorschalt-Planetenradsatzes VS1 ist über die Verbindungswelle 2 mit dem Sonnenrad 41 des zweiten Nachschalt-Planetenradsatzes NS2 verbunden. Der Steg 45 mit den der Planetenrädern 42 des zweiten Nachschalt-Planetenradsatzes NS2 ist mit dem Hohlrad 33 des ersten Nachschalt-Planetenradsatzes NS1 verbunden. Der Steg 35 mit den Planetenrädern 32 des ersten Nachschalt-Planetenradsatzes NS1 ist mit dem Hohlrad 43 des zweiten Nachschalt-Planetenradsatzes NS2 und mit der Abtriebswelle 3 (Drehzahl nns) verbunden.

Durch selektives Schalten der acht Schaltelemente A bis E und H, M und L können gemäß der in Figur 12B dargestellten Schaltlogik insgesamt vierundzwanzig Vorwärtsgänge geschaltet werden. Ein Rückwärtsgang ist nicht vorgesehen. Der Vorteil dieser zwölften Ausführungsform eines erfindungsgemäßen Mehrstufengetriebes im Vergleich zum genannten Stand der Technik liegt darin, daß bei gleicher Anzahl von Schaltelementen mit einem Radsatz weniger insgesamt vierundzwanzig anstatt siebzehn Vorwärtsgänge realisiert werden.

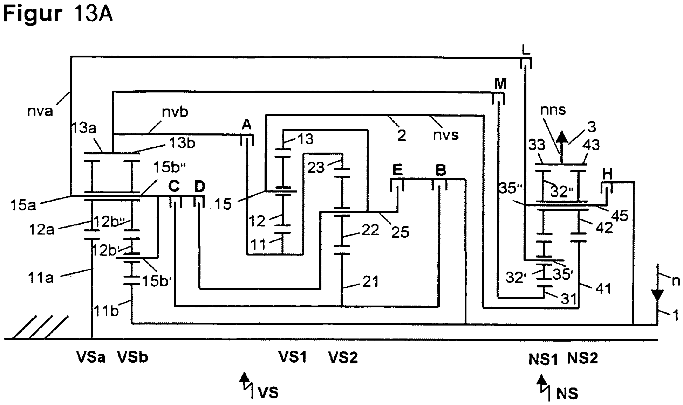

In einer beispielhaften dreizehnten Ausführungsform eines erfindungsgemäßen Mehrstufengetriebes wird vorgeschlagen, im Vorschaltsatz VS zwei gekoppelte schaltbare Vorschalt-Planetenradsätze VS1 und VS2, sowie zwei zusätzliche gekoppelte nicht schaltbare Vorschalt-Planetenradsätze VSa und VSb vorzusehen. Figur 13A zeigt das entsprechende Getriebeschema. Wie bei der fünfzehnten Ausführungsform des erfindungsgemäßen Mehrstufengetriebes sind im Vorschaltsatz VS fünf als Kupplungen ausgebildete Schaltelemente A, B, C, D, E und im Nachschaltsatz NS drei als Kupplungen ausgebildete Schaltelemente M, H und L vorgesehen.

Wie in Figur 13A dargestellt, ist die Antriebswelle 1 (Drehzahl n) mit dem Sonnenrad 11b des vierten Vorschalt-Planetenradsatzes VSb verbunden, sowie über die Kupplung B mit dem Sonnenrad 21 des zweiten schaltbaren Vorschalt-Planetenradsatzes VS2, über die Kupplung E mit dem Steg 25 der Planetenräder 22 des zweiten schaltbaren Vorschalt-Planetenradsatzes VS2 und über die Kupplung H mit dem Steg 45 der Planetenräder 42 des zweiten Nachschalt-Planetenradsatzes NS2 verbindbar. Das Sonnenrad 11a des dritten Vorschalt-Planetenradsatzes VSa ist festgesetzt. Der vierte Vorschalt-Planetenradsatz VSb ist als Doppelplanetenradsatz ausgebildet. Der Steg 15a (Drehzahl nva) mit den Planetenrädern 12a des dritten Vorschalt-Planetenradsatzes VSa ist mit dem Steg 15b" der äußeren Planetenräder 12b" des vierten Vorschalt-Planetenradsatzes VSb und dem Steg 15b' der inneren Planetenräder 12b' des vierten Vorschalt-Planetenradsatzes (VSb) verbunden. Weiterhin ist der Steg 15a des dritten Vorschalt-Planetenradsatzes VSa über die Kupplung C mit dem Sonnenrad 21 des zweiten schaltbaren Vorschalt-Planetenradsatzes VS2 verbindbar, sowie über die Kupplung D mit dem Steg 25 der Planetenräder 22 des zweiten schaltbaren Vorschalt-Planetenradsatzes VS2 und über die Kupplung L mit dem Steg 35" der äußeren Planetenräder 32" des ersten Nachschalt-Planetenradsatzes NS1. Dabei sind die Planetenräder 12a des dritten Vorschalt-Planetenradsatzes VSa und die Planetenräder 12b" des vierten Vorschalt-Planetenradsatzes VSb zusammengefaßt. Das Hohlrad 13a (Drehzahl nvb) des dritten Vorschalt-Planetenradsatzes VSa und das Hohlrad 13b des vierten Vorschalt-Planetenradsatzes VSb sind miteinander gekoppelt. Beide Hohlräder 13a und 13b sind über die Kupplung A mit dem Sonnenrad 11 des ersten schaltbaren Vorschalt-Planetenradsatzes VS1 und über die Kupplung M mit dem Sonnenrad 31 des ersten Nachschalt-Planetenradsatzes NS1 verbindbar. Das Sonnenrad 11 des ersten schaltbaren Vorschalt-Planetenradsatzes VS1 ist mit dem Hohlrad 23 des zweiten schaltbaren Vorschalt-Planetenradsatzes VS2 verbunden. Der Steg 25 mit den Planetenrädern 22 des zweiten schaltbaren Vorschalt-Planetenradsatzes VS2 ist mit dem Hohlrad 13 des ersten schaltbaren Vorschalt-Planetenradsatzes VS1 verbunden. Der Steg 15 mit den Planetenrädern 12 des ersten schaltbaren Vorschalt-Planetenradsatzes VS1 ist über die Verbindungswelle 2 (Drehzahl nvs) mit dem Sonnenrad 41 des zweiten Nachschalt-Planetenradsatzes NS2 verbunden. Der Steg 35" mit den äußeren Planetenrädern 32" des ersten Nachschalt-Planetenradsatzes NS1 und der Steg 35' mit den inneren Planetenrädern 32' des ersten Nachschalt-Planetenradsatzes NS1 und der Steg 45 der Planetenräder 42 des zweiten Nachschalt-Planetenradsatzes NS2 sind miteinander verbunden. Die äußeren Planetenräder 32" des ersten Nachschalt-Planetenradsatzes NS1 und die Planetenräder 42 des zweiten Nachschalt-Planetenradsatzes NS2 sind dabei zusammengefaßt. Die Hohlräder 33 und 43 des ersten und zweiten Nachschalt-Planetenradsatzes NS1, NS2 sind miteinander und zusätzlich mit der Abtriebswelle 3 (Drehzahl nns) verbunden.

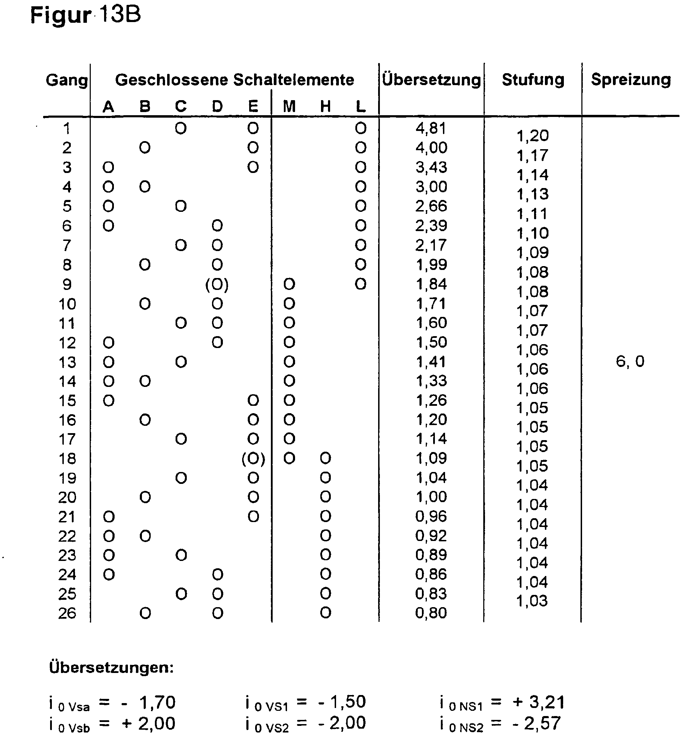

Durch selektives Schalten der acht Schaltelemente A bis E und H, M und L gemäß der in Figur 13B dargestellten Schaltlogik können insgesamt sechsundzwanzig Vorwärtsgänge geschaltet werden. Ein Rückwärtsgang ist nicht vorgesehen. Gegenüber dem genannten Stand der Technik werden bei dieser sechzehnten Ausführungsform eines erfindungsgemäßen Mehrstufengetriebes in besonders vorteilhafter Weise bei gleicher Anzahl von Schaltelementen und Radsätzen sechsundzwanzig anstatt siebzehn Vorwärtsgänge realisiert.

Wegen des äußerst kompakten Getriebeaufbaus und des Entfalls des Rückwärtsganges eignen sich die Ausführungsformen dreizehn bis sechzehn eines erfindungsgemäßen Mehrstufengetriebes besonders als Nabenschaltung für Fahrräder.

Durch geeignete Wahl der Übersetzungen der einzelnen Planetenradsätze kann aus der zwölfte und dreizehnte Ausführungsform des erfindungsgemäßen Mehrstufengetriebes jeweils auch ein Mehrstufengetriebe mit einem, zwei oder mehreren Rückwärtsgängen abgeleitet werden. Dabei reduziert sich die Anzahl der Vorwärtsgänge jeweils um die Anzahl der Rückwärtsgänge. Solche Weiterbildungen des erfindungsgemäßen Mehrstufengetriebes eignen sich insbesondere für vielgängige Sonderantriebe.

In einer Weiterbildung der Erfindung wird vorgeschlagen, dem Nachschaltsatz NS einen zweiten Nachschaltsatz NS' nachzuschalten. Auf diese Weise können - ausgehend von den beschriebenen erfindungsgemäßen Mehrstufengetrieben - durch wenige zusätzliche Bauelemente sehr kompakte Vielganggetriebe abgeleitet werden. Erfindungsgemäß wird vorgeschlagen, diesen zweiten Nachschaltsatz NS' schaltbar auszuführen, mit zwei weiteren gekoppelten Nachschalt-Planetenradsätzen NS1', NS2' und zwei weiteren Schaltelementen M', H'. Dabei ist der zweite Nachschaltsatz NS' zur Erzeugung einer Ausgangsdrehzahl (nns') eingangsseitig einerseits über eines seiner Schaltelemente mit der Antriebswelle 1 (Drehzahl n) des Getriebes verbindbar und andererseits fest mit der Abtriebswelle 3 (Drehzahl nns) des Nachschaltsatzes NS verbunden.

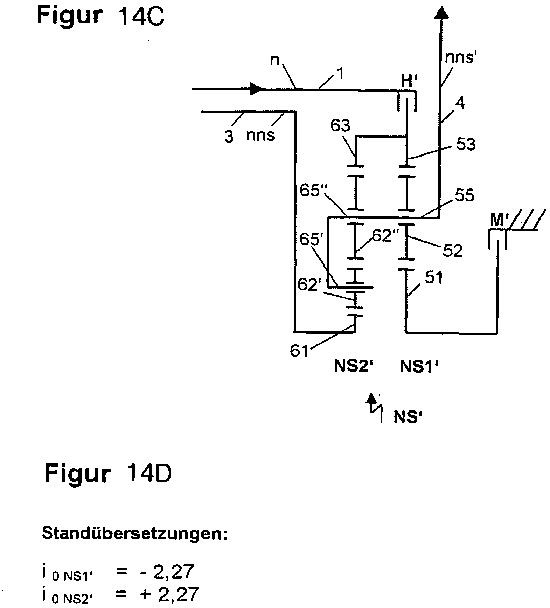

Anhand der Figuren 14A, 14B und 14C, 14D werden nun zwei erfindungsgemäße Ausführungsformen eines zweiten Nachschaltsatzes NS' erläutert, in vorteilhafter Ausbildung als Zweisteg-Vierwellen-Getriebe, mit einem als Bremse ausgebildeten ersten Schaltelement M' und einem als Kupplung ausgebildeten zweiten Schaltelement H'.

Figur 14A zeigt nun eine erste Ausbildung eines erfindungsgemäßen zweiten Nachschaltsatzes NS' mit zwei gekoppelten, über die Schaltelemente M', H' schaltbaren Nachschalt-Planetenradsätzen NS1', NS2'. Der erste Nachschalt-Planetenradsatz NS1' des zweiten Nachschaltsatzes NS' umfaßt dabei ein Sonnenrad 51, ein Hohlrad 53 und einen Steg 55 mit Planetenrädern 52, der zweite Nachschalt-Planetenradsatz NS2' des zweiten Nachschaltsatzes NS' ein Sonnenrad 61, ein Hohlrad 63 und einen Steg 65 mit Planetenrädern 62. Die Sonnenräder 51 und 61 sind miteinander verbunden und über die Bremse M' festsetzbar. Das Hohlrad 53 und der Steg 65 sind miteinander verbunden und über die Kupplung H' mit der Antriebswelle 1 (Drehzahl n) des Getriebes verbindbar. Das Hohlrad 63 ist über die Abtriebswelle 3 (Drehzahl nns) mit dem Abtrieb des Nachschaltsatzes NS verbunden. Der Steg 55 bildet den Abtrieb des zweiten Nachschaltsatzes NS' und ist mit einer Ausgangswelle 4 (Drehzahl nns') des Getriebes verbunden.

Figur 14B zeigt beispielhafte Standübersetzungen dieser ersten Ausbildung eines erfindungsgemäßen zweiten Nachschaltsatzes NS'.

In Figur 14C ist nun eine zweite Ausbildung eines erfindungsgemäßen zweiten Nachschaltsatzes NS' mit zwei gekoppelten, über die Schaltelemente M', H' schaltbaren Nachschalt-Planetenradsätzen NS1', NS2' dargestellt. Der erste Nachschalt-Planetenradsatz NS1' des zweiten Nachschaltsatzes NS' umfaßt dabei ein Sonnenrad 51, ein Hohlrad 53 und einen Steg 55 mit Planetenrädern 52. Der zweite Nachschalt-Planetenradsatz NS2' des zweiten Nachschaltsatzes NS' ist nunmehr als Plus-Getriebe ausgebildet und umfaßt ein Sonnenrad 61, ein Hohlrad 63 und zwei gekoppelte Stege 65' und 65" mit inneren und äußeren Planetenrädern 62' und 62". Das Sonnenrad 51 ist über die Bremse M' festsetzbar. Die Hohlräder 53 und 63 sind miteinander verbunden und über die Kupplung H' mit der Antriebswelle 1 (Drehzahl n) des Getriebes verbindbar. Das Sonnenrad 61 ist über die Abtriebswelle 3 (Drehzahl nns) mit dem Abtrieb des Nachschaltsatzes NS verbunden. Die Stege 55, 65', 65" sind miteinander verbunden, bilden den Abtrieb des zweiten Nachschaltsatzes NS' und sind mit der Ausgangswelle 4 (Drehzahl nns') des Getriebes verbunden.

Figur 14D zeigt beispielhafte Standübersetzungen dieser zweiten Ausbildung eines erfindungsgemäßen zweiten Nachschaltsatzes NS'.

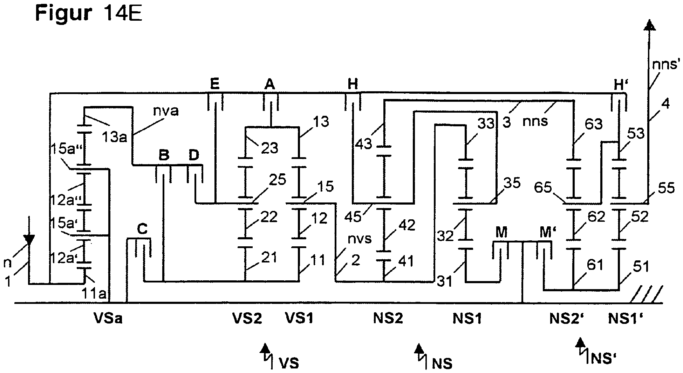

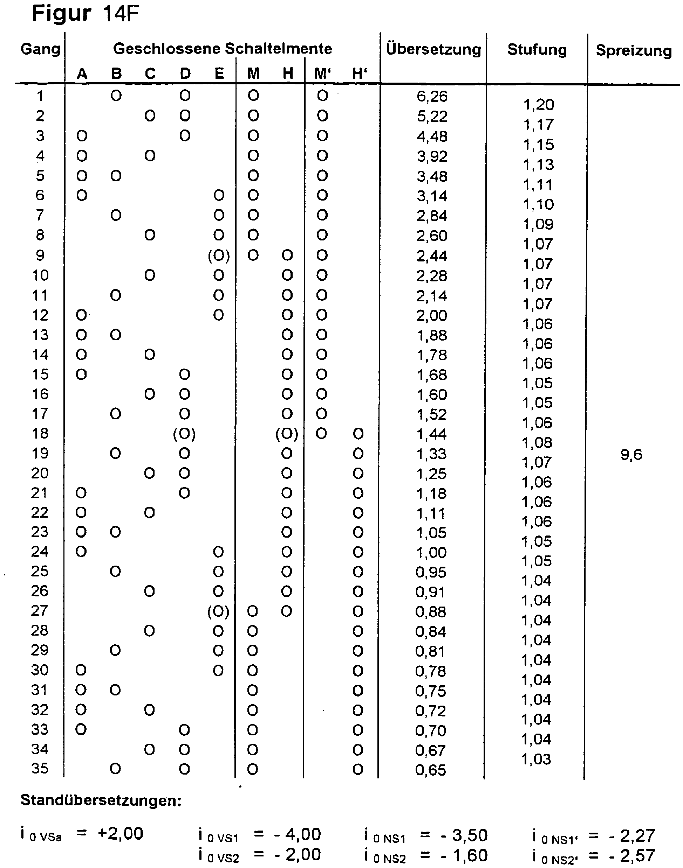

Anhand der Figuren 14E und 14F wird nun eine beispielhafte vierzehnte Ausführungsform eines erfindungsgemäßen Mehrstufengetriebes mit einem zweiten Nachschaltsatz NS' erläutert. Insgesamt weist dieses Getriebe sieben schaltbare Radsätze und neun Schaltelemente auf. Im Vorschaltsatz VS ist den über die Kupplungen A, B, D, E und die Bremse C schaltbaren ersten beiden Vorschalt-Planetenradsätzen VS1 und VS2 hierbei ein zusätzlicher dritter, nicht schaltbarer Vorschalt-Planetenradsatz VSa vorschaltbar, ähnlich wie bei den zuvor beschriebenen Ausführungsformen vierzehn und fünfzehn. Der Nachschaltsatz NS umfaßt wieder einen ersten und einen zweiten Nachschalt-Planetenradsatz NS1, NS2 und ist über eine Bremse M und eine Kupplung H schaltbar. Dem Nachschaltsatz NS ist erfindungsgemäß ein zweiter, zusätzlicher Nachschaltsatz NS' nachgeschaltet, der mit der mit Abtriebsdrehzahl nns rotierenden Abtriebswelle 3 des Nachschaltsatzes NS fest verbunden ist. Der zweite Nachschaltsatz NS' ist dabei als schaltbares Zweisteg-Vierwellen-Getriebe ausgebildet und entspricht der in Figur 14A gezeigten Ausgestaltung, mit einem dritten und einem vierten Nachschalt-Planetenradsatz NS3 und NS4, sowie einem ersten als Bremse und einem zweiten als Kupplung ausgebildeten Schaltelement M' und H'.

Wie in Figur 14E gezeigt, ist die Antriebswelle 1 hierbei mit dem Sonnenrad 11a des dritten Vorschalt-Planetenradsatzes VSa verbunden. Weiterhin ist die Antriebswelle 1 über die Kupplung E mit dem Steg 25 der Planetenräder 22 des zweiten schaltbaren Vorschalt-Planetenradsatzes VS2, über die Kupplung A mit dem Hohlrad 13 des ersten schaltbaren Vorschalt-Planetenradsatzes VS1, über die Kupplung H mit dem Steg 45 der Planetenräder 42 des zweiten Nachschalt-Planetenradsatzes NS2, sowie über die Kupplung H' des zweiten Nachschaltsatzes NS' mit einem Steg 65 mit Planetenrädern 62 des vierten Nachschalt-Planetenradsatzes NS4 verbindbar. Der dritte Vorschalt-Planetenradsatz VSa ist erfindungsgemäß als Plus-Getriebe in Doppelplanetenbauweise ausgebildet. Der Steg 15a' mit den inneren Planetenrädern 12a' und der Steg 15a" mit den äußeren Planetenrädern 12a" des dritten Vorschalt-Planetenradsatzes VSa sind miteinander gekoppelt und festgesetzt. Das Hohlrad 13a des dritten Vorschalt-Planetenradsatzes VSa ist über die Kupplung B mit dem Sonnenrad 21 des zweiten schaltbaren Vorschalt-Planetenradsatzes VS2 und über die Kupplung D mit dem Steg 25 der Planetenräder 22 des zweiten schaltbaren Vorschalt-Planetenradsatzes VS2 verbindbar. Das Sonnenrad 21 des zweiten schaltbaren Vorschalt-Planetenradsatzes VS2 ist mit dem Sonnenrad 11 des ersten schaltbaren Vorschalt-Planetenradsatzes VS1 verbunden und über die Bremse C festsetzbar. Das Hohlrad 13 des ersten schaltbaren Vorschalt-Planetenradsatzes VS1 ist mit dem Hohlrad 23 des zweiten schaltbaren Vorschalt-Planetenradsatzes VS2 verbunden. Der Steg 15 der Planetenräder 12 des ersten schaltbaren Vorschalt-Planetenradsatzes VS1 ist über die mit Drehzahl nvs rotierenden Verbindungswelle 2 mit dem Sonnenrad 41 des zweiten Nachschalt-Planetenradsatzes NS2 und mit dem Hohlrad 33 des ersten Nachschalt-Planetenradsatzes NS1 verbunden. Der Steg 45 der Planetenräder 42 des zweiten Nachschalt-Planetenradsatzes NS2 und der Steg 35 der Planetenräder 32 des ersten Nachschalt-Planetenradsatzes NS1 sind miteinander verbunden. Das Sonnenrad 31 des ersten Nachschalt-Planetenradsatzes NS1 ist über die Bremse M festsetzbar. Das Hohlrad 43 des zweiten Nachschalt-Planetenradsatzes NS2 ist über die mit Drehzahl nns rotierenden Abtriebswelle 3 mit einem Hohlrad 63 des vierten Nachschalt-Planetenradsatzes NS4 verbunden. Ein Sonnenrad 51 des dritten Nachschalt-Planetenradsatzes NS3 und ein Sonnenrad 61 vierten Nachschalt-Planetenradsatzes NS4 sind gekoppelt und über die Bremse M' des zweiten Nachschaltsatzes NS' festsetzbar. Ein Hohlrad 53 des dritten Nachschalt-Planetenradsatzes NS3 und ein Steg 65 mit Planetenrädern 62 des vierten Nachschalt-Planetenradsatzes NS4 sind miteinander verbunden. Ein Steg 55 mit Planetenrädern 52 des dritten Nachschalt-Planetenradsatzes NS3 ist mit einer Ausgangswelle 4 des Getriebes, die mit einer Drehzahl nns' rotiert, verbunden.

Für die Drehzahlen an den Wellen und Schaltelementen gelten die zuvor genannten Drehzahlbedindungen 1. bis 7., sowie zusätzlich:
11. Die Drehzahl an der Antriebswelle 1 und am geschalteten Schaltelement H' ist gleich der Eingangsdrehzahl n der Antriebswelle 1;
12. die Drehzahl am geschalteten Schaltelement M' ist null;
13. die Drehzahl an dem mit der Abtriebswelle 3 verbundenen Zentralrad des zweiten Nachschalt-Planetenradsatzes NS2' des zweiten Nachschaltsatzes NS', die durch geschaltete Schaltelemente H' und M' des zweiten Nachschaltsatzes NS' erzeugt wird, ist gleich/größer als die Drehzahl nns, die durch geschaltete Schaltelemente im Vorschaltsatz VS und/oder Nachschaltsatz NS erzeugt wird.

Figur 14F zeigt die Schaltlogik dieser vierzehnten Ausführungsform eines erfindungsgemäßen Mehrstufengetriebes. Durch selektives Schalten der neun Schaltelemente A, B, C, D, E und H, M sowie H', M' können mit sieben Radsätzen insgesamt fünfunddreißig Vorwärtsgänge mit vorteilhaft enger Stufung ohne komfortschädliche Gruppenschaltung geschaltet werden. Ein Rückwärtsgang ist nicht vorgesehen. Ähnlich wie die erfindungsgemäßen Ausführungsformen gemäß Figuren 10 bis 13, eignet sich diese vierzehnte Ausführungsform eines erfindungsgemäßen Mehrstugfengetriebes besonders als kompakte vielgängige Nabenschaltung für Fahrräder.

Selbstverständlich kann in anderen Weiterbildungen des erfindungsgemäßen Mehrstufengetriebes der zweite schaltbare Nachschaltsatz NS' auch mit anderen Kombinationen aus Vorschalt- und Nachschalt-Planetenradsätzen kombiniert werden, beispielsweise in Verbindung mit einem nicht schaltbaren Vorschaltsatz und einem schaltbaren Nachschaltsatz

### Bezugszeichen

- VS: Vorschaltsatz
- VS1: erster Vorschalt-Planetenradsatz
- VS2: zweiter Vorschalt-Planetenradsatz
- VSa: dritter Vorschalt-Planetenradsatz
- VSb: vierter Vorschalt-Planetenradsatz

- NS: Nachschaltsatz
- NS1: erster Nachschalt-Planetenradsatz
- NS2: zweiter Nachschalt-Planetenradsatz

- NS': zweiter Nachschaltsatz
- NS1': erster Nachschalt-Planetenradsatz des zweiten Nachschaltsatzes-NS'
- NS2': zweiter Nachschalt-Planetenradsatz des zweiten Nachschaltsatzes NS'

- A, B, C, D, E: Schaltelemente des Vorschaltsatzes VS

- M, H, L,: erstes bis drittes Schaltelement des Nachschaltsatzes NS
- M', H': erstes und zweites Schaltelement des zweiten Nachschaltsatzes NS'

- n: Eingangsdrehzahl der Antriebswelle
- nva: Ausgangsdrehzahl des Radsatzes VSa
- nvb: Ausgangsdrehzahl des Radsatzes VSb
- nvs: Ausgangsdrehzahl des Vorschaltsatzes VS
- nns: Ausgangsdrehzahl des Nachschaltsatzes NS
- nns': Ausgangsdrehzahl des zweiten Nachschaltsatzes NS'

- 1: Antriebswelle
- 2: Verbindungswelle
- 3: Abtriebswelle
- 4: Ausgangswelle

- 11: Sonnenrad des Radsatzes VS1
- 12: Planetenrad des Radsatzes VS1
- 12': inneres Planetenrad des Radsatzes VS1
- 12": äußeres Planetenrad des Radsatzes VS1
- 13: Hohlrad des Radsatzes VS1
- 15: Steg des Radsatzes VS1
- 15': Steg der inneren Planetenräder des Radsatzes VS1
- 15": Steg der äußeren Planetenräder des Radsatzes VS1

- 21: Sonnenrad des Radsatzes VS2
- 22: Planetenrad des Radsatzes VS2
- 22': inneres Planetenrad des Radsatzes VS2
- 22": äußeres Planetenrad des Radsatzes VS2
- 23: Hohlrad des Radsatzes VS2
- 25: Steg des Radsatzes VS2
- 25': Steg der inneren Planetenräder des Radsatzes VS2
- 25": Steg der äußeren Planetenräder des Radsatzes VS2

- 11a: Sonnenrad des Radsatzes VSa
- 12a: Planetenrad des Radsatzes Vsa
- 12ak: kleines Planetenrad des Radsatzes Vsa
- 12ag: großes Planetenrad des Radsatzes VSa
- 12a': inneres Planetenrad des Radsatzes VSa
- 12a": äußeres Planetenrad des Radsatzes VSa
- 13a: Hohlrad des Radsatzes VSa
- 15a: Steg des Radsatzes VSa
- 15a': Steg der inneren Planetenräder des Radsatzes VSa
- 15a": Steg der äußeren Planetenräder des Radsatzes VSa

- 11b: Sonnenrad des Radsatzes VSb
- 12b': inneres Planetenrad des Radsatzes VSb
- 12b": äußeres Planetenrad des Radsatzes VSb
- 13b: Hohlrad des Radsatzes VSb
- 15b': Steg der inneren Planetenräder des Radsatzes VSb
- 15b": Steg der äußeren Planetenräder des Radsatzes VSb

- 31: Sonnenrad des Radsatzes NS1
- 32: Planetenrad des Radsatzes NS1'
- 32': inneres Planetenrad des Radsatzes NS1
- 32": äußeres Planetenrad des Radsatzes NS1
- 33: Hohlrad des Radsatzes NS1
- 35: Steg des Radsatzes NS1
- 35': Steg der inneren Planetenräder des Radsatzes NS1
- 35": Steg der äußeren Planetenräder des Radsatzes NS1

- 41: Sonnenrad des Radsatzes NS2
- 42: Planetenrad des Radsatzes NS2
- 42': inneres Planetenrad des Radsatzes NS2
- 42": äußeres Planetenrad des Radsatzes NS2
- 43: Hohlrad des Radsatzes NS2
- 45: Steg des Radsatzes NS2
- 45': Steg der inneren Planetenräder des Radsatzes NS2
- 45": Steg der äußeren Planetenräder des Radsatzes NS2

- 51: Sonnenrad des Radsatzes NS1'
- 52: Planetenrad des Radsatzes NS1'
- 53: Hohlrad des Radsatzes NS1'
- 55: Steg des Radsatzes NS1'

- 61: Sonnenrad des Radsatzes NS2'
- 62: Planetenrad des Radsatzes NS2'
- 62': inneres Planetenrad des Radsatzes NS2'
- 62": äußeres Planetenrad des Radsatzes NS2'
- 63: Hohlrad des Radsatzes NS2'
- 65: Steg des Radsatzes NS2'
- 65': Steg der inneren Planetenräder des Radsatzes NS2'
- 65": Steg der äußeren Planetenräder des Radsatzes NS2'

## Patentansprüche

1. Mehrstufengetriebe,
• mit einer Antriebswelle (1), die mit einem Vorschaltsatz (VS) schaltbar oder fest verbunden ist,
• mit einer Abtriebswelle (3), die mit einem Nachschaltsatz (NS) fest verbunden ist,
• mit auf den Vorschaltsatz (VS) wirkenden Schaltelementen (A, B, C, D, E) und mit auf den Nachschaltsatz (NS) wirkenden Schaltelementen (M, H, L),
• wobei durch selektives Schalten der Schaltelemente (A, B, C, D, E; M, H, L) eine Eingangsdrehzahl (n) der Antriebswelle (1) zur Schaltung von mindestens neun Vorwärtsgängen derart auf die Abtriebswelle (3) übertragbar ist, dass zum Umschalten von einem Gang in den nächstfolgend höheren oder nächstfolgend niedrigeren Gang von den gerade betätigten Schaltelementen jeweils nur ein Schaltelement abgeschaltet und ein weiteres Schaltelement zugeschaltet wird,
• wobei der Nachschaltsatz (NS) über mindestens ein auf den Nachschaltsatz (NS) wirkendes zweites Schaltelement (H) mit der Antriebswelle (1) verbindbar ist,
• wobei der Vorschaltsatz (VS) aus zwei gekoppelten, schaltbaren Vorschalt-Planetenradsätzen (VS1, VS2) und maximal zwei weiteren nicht schaltbaren Vorschalt-Planetenradsätzen (VSa, VSb) gebildet wird,
• und wobei der Nachschaltsatz (NS) nur über eine einzige Verbindungswelle (2) fest mit dem Vorschaltsatz (VS) verbunden ist, **dadurch gekennzeichnet,**
• **dass** diese einzige Verbindungswelle (2) mit einer Ausgangsdrehzahl (nvs) des Vorschaltsatzes (VS) rotiert und nicht mit einem Schaltelement verbunden ist,
• wobei die Ausgangsdrehzahl (nvs) des Vorschaltsatzes (VS) durch selektives Schließen von maximal zwei der auf den Vorschaltsatz (VS) wirkenden Schaltelemente (A, B, C, D, E) erzeugt wird.

2. Mehrstufengetriebe nach Anspruch 1, **dadurch gekennzeichnet, dass** der Nachschaltsatz (NS) als schaltbares Zweisteg-Vierwellen-Getriebe ausgebildet ist, mit einem ersten und einem zweiten Nachschalt-Planetenradsatz (NS1, NS2), mit einem als Bremse ausgebildeten ersten Schaltelement (M) des Nachschaltsatzes (NS) und einem als Kupplung ausgebildeten zweiten Schaltelement (H) des Nachschaltsatzes (NS), wobei der Nachschaltsatz (NS) über das zweite Schaltelement (H) mit der Antriebswelle (1) verbindbar ist.

3. Mehrstufengetriebe nach Anspruch 1, **dadurch gekennzeichnet, dass** der Nachschaltsatz (NS) als schaltbares Zweisteg-Vierwellen-Getriebe ausgebildet ist, mit einem ersten und einem zweiten Nachschalt-Planetenradsatz (NS1, NS2), mit einem als Kupplung ausgebildeten ersten Schaltelement (M) und einem als Kupplung ausgebildeten zweiten Schaltelement (H) und einem als Kupplung oder Bremse ausgebildeten dritten Schaltelement (L), wobei der Nachschaltsatz (NS) über das zweite Schaltelement (H) mit der Antriebswelle (1) verbindbar ist.

4. Mehrstufengetriebe nach Anspruch 1, 2 oder 3, **dadurch gekennzeichnet, dass** die Verbindungswelle (2) zwischen Vorschaltsatz (VS) und Nachschaltsatz (NS) mit einem als Sonnenrad (41) oder Hohlrad (43) ausgebildeten Zentralrad des zweiten Nachschalt-Planetenradsatzes (NS2) verbunden ist.

5. Mehrstufengetriebe nach Anspruch 2 oder 4,
**gekennzeichnet durch** folgende Merkmale:
• der Vorschaltsatz (VS) umfasst vier Schaltelemente (A, B, C, D), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Hohlrad (13) des ersten Vorschalt-Planetenradsatzes (VS1) und der Steg (25) des zweiten Vorschalt-Planetenradsatzes (VS2) sind miteinander verbunden und über das vierte Schaltelement (D) des Vorschaltsatzes (VS) festsetzbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Sonnenrad (41) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden und über das zweite Schaltelement (H) des Nachschaltsatzes (NS) mit der Antriebswelle (1) verbindbar;
• das Hohlrad (43) des zweiten Nachschalt-Planetenradsatzes (NS2) und der Steg (35) des ersten Nachschalt-Planetenradsatzes (NS1) sind miteinander und mit der Abtriebswelle (3) verbunden;
• das Sonnenrad (11) des ersten Vorschalt-Planetenradsatzes (VS1) ist über das erste Schaltelement (A) des Vorschaltsatzes (VS) mit der Antriebswelle (1) verbindbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar und über das dritte Schaltelement (C) des Vorschaltsatzes (VS) festsetzbar und
• das Sonnenrad (31) des ersten Nachschalt-Planetenradsatzes (NS1) ist über das erste Schaltelement (M) des Nachschaltsatzes (NS) festsetzbar.

6. Mehrstufengetriebe nach Anspruch 2 oder 4,
**gekennzeichnet** t durch folgende Merkmale:
• der Vorschaltsatz (VS) umfasst vier Schaltelemente (A, B, D, E), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Hohlrad (13) des ersten Vorschalt-Planetenradsatzes (VS1) und der Steg (25) des zweiten Vorschalt-Planetenradsatzes (VS2) sind miteinander verbunden, über das dritte Schaltelement (D) des Vorschaltsatzes (VS) festsetzbar und über das vierte Schaltelement (E) des Vorschaltsatzes (VS) mit der Antriebswelle (1) verbindbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Hohlrad (43) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden und über das zweite Schaltelement (H) des Nachschaltsatzes (NS) mit der Antriebswelle (1) verbindbar;
• die Sonnenräder (31, 41) des ersten und zweiten Nachschalt-Planetenradsatzes (NS1, NS2) sind miteinander verbunden und über das erste Schaltelement (M) des Nachschaltsatzes (NS) festsetzbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar;
• das Sonnenrad (11) des ersten Vorschalt-Planetenradsatzes (VS1) ist über das erste Schaltelement (A) des Vorschaltsatzes (VS) festsetzbar;
• der Steg (35) des ersten Nachschalt-Planetenradsatzes (NS1) ist mit der Abtriebswelle (3) verbunden.

7. Mehrstufengetriebe nach Anspruch 2 oder 4,
**gekennzeichnet durch** folgende Merkmale:
• der Vorschaltsatz (VS) umfasst vier Schaltelemente (A, B, C, D), einen schaltbaren ersten Vorschalt-Planetenradsatz (VS1) mit einem Sonnenrad (11), einem Hohlrad (13) und zwei gekoppelten Stegen (15', 15") mit inneren und äußeren Planetenrädern (12', 12"), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und zwei gekoppelte Steg (45', 45") mit inneren und äußeren Planetenrädern (42', 42");
• die Hohlräder (13, 23) der beiden Vorschalt-Planetenradsätze (VS1, VS2) sind miteinander und über die Verbindungswelle (2) mit dem Sonnenrad (41) des zweiten Nachschalt-Planetenradsatzes (NS2) verbunden;
• die Stege (15', 15", 25) der beiden Vorschalt-Planetenradsätze (VS1, VS2) sind miteinander verbunden und über das vierte Schaltelement (D) des Vorschaltsatzes (VS) festsetzbar;
• die Hohlräder (33, 43) der beiden Nachschalt-Planetenradsatzes (NS1, NS2) sind miteinander verbunden und über das zweite Schaltelement (H) des Nachschaltsatzes (NS) mit der Antriebswelle (1) verbindbar;
• die Stege (35, 45", 45') der beiden Nachschalt-Planetenradsätze (NS1, NS2) sind miteinander und mit der Abtriebswelle (3) verbunden;
• das Sonnenrad (11) des ersten Vorschalt-Planetenradsatzes (VS1) ist über das erste Schaltelement (A) des Vorschaltsatzes (VS) mit der Antriebswelle (1) verbindbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar und über das dritte Schaltelement (C) des Vorschaltsatzes (VS) festsetzbar und
• das Sonnenrad (31) des ersten Nachschalt-Planetenradsatzes (NS1) ist über das erste Schaltelement (M) des Nachschaltsatzes (NS) festsetzbar.

8. Mehrstufengetriebe nach Anspruch 2 oder 4,
**gekennzeichnet durch** folgende Merkmale:
• der Vorschaltsatz (VS) umfasst fünf Schaltelemente (A, B, C, D, E), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Hohlrad (13) des ersten Vorschalt-Planetenradsatzes (VS1) und der Steg (25) des zweiten Vorschalt-Planetenradsatzes (VS2) sind miteinander verbunden, über das vierte Schaltelement (D) des Vorschaltsatzes (VS) festsetzbar und über das fünfte Schaltelement (E) des Vorschaltsatzes (VS) mit der Antriebswelle (1) verbindbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Sonnenrad (41) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden und über das zweite Schaltelement (H) des Nachschaltsatzes (NS) mit der Antriebswelle (1) verbindbar;
• das Hohlrad (43) des zweiten Nachschalt-Planetenradsatzes (NS2) und der Steg (35) des ersten Nachschalt-Planetenradsatzes (NS1) sind miteinander und mit der Abtriebswelle (3) verbunden;
• das Sonnenrad (11) des ersten Vorschalt-Planetenradsatzes (VS1) ist über das erste Schaltelement (A) des Vorschaltsatzes (VS) festsetzbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar und über das dritte Schaltelement (C) des Vorschaltsatzes (VS) festsetzbar und
• das Sonnenrad (31) des ersten Nachschalt-Planetenradsatzes (NS1) ist über das erste Schaltelement (M) des Nachschaltsatzes (NS) festsetzbar.

9. Mehrstufengetriebe nach Anspruch 2 oder 4,
**gekennzeichnet durch** folgende Merkmale:
• der Vorschaltsatz (VS) umfasst fünf Schaltelemente (A, B, C, D, E), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Hohlrad (13) des ersten Vorschalt-Planetenradsatzes (VS1) und der Steg (25) des zweiten Vorschalt-Planetenradsatzes (VS2) sind miteinander verbunden, über das vierte Schaltelement (D) des Vorschaltsatzes (VS) festsetzbar und über das fünfte Schaltelement (E) des Vorschaltsatzes (VS) mit der Antriebswelle (1) verbindbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Hohlrad (43) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden und über das zweite Schaltelement (H) des Nachschaltsatzes (NS) mit der Antriebswelle (1) verbindbar;
• der Steg (35) des ersten Nachschalt-Planetenradsatzes (NS1) ist mit der Abtriebswelle (3) verbunden;
• das Sonnenrad (11) des ersten Vorschalt-Planetenradsatzes (VS1) ist über das erste Schaltelement (A) des Vorschaltsatzes (VS) mit der Antriebswelle (1) verbindbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar und über das dritte Schaltelement (C) des Vorschaltsatzes (VS) festsetzbar und
• die Sonnenräder (31, 41) der beiden Nachschalt-Planetenradsätze (NS1, NS2) sind miteinander verbunden und über das erste Schaltelement (M) des Nachschaltsatzes (NS) festsetzbar.

10. Mehrstufengetriebe nach Anspruch 2 oder 4,
**gekennzeichnet durch** folgende Merkmale:
• der Vorschaltsatz (VS) umfasst fünf Schaltelemente (A, B, C, D, E), einen schaltbaren ersten Vorschalt-Planetenradsatz (VS1) mit einem Sonnenrad (11), einem Hohlrad (13) und einem Steg (15) mit Planetenrädern (12), einen schaltbaren zweiten Vorschalt-Planetenradsatz (VS2) mit einem Sonnenrad (21), einem Hohlrad (23) und einem Steg (25) mit Planetenrädern (22), sowie einen nicht schaltbaren dritten Vorschalt-Planetenradsatz (Vsa) mit einem Sonnenrad (11a), einem Hohlrad (13a) und zwei gekoppelten Stegen (15a', 15a") mit inneren und äußeren Planetenrädern (12a', 12a");
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Sonnenrad (11a) des dritten Vorschalt-Planetenradsatzes (VSa) ist festgesetzt;
• die gekoppelten Stege (15a', 15a") des dritten Vorschalt-Planetenradsatzes (VSa) sind mit der Antriebswelle (1) verbunden;
• das Sonnenrad (11) des ersten Vorschalt-Planetenradsatzes (VS1) ist über das erste Schaltelement (A) des Vorschaltsatzes (VS) mit der Antriebswelle (1) verbindbar;
• das Sonnenrad (21) des zweiten Vorschalt-Planetenradsatzes (VS2) ist über das zweite Schaltelement (B) des Vorschaltsatzes (VS) mit dem Hohlrad (13a) des dritten Vorschalt-Planetenradsatzes (VSa) verbindbar und über das dritte Schaltelement (C) des Vorschaltsatzes (VS) festsetzbar;
• das Sonnenrad (31) des ersten Nachschalt-Planetenradsatzes (NS1) ist über das erste Schaltelement (M) des Nachschaltsatzes (NS) festsetzbar;
• das Hohlrad (13) des ersten Vorschalt-Planetenradsatzes (VS1) und der Steg (25) des zweiten Vorschalt-Planetenradsatzes (VS2) sind miteinander verbunden, über das vierte Schaltelement (D) des Vorschaltsatzes (VS) festsetzbar, sowie über das fünfte Schaltelement (E) des Vorschaltsatzes (VS) mit der Antriebswelle (1) verbindbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Sonnenrad (41) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden und über das zweite Schaltelement (H) des Nachschaltsatzes (NS) mit der Antriebswelle (1) verbindbar und
• das Hohlrad (43) des zweiten Nachschalt-Planetenradsatzes (NS2) und der Steg (35) des ersten Nachschalt-Planetenradsatzes (NS1) sind miteinander und mit der Abtriebswelle (3) verbunden.

11. Mehrstufengetriebe nach Anspruch 2 oder 4,
**gekennzeichnet durch** folgende Merkmale:
• der Vorschaltsatz (VS) umfasst fünf Schaltelemente (A, B, C, D, E), einen schaltbaren ersten Vorschalt-Planetenradsatz (VS1) mit einem Sonnenrad (11), einem Hohlrad (13) und einem Steg (15) mit Planetenrädern (12), einen schaltbaren zweiten Vorschalt-Planetenradsatz (VS2) mit einem Sonnenrad (21), einem Hohlrad (23) und einem Steg (25) mit Planetenrädern (22), sowie einen nicht schaltbaren dritten Vorschalt-Planetenradsatz (Vsa) mit einem Sonnenrad (11a), einem Hohlrad (13a) und einem Steg (15a) mit kleinen und großen Planetenräder (12ak, 12ag) aufweisenden Stufenplanetenrädern;
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Sonnenrad (11a) des dritten Vorschalt-Planetenradsatzes (VSa) kämmt mit den kleinen Planetenrädern (12ak) des dritten Vorschalt-Planetenradsatzes (VSa) und ist festgesetzt;
• das Hohlrad (13a) des dritten Vorschalt-Planetenradsatzes (VSa) ist mit der Antriebswelle (1) verbunden und kämmt auf den großen Planetenrädern (12ag) des dritten Vorschalt-Planetenradsatzes (VSa);
• die Sonnenräder (11, 21) der beiden Vorschalt-Planetenradsätze (VS1, VS2) sind miteinander verbunden, über das dritte Schaltelement (C) des Vorschaltsatzes (VS) festsetzbar, sowie über das zweite Schaltelement (B) des Vorschaltsatzes (VS) mit dem Steg (15a) des dritten Vorschalt-Planetenradsatzes (VSa) verbindbar;
• die Hohlräder (13, 23) der beiden Vorschalt-Planetenradsätze (VS1, VS2) sind miteinander verbunden und über das erste Schaltelement (A) des Vorschaltsatzes (VS) mit der Antriebswelle (1) verbindbar;
• der Steg (25) des zweiten Vorschalt-Planetenradsatzes (VS2) ist über das vierte Schaltelement (D) des Vorschaltsatzes (VS) mit dem Steg (15a) des dritten Vorschalt-Planetenradsatzes (VSa) sowie über das fünfte Schaltelement (E) des Vorschaltsatzes (VS) mit der Antriebswelle (1) verbindbar;
• die Stege (35, 45) der beiden Nachschalt-Planetenradsätze (NS1, NS2) sind miteinander verbunden und über das zweite Schaltelement (H) des Nachschaltsatzs (NS) mit der Antriebswelle (1) verbindbar;
• das Sonnenrad (41) des zweiten Nachschalt-Planetenradsatzes (NS2) und das Hohlrad (33) des ersten Nachschalt-Planetenradsatzes (NS1) sind miteinander und über die Verbindungswelle (2) mit dem Steg (15) des ersten Vorschalt-Planetenradsatzes (VS1) verbunden;
• das Sonnenrad (31) des ersten Nachschalt-Planetenradsatzes (NS1) ist über das erste Schaltelement (M) des Nachschaltsatzes (NS) festsetzbar und
• das Hohlrad (43) des zweiten Nachschalt-Planetenradsatzes (NS2) ist mit der Abtriebswelle (3) verbunden.

12. Mehrstufengetriebe nach Anspruch 2 oder 4,
**gekennzeichnet durch** folgende Merkmale:
• der Vorschaltsatz (VS) umfasst fünf Schaltelemente (A, B, C, D, E), einen schaltbaren ersten Vorschalt-Planetenradsatz (VS1) mit einem Sonnenrad (11), einem Hohlrad (13) und einem Steg (15) mit Planetenrädern (12), einen schaltbaren zweiten Vorschalt-Planetenradsatz (VS2) mit einem Sonnenrad (21), einem Hohlrad (23) und einem Steg (25) mit Planetenrädern (22), sowie einen nicht schaltbaren dritten Vorschalt-Planetenradsatz (Vsa) mit einem Sonnenrad (11a), einem Hohlrad (13a) und zwei gekoppelten Stegen (15a', 15a") mit inneren und äußeren Planetenrädern (12a', 12a");
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Sonnenrad (11a) des dritten Vorschalt-Planetenradsatzes (VSa) ist festgesetzt;
• die gekoppelten Stege (15a', 15a") des dritten Vorschalt-Planetenradsatzes (VSa) sind mit der Antriebswelle (1) verbunden;
• das Sonnenrad (11) des ersten Vorschalt-Planetenradsatzes (VS) und das Hohlrad (23) des zweiten Vorschalt-Planetenradsatzes (VS2) sind miteinander verbunden und über das erste Schaltelement (A) des Vorschaltsatzes (VS) verbindbar;
• das Sonnenrad (21) des zweiten Vorschalt-Planetenradsatzes (VS2) ist über das zweite Schaltelement (B) des Vorschaltsatzes (VS) mit dem Hohlrad (13a) des dritten Vorschalt-Planetenradsatzes (VSa) und über das dritte Schaltelement (C) des Vorschaltsatzes (VS) festsetzbar;
• das Hohlrad (13) des ersten Vorschalt-Planetenradsatzes (VS1) und der Steg (25) des zweiten Vorschalt-Planetenradsatzes (VS2) sind miteinander verbunden, über das vierte Schaltelement (D) des Vorschaltsatzes (VS) mit dem Hohlrad (13a) des dritten Vorschalt-Planetenradsatzes (VSa) verbindbar, sowie über das fünfte Schaltelement (E) des Vorschaltsatzes (VS) mit der Antriebswelle (1) verbindbar;
• das Sonnenrad (41) des zweiten Nachschalt-Planetenradsatzes (NS2) und das Hohlrad (33) des ersten Nachschalt-Planetenradsatzes (NS1) sind miteinander verbunden und über die Verbindungswelle (2) mit dem Steg (15) des ersten Vorschalt-Planetenradsatzes (VS1) verbunden;
• die Stege (35, 45) der beiden Nachschalt-Planetenradsätze (NS1, NS2) sind miteinander verbunden und über das zweite Schaltelement (H) des Nachschaltsatzes (NS) mit der Antriebswelle (1) verbindbar;
• das Sonnenrad (31) des ersten Nachschalt-Planetenradsatzes (NS1) ist über das erste Schaltelement (M) des Nachschaltsatzes (NS) festsetzbar und
• das Hohlrad (43) des zweiten Nachschalt-Planetenradsatzes (NS2) ist mit der Abtriebswelle (3) verbunden.

13. Mehrstufengetriebe nach Anspruch 3 oder 4,
**gekennzeichnet durch** folgende Merkmale:
• der Vorschaltsatz (VS) umfasst drei Schaltelemente (A, B, D), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Sonnenrad (11) des ersten Vorschalt-Planetenradsatzes (VS1) ist über das erste Schaltelement (A) des Vorschaltsatzes (VS) festsetzbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar;
• das Sonnenrad (31) des ersten Nachschalt-Planetenradsatzes (NS1) ist über das erste Schaltelement (M) des Nachschaltsatzes (NS) mit der Antriebswelle (1) verbindbar;
• das Hohlrad (13) des ersten Vorschalt-Planetenradsatzes (VS1) und der Steg (25) des zweiten Vorschalt-Planetenradsatzes (VS2) und sind miteinander verbunden und über das dritte Schaltelement (D) des Vorschaltsatzes (VS) festsetzbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Sonnenrad (41) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden, über das zweite Schaltelement (H) des Nachschaltsatzes (NS) mit der Antriebswelle (1) verbindbar sowie über das dritte Schaltelement (L) des Nachschaltsatzes (NS) festsetzbar, und
• das Hohlrad (43) des zweiten Nachschalt-Planetenradsatzes (NS2) und der Steg (35) des ersten Nachschalt-Planetenradsatzes (NS1) sind miteinander und mit der Abtriebswelle (3) verbunden.

14. Mehrstufengetriebe nach Anspruch 3 oder 4,
**gekennzeichnet durch** folgende Merkmale:
• der Vorschaltsatz (VS) umfasst vier Schaltelemente (A, B, D, E), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Sonnenrad (11) des ersten Vorschalt-Planetenradsatzes (VS1) ist über das erste Schaltelement (A) des Vorschaltsatzes (VS) festsetzbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar;
• das Sonnenrad (31) des ersten Nachschalt-Planetenradsatzes (NS1) ist über das erste Schaltelement (M) des Nachschaltsatzes (NS) mit der Antriebswelle (1) verbindbar;
• das Hohlrad (13) des ersten Vorschalt-Planetenradsatzes (VS1) und der Steg (25) des zweiten Vorschalt-Planetenradsatzes (VS2) und sind miteinander verbunden, über das dritte Schaltelement (D) des Vorschaltsatzes (VS) festsetzbar, sowie über das vierte Schaltelement (E) des Vorschaltsatzes (VS) mit der Antriebswelle (1) verbindbar;
• das Hohlrad (23) des zweiten Vorschalt-Planetenradsatzes (VS2) und der Steg (15) des ersten Vorschalt-Planetenradsatzes (VS1) sind miteinander und über die Verbindungswelle (2) mit dem Sonnenrad (41) des zweiten Nachschalt-Planetenradsatzes (NS2) verbunden;
• das Hohlrad (33) des ersten Nachschalt-Planetenradsatzes (NS1) und der Steg (45) des zweiten Nachschalt-Planetenradsatzes (NS2) sind miteinander verbunden, über das zweite Schaltelement (H) des Nachschaltsatzes (NS) mit der Antriebswelle (1) verbindbar sowie über das dritte Schaltelement (L) des Nachschaltsatzes (NS) festsetzbar, und
• das Hohlrad (43) des zweiten Nachschalt-Planetenradsatzes (NS2) und der Steg (35) des ersten Nachschalt-Planetenradsatzes (NS1) sind miteinander und mit der Abtriebswelle (3) verbunden.

15. Mehrstufengetriebe nach Anspruch 3 oder 4,
**gekennzeichnet durch** folgende Merkmale:
• der Vorschaltsatz (VS) umfasst vier Schaltelemente (A, B, C, D), einen schaltbaren ersten Vorschalt-Planetenradsatz (VS1) mit einem Sonnenrad (11), einem Hohlrad (13) und einem Steg (15) mit Planetenrädern (12), sowie einen schaltbaren zweiten Vorschalt-Planetenradsatz (VS2) mit einem Sonnenrad (21), einem Hohlrad (23) und einem Steg (25) mit Planetenrädern (22);
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• das Sonnenrad (11) des ersten Vorschalt-Planetenradsatzes (VS1) ist über das erste Schaltelement (A) des Vorschaltsatzes (VS) mit der Antriebswelle (1) verbindbar;
• das Sonnenrad (21) des zweiten Vorschalt-Planetenradsatzes (VS2) ist über das zweite Schaltelement (B) des Vorschaltsatzes (VS) mit der Antriebswelle (1) verbindbar und über das dritte Schaltelement (C) des Vorschaltsatzes (VS) festsetzbar;
• das Hohlrad (13) des ersten Vorschalt-Planetenradsatzes (VS1) und der Steg (25) des zweiten Vorschalt-Planetenradsatzes (VS2) sind miteinander verbunden und über das vierte Schaltelement (D) des Vorschaltsatzes (VS) festsetzbar;
• das Hohlrad (23) des zweiten Vorschalt-Planetenradsatzes (VS2) und der Steg (15) des ersten Vorschalt-Planetenradsatzes (VS1) sind miteinander und mit der Verbindungswelle (2) verbunden;
• die Verbindungswelle (2) ist mit dem Sonnenrad (41) des zweiten Nachschalt-Planetenradsatzes (NS2) und dem an dieses Sonnenrad (41) angekoppelten Hohlrad (33) des ersten Nachschalt-Planetenradsatzes (NS1) verbunden;
• das Sonnenrad (31) des ersten Nachschalt-Planetenradsatzes (NS1) ist über das erste Schaltelement (M) des Nachschaltsatzes (NS) mit der Antriebswelle (1) verbindbar;
• die Stege (35, 45) der beiden Nachschalt-Planetenradsätze (NS1, NS2) sind miteinander verbunden, über das zweite Schaltelement (H) des Nachschaltsatzes (NS) mit der Antriebswelle (1) verbindbar, sowie über das als dritte Schaltlelement (L) des Nachschaltsatzes (NS) festsetzbar, und
• das Hohlrad (43) des zweiten Nachschalt-Planetenradsatzes (NS2) ist mit der Abtriebswelle (3) verbunden

16. Mehrstufengetriebe nach Anspruch 3 oder 4,
**gekennzeichnet durch** folgende Merkmale:
• der Vorschaltsatz (VS) umfasst fünf Schaltelemente (A, B, C, D, E), einen schaltbaren ersten Vorschalt-Planetenradsatz (VS1) mit einem Sonnenrad (11), einem Hohlrad (13) und einem Steg (15) mit Planetenrädern (12), einem schaltbaren zweiten Vorschalt-Planetenradsatz (VS2) mit einem Sonnenrad (21), einem Hohlrad (23) und einem Steg (25) mit Planetenrädern (22), sowie einen nicht schaltbaren dritten Vorschalt-Planetenradsatz (VSa) mit einem Sonnenrad (11a), einem Hohlrad (13a) und zwei gekoppelten Stegen (15a', 15a") mit inneren und äußeren Planetenrädern (12a', 12a");
• der schaltbare erste Nachschalt-Planetenradsatz (NS1) umfasst ein Sonnenrad (31), ein Hohlrad (33) und einen Steg (35) mit Planetenrädern (32);
• der schaltbare zweite Nachschalt-Planetenradsatz (NS2) umfasst ein Sonnenrad (41), ein Hohlrad (43) und einen Steg (45) mit Planetenrädern (42);
• die Antriebswelle (1) ist mit dem Sonnenrad (11a) des dritten Vorschalt-Planetenradsatzes (VSa) verbunden;
• die Antriebswelle (1) ist über das erste Schaltelement (A) des Vorschaltsatzes (VS) mit dem Sonnenrad (11) des ersten Vorschalt-Planetenradsatzes (VS1) verbindbar;
• die Antriebswelle (1) ist über das fünfte Schaltelement (E) des Vorschaltsatzes (VS) mit dem Steg (25) des zweiten Vorschalt-Planetenradsatzes (VS2) verbindbar;
• die Antriebswelle (1) ist über das zweite Schaltelement (H) des Nachschaltsatzes (NS) mit dem Steg (45) des zweiten Nachschalt-Planetenradsatzes (NS2) verbindbar;
• die gekoppelten Stege (15a', 15a") des dritten Vorschalt-Planetenradsatzes (VSa) sind festgesetzt;
• das Sonnenrad (21) des zweiten Vorschalt-Planetenradsatzes (VS2) ist über das dritte Schaltelement (C) des Vorschaltsatzes (VS) festsetzbar, insbesondere **durch** den Steg (15a") der äußeren Planetenräder (12a") des dritten Vorschalt-Planetenradsatzes (VSa);
• das Hohlrad (13a) des dritten Vorschalt-Planetenradsatzes (VSa) ist über das zweite Schaltelement (B) des Vorschaltsatzes (VS) mit dem Sonnenrad (21) des zweiten Vorschalt-Planetenradsatzes (VS2) verbindbar;
• das Hohlrad (13a) des dritten Vorschalt-Planetenradsatzes (VSa) ist über das vierte Schaltelement (D) des Vorschaltsatzes (VS) mit dem Steg (25) des zweiten Vorschalt-Planetenradsatzes (VS2) verbindbar;
• das Hohlrad (13a) des dritten Vorschalt-Planetenradsatzes (VSa) ist über das dritte Schaltelement (L) des Nachschaltsatzes (NS) mit dem Steg (45) des zweiten Nachschalt-Planetenradsatzes (NS2) verbindbar;
• das Hohlrad (13a) des dritten Vorschalt-Planetenradsatzes (VSa) ist über das erste Schaltelement (M) des Nachschaltsatzes (NS) mit dem Sonnenrad (31) des ersten Nachschalt-Planetenradsatzes (NS1) verbindbar;
• der Steg (25) des zweiten Vorschalt-Planetenradsatzes (VS2) und das Hohlrad (13) des ersten Vorschalt-Planetenradsatzes (VS1) sind miteinander verbunden;
• das Sonnenrad (11) des ersten Vorschalt-Planetenradsatzes (VS1) und das Hohlrad (23) des zweiten Vorschalt-Planetenradsatzes (VS2) sind miteinander verbunden;
• der Steg (15) des ersten Vorschalt-Planetenradsatzes (VS1) ist über die Verbindungswelle (2) mit dem Sonnenrad (41) des zweiten Nachschalt-Planetenradsatzes (NS2) verbunden;
• der Steg (45) des zweiten Nachschalt-Planetenradsatzes (NS2) ist mit dem Hohlrad (33) des ersten Nachschalt-Planetenradsatzes (NS1) verbunden, und
• der Steg (35) des ersten Nachschalt-Planetenradsatzes (NS1) ist mit dem Hohlrad (43) des zweiten Nachschalt-Planetenradsatzes (NS2) und mit der Abtriebswelle (3) verbunden.

17. Mehrstufengetriebe nach Anspruch 3 oder 4,
**gekennzeichnet durch** folgende Merkmale:
• der Vorschaltsatz (VS) umfasst einen schaltbaren ersten Vorschalt-Planetenradsatz (VS1), einen schaltbaren zweiten Vorschalt-Planetenradsatz (VS2), einen nicht schaltbaren dritten Vorschalt-Planetenradsatz (Vsa), einen nicht schaltbaren vierten Vorschalt-Planetenradsatz (Vsb) und fünf Schaltelemente (A, B, C, D, E);
• die Antriebswelle (1) ist mit einem Sonnenrad (11 b) des vierten Vorschalt-Planetenradsatzes (VSb) verbunden;
• die Antriebswelle (1) ist über das zweite Schaltelement (B) des Vorschaltsatzes (VS) mit einem Sonnenrad (21) des zweiten schaltbaren Vorschalt-Planetenradsatzes (VS2) verbindbar;
• die Antriebswelle (1) ist über das fünfte Schaltelement (E) des Vorschaltsatzes (VS) mit einem Steg (25) mit Planetenrädern (22) des zweiten schaltbaren Vorschalt-Planetenradsatzes (VS2) verbindbar;
• die Antriebswelle (1) ist über das zweite Schaltelement (H) des Nachschaltsatzes (NS) mit einem Steg (45) mit Planetenrädern (42) des zweiten Nachschalt-Planetenradsatzes (NS2) verbindbar;
• ein Sonnenrad (11a) des dritten Vorschalt-Planetenradsatzes (VSa) ist festgesetzt;
• ein Steg (15a) mit Planetenrädern (12a) des dritten Vorschalt-Planetenradsatzes (VSa) ist mit einem Steg (15b") mit äußeren Planetenrädern (12b") des vierten Vorschalt-Planetenradsatzes (VSb) verbunden;
• der Steg (15a) des dritten Vorschalt-Planetenradsatzes (VSa) ist mit einem Steg (15b') mit inneren Planetenrädern (12b') des vierten Vorschalt-Planetenradsatzes (VSb) verbunden;
• der Steg (15a) des dritten Vorschalt-Planetenradsatzes (VSa) ist über das dritte Schaltelement (C) des Vorschaltsatzes (VS) mit dem Sonnenrad (21) des zweiten schaltbaren Vorschalt-Planetenradsatzes (VS2) verbindbar;
• der Steg (15a) des dritten Vorschalt-Planetenradsatzes (VSa) ist über das vierte Schaltelement (D) des Vorschaltsatzes (VS) mit dem Steg (25) des zweiten schaltbaren Vorschalt-Planetenradsatzes (VS2) verbindbar;
• der Steg (15a) des dritten Vorschalt-Planetenradsatzes (VSa) ist über das dritte Schaltelement (L) des Nachschaltsatzes (NS) mit einem Steg (35") mit äußeren Planetenrädern (32") des ersten Nachschalt-Planetenradsatzes (NS1) verbindbar;
• die Planetenräder (12a) des dritten Vorschalt-Planetenradsatzes (VSa) und die äußeren Planetenräder (12b") des vierten Vorschalt-Planetenradsatzes (VSb) sind zusammengefasst;
• ein Hohlrad (13a) des dritten Vorschalt-Planetenradsatzes (VSa) und ein Hohlrad (13b) des vierten Vorschalt-Planetenradsatzes (VSb) sind miteinander verbunden;
• die Hohlräder (13a, 13b) des dritten und vierten Vorschalt-Planetenradsatzes (Vsa, VSb) sind über das erste Schaltelement (A) des Vorschaltsatzes (VS) mit einem Sonnenrad (11) des ersten schaltbaren Vorschalt-Planetenradsatzes (VS1) verbindbar;
• die Hohlräder (13a, 13b) des dritten und vierten Vorschalt-Planetenradsatzes (Vsa, VSb) sind über das erste Schaltelement (M) des Nachschaltsatzes (NS) mit einem Sonnenrad (31) des ersten Nachschalt-Planetenradsatzes (NS1) verbindbar;
• das Sonnenrad (11) des ersten schaltbaren Vorschalt-Planetenradsatzes (VS1) ist mit einem Hohlrad (23) des zweiten schaltbaren Vorschalt-Planetenradsatzes (VS2) verbunden;
• der Steg (25) des zweiten schaltbaren Vorschalt-Planetenradsatzes (VS2) ist mit einem Hohlrad (13) des ersten schaltbaren Vorschalt-Planetenradsatzes (VS1) verbunden;
• ein Steg (15) mit Planetenrädern (12) des ersten schaltbaren Vorschalt-Planetenradsatzes (VS1) ist über die Verbindungswelle (2) mit einem Sonnenrad (41) des zweiten Nachschalt-Planetenradsatzes (NS2) verbunden;
• der Steg (35") mit den äußeren Planetenrädern (32") des ersten NachschaltPlanetenradsatzes (NS1) und ein Steg (35') mit inneren Planetenrädern (32') des ersten Nachschalt-Planetenradsatzes (NS1) und der Steg (45) mit den Planetenrädern (42) des zweiten Nachschalt-Planetenradsatzes (NS2) sind miteinander verbunden;
• die äußeren Planetenräder (32") des ersten Nachschalt-Planetenradsatzes (NS1) und die Planetenräder (42) des zweiten Nachschalt-Planetenradsatzes (NS2) sind zusammengefasst;
• ein Hohlrad (33) des ersten Nachschalt-Planetenradsatzes (NS1) und ein Hohlrad (43) des zweiten Nachschalt-Planetenradsatzes (NS2) sind miteinander verbunden;
• die Hohlräder (33, 43) des ersten und zweiten Nachschalt-Planetenradsatzes (NS1, NS2) sind mit der Abtriebswelle (3) verbunden.

18. Mehrstufengetriebe nach einem der vorigen Ansprüche,
**dadurch gekennzeichnet,**
**dass** dem Nachschaltsatz (NS) ein zweiter als schaltbares Zweisteg-Vierwellen-Getriebe ausgebildeter Nachschaltsatz (NS') nachgeschaltet ist, und dass mindestens achtzehn Vorwärtsgänge erzeugt werden,
wobei der zweite Nachschaltsatz (NS') aus zwei schaltbaren Nachschalt-Planetenradsätzen (NS1', NS2'), einem als Bremse ausgebildeten ersten Schaltelement (M') und einem zweiten als Kupplung ausgebildeten Schaltelement (H') gebildet wird, eingangsseitig fest mit der mit Ausgangsdrehzahl (nns) des Nachschaltsatzes (NS) rotierende Abtriebswelle (3) verbunden ist und über das zweite Schaltelemente (H') des zweiten Nachschaltsatzes (NS') mit der Antriebswelle (1) verbindbar ist, sowie ausgangsseitig mit einer Ausgangswelle (4) des Mehrstufengetriebes verbunden ist.

19. Mehrstufengetriebe nach Anspruch 18,
**gekennzeichnet durch** folgende Merkmale:
• der erste Nachschalt-Planetenradsatz (NS1') des zweiten Nachschaltsatzes (NS') umfasst ein Sonnenrad (51), ein Hohlrad (53) und einen Steg (55) mit Planetenrädern (52);
• der zweite Nachschalt-Planetenradsatz (NS2') des zweiten Nachschaltsatzes (NS') umfasst ein Sonnenrad (61), ein Hohlrad (63) und einen Steg (65) mit Planetenrädern (62);
• die Sonnenräder (51, 61) der beiden Nachschalt-Planetenradsätze (NS1', NS2') des zweiten Nachschaltsatzes (NS') sind miteinander verbunden und über das erste Schaltelement (M') des zweiten Nachschaltsatzes (NS') festsetzbar;
• das Hohlrad (53) des ersten Nachschalt-Planetenradsatzes (NS1') des zweiten Nachschaltsatzes (NS') und der Steg (65) des zweiten Nachschalt-Planetenradsatzes (NS2') des zweiten Nachschaltsatzes (NS') sind miteinander verbunden und über das zweite Schaltelement (H') des zweiten Nachschaltsatzes (NS') mit der Antriebswelle (1) verbindbar;
• das Hohlrad (63) des zweiten Nachschalt-Planetenradsatzes (NS2') des zweiten Nachschaltsatzes (NS') ist mit der Abtriebswelle (3) verbunden, und
• der Steg (55) des ersten Nachschaltplanetenradsatzes (NS1') des zweiten Nachschaltsatzes (NS') ist mit der Ausgangswelle (4) verbunden.

20. Mehrstufengetriebe nach Anspruch 18,
**gekennzeichnet durch** folgende Merkmale:
• der erste Nachschalt-Planetenradsatz (NS1') des zweiten Nachschaltsatzes (NS') umfasst ein Sonnenrad (51), ein Hohlrad (53) und einen Steg (55) mit Planetenrädern (52);
• der zweite Nachschalt-Planetenradsatz (NS2') des zweiten Nachschaltsatzes (NS') umfasst ein Sonnenrad (61), ein Hohlrad (63) und zwei gekoppelte Stege (65', 65") mit inneren und äußeren Planetenrädern (62', 62");
• das Sonnenrad (51) des ersten Nachschalt-Planetenradsatzes (NS1') des zweiten Nachschaltsatzes (NS') ist über das erste Schaltelement (M') des zweiten Nachschaltsatzes (NS') festsetzbar;
• die Hohlräder (53, 63) der beiden Nachschalt-Planetenradsätze (NS1', NS2') des zweiten Nachschaltsatzes (NS') sind miteinander verbunden und über das zweite Schaltelement (H') des zweiten Nachschaltsatzes (NS') mit der Antriebswelle (1) verbindbar;
• das Sonnenrad (61) des zweiten Nachschalt-Planetenradsatzes (NS2') des zweiten Nachschaltsatzes (NS') ist mit der Abtriebswelle (3) verbunden, und
• die Stege (55, 65', 65") der beiden Nachschalt-Planetenradsätze (NS1', NS2') des zweiten Nachschaltsatzes (NS') sind miteinander und mit der Ausgangswelle (4) verbunden.

21. Mehrstufengetriebe nach Anspruch 19,
**gekennzeichnet durch** folgende Merkmale:
• die Antriebswelle (1) ist mit einem Sonnenrad (11a) des dritten Vorschalt-Planetenradsatzes (VSa) verbunden;
• die Antriebswelle (1) ist über das fünfte Schaltelement (E) des Vorschaltsatzes (VS) mit einem Steg (25) mit Planetenrädern (22) des zweiten Vorschalt-Planetenradsatzes (VS2) verbindbar;
• die Antriebswelle (1) ist über das erste Schaltelement (A) des Vorschaltsatzes (VS) mit einem Hohlrad (13) des ersten Vorschalt-Planetenradsatzes (VS1) verbindbar;
• die Antriebswelle (1) ist über das zweite Schaltelement (H) des Nachschaltsatzes (NS) mit einem Steg (45) mit Planetenrädern (42) des zweiten Nachschalt-Planetenradsatzes (NS2) verbindbar;
• der dritte Vorschalt-Planetenradsatz (VSa) ist als Plus-Getriebe ausgebildet;
• ein Steg (15a') mit inneren Planetenrädern (12a') des dritten Vorschalt-Planetenradsatzes (VSa) und ein Steg (15a") mit äußeren Planetenrädern (12a") des dritten Vorschalt-Planetenradsatzes (VSa) sind miteinander verbunden und festgesetzt;
• ein Hohlrad (13a) des dritten Vorschalt-Planetenradsatzes (VSa) ist über das zweite Schaltelement (B) des Vorschaltsatzes (VS) mit einem Sonnenrad (21) des zweiten Vorschalt-Planetenradsatzes (VS2) verbindbar;
• das Hohlrad (13a) des dritten Vorschalt-Planetenradsatzes (VSa) ist über das vierte Schaltelement (D) des Vorschaltsatzes (VS) mit dem Steg (25) des zweiten Vorschalt-Planetenradsatzes (VS2) verbindbar;
• das Sonnenrad (21) des zweiten Vorschalt-Planetenradsatzes (VS2) ist mit einem Sonnenrad (11) des ersten Vorschalt-Planetenradsatzes (VS1) verbunden;
• das Sonnenrad (21) des zweiten Vorschalt-Planetenradsatzes (VS2) ist über das drittes Schaltelement (C) des Vorschaltsatzes (VS) festsetzbar;
• das Hohlrad (13) des ersten Vorschalt-Planetenradsatzes (VS1) ist mit einem Hohlrad (23) des zweiten Vorschalt-Planetenradsatzes (VS2) verbunden;
• ein Steg (15) mit Planetenrädern (12) des ersten Vorschalt-Planetenradsatzes (VS1) ist über die Verbindungswelle (2) mit einem Sonnenrad (41) des zweiten Nachschalt-Planetenradsatzes (NS2) verbunden;
• der Steg (15) des ersten Vorschalt-Planetenradsatzes (VS1) ist mit einem Hohlrad (33) des ersten Nachschalt-Planetenradsatzes (NS1) verbunden;
• der Steg (45) des zweiten Nachschalt-Planetenradsatzes (NS2) und ein Steg (35) mit Planetenrädern (32) des ersten Nachschalt-Planetenradsatzes (NS1) sind miteinander verbunden;
• ein Sonnenrad (31) des ersten Nachschalt-Planetenradsatzes (NS1) ist über das erste Schaltelement (M) des Nachschaltsatzes (NS) festsetzbar, und
• ein Hohlrad (43) des zweiten Nachschalt-Planetenradsatzes (NS2) ist über die Abtriebswelle (3) mit dem zweiten Nachschaltsatz (NS') verbunden.

## Claims

1. Multistep reduction gear, comprising
• an input shaft (1) which is connected shiftably or rigidly to an input gear set (VS),
• an output shaft (3) which is connected rigidly to an output gear set (NS),
• shifting elements (A, B, C, D, E) acting on the input gear set (VS) and shifting elements (M, H, L) acting on the output gear set (NS),
• wherein, for shifting at least nine forward gears, an input rotational speed (n) of the input shaft (1) can be transmitted to the output shaft (3) by selective shifting of the shifting elements (A, B, C, D, E; M, H, L) in such a manner that, in order to shift from a gear to the next higher or next lower gear, in each case only one shifting element of the shifting elements just activated is disengaged and a further shifting element is engaged,
• wherein the output gear set (NS) is connectable to the input shaft (1) via at least one second shifting element (H) acting on the output gear set (NS),
• wherein the input gear set (VS) is formed by two coupled, shiftable input planetary gear sets (VS1, VS2) and not more than two further non-shiftable input planetary gear sets (VSa, VSb),
• and wherein the output gear set (NS) is connected rigidly to the input gear set (VS) only via a single connecting shaft (2),
**characterized in that**
• said single connecting shaft (2) rotates with an output rotational speed (nvs) of the input gear set (VS) and is not connected to a shifting element,
• the output rotational speed (nvs) of the input gear set (VS) being generated by selective engagement of not more than two of the shifting elements (A, B, C, D, E) acting on the input gear set (VS).

2. Multistep reduction gear according to Claim 1, **characterized in that** the output gear set (NS) is in the form of a shiftable two-carrier four-shaft transmission, comprising a first and a second output planetary gear set (NS1, NS2), a first shifting element (M), in the form of a brake, of the output gear set (NS) and a second shifting element (H), in the form of a clutch, of the output gear set (NS), the output gear set (NS) being connectable to the input shaft (1) via the second shifting element (H).

3. Multistep reduction gear according to Claim 1, **characterized in that** the output gear set (NS) is in the form of a two-carrier four-shaft transmission, comprising a first and a second output planetary gear set (NS1, NS2), a first shifting element (M) in the form of a clutch and a second shifting element (H) in the form of a clutch and a third shifting element (L) in the form of a clutch or a brake, the output gear set (NS) being connectable to the input shaft (1) via the second shifting element (H).

4. Multistep reduction gear according to Claim 1, 2, or 3, **characterized in that** the connecting shaft (2) between input gear set (VS) and output gear set (NS) is connected to a central gear, in the form of a sun gear (41) or a ring gear (43), of the second output planetary gear set (NS2).

5. Multistep reduction gear according to Claim 2 or 4, **characterized by** the following features:
• the input gear set (VS) comprises four shifting elements (A, B, C, D), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the ring gear (13) of the first input planetary gear set (VS1) and the carrier (25) of the second input planetary gear set (VS2) are connected to one another and are lockable by means of the fourth shifting element (D) of the input gear set (VS);
• the ring gear (23) of the second input planetary gear set (VS2) and the carrier (15) of the first input planetary gear set (VS1) are connected to one another and, via the connecting shaft (2), to the sun gear (41) of the second output planetary gear set (NS2);
• the ring gear (33) of the first output planetary gear set (NS1) and the carrier (45) of the second output planetary gear set (NS2) are connected to one another and are connectable to the input shaft (1) via the second shifting element (H) of the output gear set (NS) ;
• the ring gear (43) of the second output planetary gear set (NS2) and the carrier (35) of the first output planetary gear set (NS1) are connected to one another and to the output shaft (3);
• the sun gear (11) of the first input planetary gear set (VS1) is connectable to the input shaft (1) via the first shifting element (A) of the input gear set (VS) ;
• the sun gear (21) of the second input planetary gear set (VS2) is connectable to the input shaft (1) via the second shifting element (B) of the input gear set (VS) and is lockable by means of the third shifting element (C) of the input gear set (VS), and
• the sun gear (31) of the first output planetary gear set (NS1) is lockable by means of the first shifting element (M) of the output gear set (NS).

6. Multistep reduction gear according to Claim 2 or 4, **characterized by** the following features:
• the input gear set (VS) comprises four shifting elements (A, B, D, E), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the ring gear (13) of the first input planetary gear set (VS1) and the carrier (25) of the second input planetary gear set (VS2) are connected to one another, are lockable by means of the third shifting element (D) of the input gear set (VS) and are connectable to the input shaft (1) via the fourth shifting element (E) of the input gear set (VS);
• the ring gear (23) of the second input planetary gear set (VS2) and the carrier (15) of the first input planetary gear set (VS1) are connected to one another and, via the connecting shaft (2), to the ring gear (43) of the second output planetary gear set (NS2);
• the ring gear (33) of the first output planetary gear set (NS1) and the carrier (45) of the second output planetary gear set (NS2) are connected to one another and are connectable to the input shaft (1) via the second shifting element (H) of the output gear set (NS) ;
• the sun gears (31, 41) of the first and second output planetary gear sets (NS1, NS2) are connected to one another and are lockable by means of the first shifting element (M) of the output gear set (NS) ;
• the sun gear (21) of the second input planetary gear set (VS2) is connectable to the input shaft (1) via the second shifting element (B) of the input gear set (VS);
• the sun gear (11) of the first input planetary gear set (VS1) is lockable by means of the first shifting element (A) of the input gear set (VS);
• the carrier (35) of the first output planetary gear set (NS1) is connected to the output shaft (3).

7. Multistep reduction gear according to Claim 2 or 4, **characterized by** the following features:
• the input gear set (VS) comprises four shifting elements (A, B, C, D), a shiftable first input planetary gear set (VS1) having a sun gear (11), a ring gear (13) and two coupled carriers (15', 15") with internal and external planet gears (12', 12"), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and two coupled carriers (45', 45") with internal and external planet gears (42', 42");
• the ring gears (13, 23) of the two input planetary gear sets (VS1, VS2) are connected to one another and, via the connecting shaft (2), to the sun gear (41) of the second output planetary gear set (NS2);
• the carriers (15', 15", 25) of the two input planetary gear sets (VS1, VS2) are connected to one another and are lockable by means of the fourth shifting element (D) of the input gear set (VS);
• the ring gears (33, 43) of the two output planetary gear sets (NS1, NS2) are connected to one another and are connectable to the input shaft (1) via the second shifting element (H) of the output gear set (NS) ;
• the carriers (35, 45", 45') of the two output planetary gear sets (NS1, NS2) are connected to one another and to the output shaft (3);
• the sun gear (11) of the first input planetary gear set (VS1) is connectable to the input shaft (1) via the first shifting element (A) of the input gear set (VS) ;
• the sun gear (21) of the second input planetary gear set (VS2) is connectable to the input shaft (1) via the second shifting element (B) of the input gear set (VS) and is lockable by means of the third shifting element (C) of the input gear set (VS), and
• the sun gear (31) of the first output planetary gear set (NS1) is lockable by means of the first shifting element (M) of the output gear set (NS).

8. Multistep reduction gear according to Claim 2 or 4, **characterized by** the following features:
• the input gear set (VS) comprises five shifting elements (A, B, C, D, E), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the ring gear (13) of the first input planetary gear set (VS1) and the carrier (25) of the second input planetary gear set (VS2) are connected to one another, are lockable by means of the fourth shifting element (D) of the input gear set (VS) and are connectable to the input shaft (1) via the fifth shifting element (E) of the input gear set (VS);
• the ring gear (23) of the second input planetary gear set (VS2) and the carrier (15) of the first input planetary gear set (VS1) are connected to one another and, via the connecting shaft (2), to the sun gear (41) of the second output planetary gear set (NS2);
• the ring gear (33) of the first output planetary gear set (NS1) and the carrier (45) of the second output planetary gear set (NS2) are connected to one another and are connectable to the input shaft (1) via the second shifting element (H) of the output gear set (NS) ;
• the ring gear (43) of the second output planetary gear set (NS2) and the carrier (35) of the first output planetary gear set (NS1) are connected to one another and to the output shaft (3);
• the sun gear (11) of the first input planetary gear set (VS1) is lockable by means of the first shifting element (A) of the input gear set (VS);
• the sun gear (21) of the second input planetary gear set (VS2) is connectable to the input shaft (1) via the second shifting element (B) of the input gear set (VS) and is lockable by means of the third shifting element (C) of the input gear set (VS), and
• the sun gear (31) of the first output planetary gear set (NS1) is lockable by means of the first shifting element (M) of the output gear set (NS).

9. Multistep reduction gear according to Claim 2 or 4, **characterized by** the following features:
• the input gear set (VS) comprises five shifting elements (A, B, C, D, E), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the ring gear (13) of the first input planetary gear set (VS1) and the carrier (25) of the second input planetary gear set (VS2) are connected to one another, are lockable by means of the fourth shifting element (D) of the input gear set (VS) and are connectable to the input shaft (1) via the fifth shifting element (E) of the input gear set (VS);
• the ring gear (23) of the second input planetary gear set (VS2) and the carrier (15) of the first input planetary gear set (VS1) are connected to one another and, via the connecting shaft (2), to the ring gear (43) of the second output planetary gear set (NS2);
• the ring gear (33) of the first output planetary gear set (NS1) and the carrier (45) of the second output planetary gear set (NS2) are connected to one another and are connectable to the input shaft (1) via the second shifting element (H) of the output gear set (NS) ;
• the carrier (35) of the first output planetary gear set (NS1) is connected to the output shaft (3);
• the sun gear (11) of the first input planetary gear set (VS1) is connectable to the input shaft (1) via the first shifting element (A) of the input gear set (VS) ;
• the sun gear (21) of the second input planetary gear set (VS2) is connectable to the input shaft (1) via the second shifting element (B) of the input gear set (VS) and is lockable by means of the third shifting element (C) of the input gear set (VS), and
• the sun gears (31, 41) of the two output planetary gear sets (NS1, NS2) are connected to one another and are lockable by means of the first shifting element (M) of the output gear set (NS).

10. Multistep reduction gear according to Claim 2 or 4,
**characterized by** the following features:
• the input gear set (VS) comprises five shifting elements (A, B, C, D, E), a shiftable first input planetary gear set (VS1) having a sun gear (11), a ring gear (13) and a carrier (15) with planet gears (12), a shiftable second input planetary gear set (VS2) having a sun gear (21), a ring gear (23) and a carrier (25) with planet gears (22), and a non-shiftable third input planetary gear set (VSa) having a sun gear (11a), a ring gear (13a) and two coupled carriers (15a', 15a") with internal and external planet gears (12a', 12a");
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the sun gear (11a) of the third input planetary gear set (VSa) is locked;
• the coupled carriers (15a', 15a") of the third input planetary gear set (VSa) are connected to the input shaft (1) ;
• the sun gear (11) of the first input planetary gear set (VS1) is connectable to the input shaft (1) via the first shifting element (A) of the input gear set (VS) ;
• the sun gear (21) of the second input planetary gear set (VS2) is connectable to the ring gear (13a) of the third input planetary gear set (VSa) via the second shifting element (B) of the input gear set (VS) and is lockable by means of the third shifting element (C) of the input gear set (VS);
• the sun gear (31) of the first output planetary gear set (NS1) is lockable by means of the first shifting element (M) of the output gear set (NS);
• the ring gear (13) of the first input planetary gear set (VS1) and the carrier (25) of the second input planetary gear set (VS2) are connected to one another, are lockable by means of the fourth shifting element (D) of the input gear set (VS) and are connectable to the input shaft (1) via the fifth shifting element (E) of the input gear set (VS);
• the ring gear (23) of the second input planetary gear set (VS2) and the carrier (15) of the first input planetary gear set (VS1) are connected to one another and, via the connecting shaft (2), to the sun gear (41) of the second output planetary gear set (NS2);
• the ring gear (33) of the first output planetary gear set (NS1) and the carrier (45) of the second output planetary gear set (NS2) are connected to one another and are connectable to the input shaft (1) via the second shifting element (H) of the output gear set (NS), and
• the ring gear (43) of the second output planetary gear set (NS2) and the carrier (35) of the first output planetary gear set (NS1) are connected to one another and to the output shaft (3).

11. Multistep reduction gear according to Claim 2 or 4,
**characterized by** the following features:
• the input gear set (VS) comprises five shifting elements (A, B, C, D, E), a shiftable first input planetary gear set (VS1) having a sun gear (11), a ring gear (13) and a carrier (15) with planet gears (12), a shiftable second input planetary gear set (VS2) having a sun gear (21), a ring gear (23) and a carrier (25) with planet gears (22), and a non-shiftable third input planetary gear set (VSa) having a sun gear (11a), a ring gear (13a) and a carrier (15a) with stepped planet gears having small and large planet gears (12ak, 12ag);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the sun gear (11a) of the third input planetary gear set (VSa) meshes with the small planet gears (12ak) of the third input planetary gear set (VSa) and is locked;
• the ring gear (13a) of the third input planetary gear set (VSa) is connected to the input shaft (1) and meshes with the large planet gears (12ag) of the third input planetary gear set (VSa);
• the sun gears (11, 21) of the two input planetary gear sets (VS1, VS2) are connected to one another, are lockable by means of the third shifting element (C) of the input gear set (VS), and are connectable to the carrier (15a) of the third input planetary gear set (VSa) via the second shifting element (B) of the input gear set (VS);
• the ring gears (13, 23) of the two input planetary gear sets (VS1, VS2) are connected to one another and are connectable to the input shaft (1) via the first shifting element (A) of the input gear set (VS) ;
• the carrier (25) of the second input planetary gear set (VS2) is connectable to the carrier (15a) of the third input planetary gear set (VSa) via the fourth shifting element (D) of the input gear set (VS) and to the input shaft (1) via the fifth shifting element (E) of the input gear set (VS);
• the carriers (35, 45) of the two output planetary gear sets (NS1, NS2) are connected to one another and are connectable to the input shaft (1) via the second shifting element (H) of the output gear set (NS) ;
• the sun gear (41) of the second output planetary gear set (NS2) and the ring gear (33) of the first output planetary gear set (NS1) are connected to one another and, via the connecting shaft (2), to the carrier (15) of the first input planetary gear set (VS1) ;
• the sun gear (31) of the first output planetary gear set (NS1) is lockable by means of the first shifting element (M) of the output gear set (NS), and
• the ring gear (43) of the second output planetary gear set (NS2) is connected to the output shaft (3).

12. Multistep reduction gear according to Claim 2 or 4,
**characterized by** the following features:
• the input gear set (VS) comprises five shifting elements (A, B, C, D, E), a shiftable first input planetary gear set (VS1) having a sun gear (11), a ring gear (13) and a carrier (15) with planet gears (12), a shiftable second input planetary gear set (VS2) having a sun gear (21), a ring gear (23) and a carrier (25) with planet gears (22), and a non-shiftable third input planetary gear set (VSa) having a sun gear (11a), a ring gear (13a) and two coupled carriers (15a', 15a") with internal and external planet gears (12a', 12a");
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the sun gear (11a) of the third input planetary gear set (VSa) is locked;
• the coupled carriers (15a', 15a") of the third input planetary gear set (VSa) are connected to the input shaft (1) ;
• the sun gear (11) of the first input planetary gear set (VS1) and the ring gear (23) of the second input planetary gear set (VS2) are connected to one another and are connectable via the first shifting element (A) of the input gear set (VS);
• the sun gear (21) of the second input planetary gear set (VS2) is lockable to the ring gear (13a) of the third input planetary gear set (VSa) by means of the second shifting element (B) of the input gear set (VS) and via the third shifting element (C) of the input gear set (VS);
• the ring gear (13) of the first input planetary gear set (VS1) and the carrier (25) of the second input planetary gear set (VS2) are connected to one another, are connectable to the ring gear (13a) of the third input planetary gear set (VSa) via the fourth shifting element (D) of the input gear set (VS) and are connectable to the input shaft (1) via the fifth shifting element (E) of the input gear set (VS) ;
• the sun gear (41) of the second output planetary gear set (NS2) and the ring gear (33) of the first output planetary gear set (NS1) are connected to one another and are connected via the connecting shaft (2) to the carrier (15) of the first input planetary gear set (VS1) ;
• the carriers (35, 45) of the two output planetary gear sets (NS1, NS2) are connected to one another and are connectable to the input shaft (1) via the second shifting element (H) of the output gear set (NS) ;
• the sun gear (31) of the first output planetary gear set (NS1) is lockable by means of the first shifting element (M) of the output gear set (NS), and
• the ring gear (43) of the second output planetary gear set (NS2) is connected to the output shaft (3).

13. Multistep reduction gear according to Claim 3 or 4,
**characterized by** the following features:
• the input gear set (VS) comprises three shifting elements (A, B, D), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the sun gear (11) of the first input planetary gear set (VS1) is lockable by means of the first shifting element (A) of the input gear set (VS);
• the sun gear (21) of the second input planetary gear set (VS2) is connectable to the input shaft (1) via the second shifting element (B) of the input gear set (VS);
• the sun gear (31) of the first output planetary gear set (NS1) is connectable to the input shaft (1) via the first shifting element (M) of the output gear set (NS);
• the ring gear (13) of the first input planetary gear set (VS1) and the carrier (25) of the second input planetary gear set (VS2) are connected to one another and are lockable by means of the third shifting element (D) of the input gear set (VS);
• the ring gear (23) of the second input planetary gear set (VS2) and the carrier (15) of the first input planetary gear set (VS1) are connected to one another and, via the connecting shaft (2), to the sun gear (41) of the second output planetary gear set (NS2);
• the ring gear (33) of the first output planetary gear set (NS1) and the carrier (45) of the second output planetary gear set (NS2) are connected to one another, are connectable to the input shaft (1) via the second shifting element (H) of the output gear set (NS) and are lockable by means of the third shifting element (L) of the output gear set (NS), and
• the ring gear (43) of the second output planetary gear set (NS2) and the carrier (35) of the first output planetary gear set (NS1) are connected to one another and to the output shaft (3).

14. Multistep reduction gear according to Claim 3 or 4,
**characterized by** the following features:
• the input gear set (VS) comprises four shifting elements (A, B, D, E), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the sun gear (11) of the first input planetary gear set (VS1) is lockable by means of the first shifting element (A) of the input gear set (VS);
• the sun gear (21) of the second input planetary gear set (VS2) is connectable to the input shaft (1) via the second shifting element (B) of the input gear set (VS);
• the sun gear (31) of the first output planetary gear set (NS1) is connectable to the input shaft (1) via the first shifting element (M) of the output gear set (NS);
• the ring gear (13) of the first input planetary gear set (VS1) and the carrier (25) of the second input planetary gear set (VS2) are connected to one another, are lockable by means of the third shifting element (D) of the input gear set (VS) and are connectable to the input shaft (1) via the fourth shifting element (E) of the input gear set (VS);
• the ring gear (23) of the second input planetary gear set (VS2) and the carrier (15) of the first input planetary gear set (VS1) are connected to one another and, via the connecting shaft (2), to the sun gear (41) of the second output planetary gear set (NS2);
• the ring gear (33) of the first output planetary gear set (NS1) and the carrier (45) of the second output planetary gear set (NS2) are connected to one another, are connectable to the input shaft (1) via the second shifting element (H) of the output gear set (NS) and are lockable by means of the third shifting element (L) of the output gear set (NS), and
• the ring gear (43) of the second output planetary gear set (NS2) and the carrier (35) of the first output planetary gear set (NS1) are connected to one another and to the output shaft (3).

15. Multistep reduction gear according to Claim 3 or 4,
**characterized by** the following features:
• the input gear set (VS) comprises four shifting elements (A, B, C, D), a shiftable first input planetary gear set (VS1) having a sun gear (11), a ring gear (13) and a carrier (15) with planet gears (12), and a shiftable second input planetary gear set (VS2) having a sun gear (21), a ring gear (23) and a carrier (25) with planet gears (22);
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the sun gear (11) of the first input planetary gear set (VS1) is connectable to the input shaft (1) via the first shifting element (A) of the input gear set (VS) ;
• the sun gear (21) of the second input planetary gear set (VS2) is connectable to the input shaft (1) via the second shifting element (B) of the input gear set (VS) and is lockable by means of the third shifting element (C) of the input gear set (VS);
• the ring gear (13) of the first input planetary gear set (VS1) and the carrier (25) of the second input planetary gear set (VS2) are connected to one another and are lockable by means of the fourth shifting element (D) of the input gear set (VS);
• the ring gear (23) of the second input planetary gear set (VS2) and the carrier (15) of the first input planetary gear set (VS1) are connected to one another and to the connecting shaft (2);
• the connecting shaft (2) is connected to the sun gear (41) of the second output planetary gear set (NS2) and to the ring gear (33) of the first output planetary gear set (NS1) coupled to said sun gear (41);
• the sun gear (31) of the first output planetary gear set (NS1) is connectable to the input shaft (1) via the first shifting element (M) of the output gear set (NS);
• the carriers (35, 45) of the two output planetary gear sets (NS1, NS2) are connected to one another, are connectable to the input shaft (1) via the second shifting element (H) of the output gear set (NS) and are lockable by means of the third shifting element (L) of the output gear set (NS), and
• the ring gear (43) of the second output planetary gear set (NS2) is connected to the output shaft (3).

16. Multistep reduction gear according to Claim 3 or 4,
**characterized by** the following features:
• the input gear set (VS) comprises five shifting elements (A, B, C, D, E), a shiftable first input planetary gear set (VS1) having a sun gear (11), a ring gear (13) and a carrier (15) with planet gears (12), a shiftable second input planetary gear set (VS2) having a sun gear (21), a ring gear (23) and a carrier (25) with planet gears (22), and a non-shiftable third input planetary gear set (VSa) having a sun gear (11a), a ring gear (13a) and two coupled carriers (15a', 15a") with internal and external planet gears (12a', 12a");
• the shiftable first output planetary gear set (NS1) comprises a sun gear (31), a ring gear (33) and a carrier (35) with planet gears (32);
• the shiftable second output planetary gear set (NS2) comprises a sun gear (41), a ring gear (43) and a carrier (45) with planet gears (42);
• the input shaft (1) is connected to the sun gear (11a) of the third input planetary gear set (VSa);
• the input shaft (1) is connectable to the sun gear (11) of the first input planetary gear set (VS1) via the first shifting element (A) of the input gear set (VS) ;
• the input shaft (1) is connectable to the carrier (25) of the second input planetary gear set (VS2) via the fifth shifting element (E) of the input gear set (VS);
• the input shaft (1) is connectable to the carrier (45) of the second output planetary gear set (NS2) via the second shifting element (H) of the output gear set (NS) ;
• the coupled carriers (15a', 15a") of the third input planetary gear set (VSa) are locked;
• the sun gear (21) of the second input planetary gear set (VS2) is lockable by means of the third shifting element (C) of the input gear set (VS), in particular by the carrier (15a") of the external planet gears (12a") of the third input planetary gear set (VSa) ;
• the ring gear (13a) of the third input planetary gear set (VSa) is connectable to the sun gear (21) of the second input planetary gear set (VS2) via the second shifting element (B) of the input gear set (VS) ;
• the ring gear (13a) of the third input planetary gear set (VSa) is connectable to the carrier (25) of the second input planetary gear set (VS2) via the fourth shifting element (D) of the input gear set (VS) ;
• the ring gear (13a) of the third input planetary gear set (VSa) is connectable to the carrier (45) of the second output planetary gear set (NS2) via the third shifting element (L) of the output gear set (NS) ;
• the ring gear (13a) of the third input planetary gear set (VSa) is connectable to the sun gear (31) of the first output planetary gear set (NS1) via the first shifting element (M) of the output gear set (NS) ;
• the carrier (25) of the second input planetary gear set (VS2) and the ring gear (13) of the first input planetary gear set (VS1) are connected to one another;
• the sun gear (11) of the first input planetary gear set (VS1) and the ring gear (23) of the second input planetary gear set (VS2) are connected to one another;
• the carrier (15) of the first input planetary gear set (VS1) is connected to the sun gear (41) of the second output planetary gear set (NS2) via the connecting shaft (2);
• the carrier (45) of the second output planetary gear set (NS2) is connected to the ring gear (33) of the first output planetary gear set (NS1), and
• the carrier (35) of the first output planetary gear set (NS1) is connected to the ring gear (43) of the second output planetary gear set (NS2) and to the output shaft (3).

17. Multistep reduction gear according to Claim 3 or 4,
**characterized by** the following features:
• the input gear set (VS) comprises a shiftable first input planetary gear set (VS1), a shiftable second input planetary gear set (VS2), a non-shiftable third input planetary gear set (VSa), a non-shiftable fourth input planetary gear set (VSb) and five shifting elements (A, B, C, D, E);
• the input shaft (1) is connected to a sun gear (11b) of the fourth input planetary gear set (VSb);
• the input shaft (1) is connectable to a sun gear (21) of the second shiftable input planetary gear set (VS2) via the second shifting element (B) of the input gear set (VS);
• the input shaft (1) is connectable to a carrier (25) having planet gears (22) of the second shiftable input planetary gear set (VS2) via the fifth shifting element (E) of the input gear set (VS);
• the input shaft (1) is connectable to a carrier (45) having planet gears (42) of the second output planetary gear set (NS2) via the second shifting element (H) of the output gear set (NS);
• a sun gear (11a) of the third input planetary gear set (VSa) is locked;
• a carrier (15a) having planet gears (12a) of the third input planetary gear set (VSa) is connected to a carrier (15b") having external planet gears (12b") of the fourth input planetary gear set (VSb);
• the carrier (15a) of the third input planetary gear set (VSa) is connected to a carrier (15b') having internal planet gears (12b') of the fourth input planetary gear set (VSb);
• the carrier (15a) of the third input planetary gear set (VSa) is connectable to the sun gear (21) of the second shiftable input planetary gear set (VS2) via the third shifting element (C) of the input gear set (VS) ;
• the carrier (15a) of the third input planetary gear set (VSa) is connectable to the carrier (25) of the second shiftable input planetary gear set (VS2) via the fourth shifting element (D) of the input gear set (VS);
• the carrier (15a) of the third input planetary gear set (VSa) is connectable to a carrier (35") having external planet gears (32") of the first output planetary gear set (NS1) via the third shifting element (L) of the output gear set (NS);
• the planet gears (12a) of the third input planetary gear set (VSa) and the external planet gears (12b") of the fourth input planetary gear set (VSb) are combined;
• a ring gear (13a) of the third input planetary gear set (VSa) and a ring gear (13b) of the fourth input planetary gear set (VSb) are connected to one another;
• the ring gears (13a, 13b) of the third and fourth input planetary gear sets (VSa, VSb) are connectable to a sun gear (11) of the first shiftable input planetary gear set (VS1) via the first shifting element (A) of the input gear set (VS);
• the ring gears (13a, 13b) of the third and fourth input planetary gear sets (VSa, VSb) are connectable to a sun gear (31) of the first output planetary gear set (NS1) via the first shifting element (M) of the output gear set (NS);
• the sun gear (11) of the first shiftable input planetary gear set (VS1) is connected to a ring gear (23) of the second shiftable input planetary gear set (VS2);
• the carrier (25) of the second shiftable input planetary gear set (VS2) is connected to a ring gear (13) of the first shiftable input planetary gear set (VS1) ;
• a carrier (15) having planet gears (12) of the first shiftable input planetary gear set (VS1) is connected via the connecting shaft (2) to a sun gear (41) of the second output planetary gear set (NS2);
• the carrier (35") having the external planet gears (32") of the first output planetary gear set (NS1) and a carrier (35') having internal planet gears (32') of the first output planetary gear set (NS1) and the carrier (45) having the planet gears (42) of the second output planetary gear set (NS2) are connected to one another;
• the external planet gears (32") of the first output planetary gear set (NS1) and the planet gears (42) of the second output planetary gear set (NS2) are combined;
• a ring gear (33) of the first output planetary gear set (NS1) and a ring gear (43) of the second output planetary gear set (NS2) are connected to one another;
• the ring gears (33, 43) of the first and second output planetary gear sets (NS1, NS2) are connected to the output shaft (3).

18. Multistep reduction gear according to any one of the preceding claims,
**characterized in that**
a second output gear set (NS') in the form of a shiftable two-carrier four-shaft transmission is connected to the output of the output gear set (NS) and **in that** at least eighteen forward gears are produced, wherein the second output gear set (NS') is formed by two shiftable output planetary gear sets (NS1', NS2'), by a first shifting element (M') in the form of a brake and by a second shifting element (H') in the form of a clutch, is connected on the input side rigidly to the output shaft (3) rotating at the output rotational speed (nns) of the output gear set (NS), is connectable to the input shaft (1) via the second shifting element (H') of the second output gear set (NS') and is connected on the output side to an output shaft (4) of the multistep reduction gear.

19. Multistep reduction gear according to Claim 18, **characterized by** the following features:
• the first output planetary gear set (NS1') of the second output gear set (NS') comprises a sun gear (51), a ring gear (53) and a carrier (55) having planet gears (52);
• the second output planetary gear set (NS2') of the second output gear set (NS') comprises a sun gear (61), a ring gear (63) and a carrier (65) having planet gears (62);
• the sun gears (51, 61) of the two output planetary gear sets (NS1', NS2') of the second output gear set (NS') are connected to one another and are lockable by means of the first shifting element (M') of the second output gear set (NS');
• the ring gear (53) of the first output planetary gear set (NS1') of the second output gear set (NS') and the carrier (65) of the second output planetary gear set (NS2') of the second output gear set (NS') are connected to one another and are connectable to the input shaft (1) via the second shifting element (H') of the second output gear set (NS');
• the ring gear (63) of the second output planetary gear set (NS2') of the second output gear set (NS') is connected to the output shaft (3), and
• the carrier (55) of the first output planetary gear set (NS1') of the second output gear set (NS') is connected to the output shaft (4).

20. Multistep reduction gear according to Claim 18, **characterized by** the following features:
• the first output planetary gear set (NS1') of the second output gear set (NS') comprises a sun gear (51), a ring gear (53) and a carrier (55) having planet gears (52);
• the second output planetary gear set (NS2') of the second output gear set (NS') comprises a sun gear (61), a ring gear (63) and two coupled carriers (65', 65") having internal and external planet gears (62', 62");
• the sun gear (51) of the first output planetary gear set (NS1') of the second output gear set (NS') is lockable by means of the first shifting element (M') of the second output gear set (NS');
• the ring gears (53, 63) of the two output planetary gear sets (NS1', NS2') of the second output gear set (NS') are connected to one another and are connectable to the input shaft (1) via the second shifting element (H') of the second output gear set (NS');
• the sun gear (61) of the second output planetary gear set (NS2') of the second output gear set (NS') is connected to the output shaft (3), and
• the carriers (55, 65', 65") of the two output planetary gear sets (NS1', NS2') of the second output gear set (NS') are connected to one another and to the output shaft (4).

21. Multistep reduction gear according to Claim 19, **characterized by** the following features:
• the input shaft (1) is connected to a sun gear (11a) of the third input planetary gear set (VSa);
• the input shaft (1) is connectable to a carrier (25) having planet gears (22) of the second input planetary gear set (VS2) via the fifth shifting element (E) of the input gear set (VS);
• the input shaft (1) is connectable to a ring gear (13) of the first input planetary gear set (VS1) via the first shifting element (A) of the input gear set (VS) ;
• the input shaft (1) is connectable to a carrier (45) having planet gears (42) of the second output planetary gear set (NS2) via the second shifting element (H) of the output gear set (NS);
• the third input planetary gear set (VSa) is in the form of a plus-transmission;
• a carrier (15a') having internal planet gears (12a') of the third input planetary gear set (VSa) and a carrier (15a") having external planet gears (12a") of the third input planetary gear set (VSa) are connected to one another and locked;
• a ring gear (13a) of the third input planetary gear set (VSa) is connectable to a sun gear (21) of the second input planetary gear set (VS2) via the second shifting element (B) of the input gear set (VS);
• the ring gear (13a) of the third input planetary gear set (VSa) is connectable to the carrier (25) of the second input planetary gear set (VS2) via the fourth shifting element (D) of the input gear set (VS) ;
• the sun gear (21) of the second input planetary gear set (VS2) is connected to a sun gear (11) of the first input planetary gear set (VS1);
• the sun gear (21) of the second input planetary gear set (VS2) is lockable by means of the third shifting element (C) of the input gear set (VS);
• the ring gear (13) of the first input planetary gear set (VS1) is connected to a ring gear (23) of the second input planetary gear set (VS2);
• a carrier (15) having planet gears (12) of the first input planetary gear set (VS1) is connected to a sun gear (41) of the second output planetary gear set (NS2) via the connecting shaft (2);
• the carrier (15) of the first input planetary gear set (VS1) is connected to a ring gear (33) of the first output planetary gear set (NS1);
• the carrier (45) of the second output planetary gear set (NS2) and a carrier (35) having planet gears (32) of the first output planetary gear set (NS1) are connected to one another;
• a sun gear (31) of the first output planetary gear set (NS1) is lockable by means of the first shifting element (M) of the output gear set (NS), and
• a ring gear (43) of the second output planetary gear set (NS2) is connected to the second output gear set (NS') via the output shaft (3).

## Revendications

1. Transmission à plusieurs rapports, comprenant :
- un arbre d'entraînement (1), qui peut être commuté avec, ou connecté fixement à, un groupe de précommutation (VS),
- un arbre de prise de force (3) qui est connecté fixement à un groupe de postcommutation (NS),
- des éléments de commutation (A, B, C, D, E) agissant sur le groupe de précommutation (VS) et des éléments de commutation (M, H, L) agissant sur le groupe de postcommutation (NS),
- un régime d'entrée (n) de l'arbre d'entraînement (1), par une commutation sélective des éléments de commutation (A, B, C, D, E ; M, H, L) en vue de la commutation d'au moins neuf vitesses de marche avant, pouvant être transmis à l'arbre de prise de force (3) de telle sorte que pour le passage d'une vitesse à la vitesse suivante supérieure ou inférieure, seulement un élément de commutation soit déconnecté des éléments de commutation actuellement actionnés et qu'un élément de commutation supplémentaire soit enclenché,
- le groupe de postcommutation (NS) pouvant être connecté à l'arbre d'entraînement (1) par le biais d'au moins un deuxième élément de commutation (H) agissant sur le groupe de postcommutation (NS),
- le groupe de précommutation (VS) étant formé par deux trains planétaires de précommutation commutables accouplés (VS1, VS2) et au maximum par deux autres trains planétaires de précommutation non commutables (VSa, VSb),
- et le groupe de postcommutation (NS) étant connecté fixement au groupe de précommutation (VS) uniquement par le biais d'un arbre de liaison unique (2),
**caractérisée en ce que**
- cet arbre de liaison unique (2) tourne avec un régime de sortie (nvs) du groupe de précommutation (VS) et n'est pas connecté à un élément de commutation,
- le régime de sortie (nvs) du groupe de précommutation (VS) étant généré par fermeture sélective d'au maximum deux des éléments de commutation (A, B, C, D, E) agissant sur le groupe de précommutation (VS).

2. Transmission à plusieurs rapports selon la revendication 1, **caractérisée en ce que** le groupe de postcommutation (NS) est réalisé sous forme de transmission commutable à deux porte-satellites et quatre arbres, avec un premier et un deuxième train planétaire de postcommutation (NS1, NS2), avec un premier élément de commutation (M) du groupe de postcommutation (NS) réalisé sous forme de frein et un deuxième élément de commutation (H) du groupe de postcommutation (NS) réalisé sous forme d'embrayage, le groupe de postcommutation (NS) pouvant être connecté à l'arbre d'entraînement (1) par le biais du deuxième élément de commutation (H).

3. Transmission à plusieurs rapports selon la revendication 1, **caractérisée en ce que** le groupe de postcommutation (NS) est réalisé sous forme de transmission commutable à deux porte-satellites et quatre arbres, avec un premier et un deuxième train planétaire de postcommutation (NS1, NS2), avec un premier élément de commutation (M) réalisé sous forme d'embrayage, un deuxième élément de commutation (H) réalisé sous forme d'embrayage, et un troisième élément de commutation (L) réalisé sous forme d'embrayage ou de frein, le groupe de postcommutation (NS) pouvant être connecté à l'arbre d'entraînement (1) par le biais du deuxième élément de commutation (H).

4. Transmission à plusieurs rapports selon la revendication 1, 2 ou 3, **caractérisée en ce que** l'arbre de liaison (2) entre le groupe de précommutation (VS) et le groupe de postcommutation (NS) est connecté à une roue centrale du deuxième train planétaire de postcommutation (NS2) réalisée sous forme de roue solaire (41) ou de couronne dentée (43) .

5. Transmission à plusieurs rapports selon la revendication 2 ou 4,
**caractérisée par** les caractéristiques suivante
- le groupe de précommutation (VS) comprend quatre éléments de commutation (A, B, C, D), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la couronne dentée (13) du premier train planétaire de précommutation (VS1) et le porte-satellites (25) du deuxième train planétaire de précommutation (VS2) sont connectés l'un à l'autre et peuvent être fixés par le biais du quatrième élément de commutation (D) du groupe de précommutation (VS) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la roue solaire (41) du deuxième train planétaire de postcommutation (NS2) ;
- la couronne dentée (33) du premier train planétaire de postcommutation (NS1) et le porte-satellites (45) du deuxième train planétaire de postcommutation (NS2) peuvent être connectés l'un à l'autre et par le biais du deuxième élément de commutation (H) du groupe de postcommutation (NS) à l'arbre d'entraînement (1) ;
- la couronne dentée (43) du deuxième train planétaire de postcommutation (NS2) et le porte-satellites (35) du premier train planétaire de postcommutation (NS1) sont connectés l'un à l'autre et à l'arbre de prise de force (3) ;
- la roue solaire (11) du premier train planétaire de précommutation (VS1) peut être connectée par le biais du premier élément de commutation (A) du groupe de précommutation (VS) à l'arbre d'entraînement (1) ;
- la roue solaire (21) du deuxième train planétaire de précommutation (VS2) peut être connectée par le biais du deuxième élément de commutation (B) du groupe de précommutation (VS) à l'arbre d'entraînement (1) et peut être fixée par le biais du troisième élément de commutation (C) du groupe de précommutation (VS), et
- la roue solaire (31) du premier train planétaire de postcommutation (NS1) peut être fixée par le biais du premier élément de commutation (M) du groupe de postcommutation (NS) .

6. Transmission à plusieurs rapports selon la revendication 2 ou 4,
**caractérisée par** les caractéristiques suivantes :
- le groupe de précommutation (VS) comprend quatre éléments de commutation (A, B, D, E), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la couronne dentée (13) du premier train planétaire de précommutation (VS1) et le porte-satellites (25) du deuxième train planétaire de précommutation (VS2) sont connectés l'un à l'autre, peuvent être fixés par le biais du troisième élément de commutation (D) du groupe de précommutation (VS) et peuvent être connectés par le biais du quatrième élément de commutation (E) du groupe de précommutation (VS) à l'arbre d'entraînement (1) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la couronne dentée (43) du deuxième train planétaire de postcommutation (NS2) ;
- la couronne dentée (33) du premier train planétaire de postcommutation (NS1) et le porte-satellites (45) du deuxième train planétaire de postcommutation (NS2) sont connectés l'un à l'autre et peuvent être connectés par le biais du deuxième élément de commutation (H) du groupe de postcommutation (NS) à l'arbre d'entraînement (1) ;
- les roues solaires (31, 41) du premier et du deuxième train planétaire de postcommutation (NS1, NS2) sont connectées l'une à l'autre et peuvent être fixées par le biais du premier élément de commutation (M) du groupe de postcommutation (NS) ;
- la roue solaire (21) du deuxième train planétaire de précommutation (VS2) peut être connectée par le biais du deuxième élément de commutation (B) du groupe de précommutation (VS) à l'arbre d'entraînement (1) ;
- la roue solaire (11) du premier train planétaire de précommutation (VS1) peut être fixée par le biais du premier élément de commutation (A) du groupe de précommutation (VS) ;
- le porte-satellites (35) du premier train planétaire de postcommutation (NS1) est connecté à l'arbre de prise de force (3).

7. Transmission à plusieurs rapports selon la revendication 2 ou 4,
**caractérisée par** les caractéristiques suivantes :
- le groupe de précommutation (VS) comprend quatre éléments de commutation (A, B, C, D), un premier train planétaire de précommutation commutable (VS1) avec une roue solaire (11), une couronne dentée (13) et deux porte-satellites accouplés (15', 15") avec des pignons planétaires intérieurs et extérieurs (12', 12"), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et deux porte-satellites accouplés (45', 45") avec des pignons planétaires intérieurs et extérieurs (42', 42") ;
- les couronnes dentées (13, 23) des deux trains planétaires de précommutation (VS1, VS2) sont connectées l'une à l'autre et par le biais de l'arbre de liaison (2) à la roue solaire (41) du deuxième train planétaire de postcommutation (NS2) ;
- les porte-satellites (15', 15", 25) des deux trains planétaires de précommutation (VS1, VS2) sont connectés l'un à l'autre et peuvent être fixés par le biais du quatrième élément de commutation (D) du groupe de précommutation (VS) ;
- les couronnes dentées (33, 43) des deux trains planétaires de postcommutation (NS1, NS2) sont connectées l'une à l'autre et peuvent être connectées par le biais du deuxième élément de commutation (H) du groupe de postcommutation (NS) à l'arbre d'entraînement (1) ;
- les porte-satellites (35, 45", 45') des deux trains planétaires de postcommutation (NS1, NS2) sont connectés l'un à l'autre et à l'arbre de prise de force (3) ;
- la roue solaire (11) du premier train planétaire de précommutation (VS1) peut être connectée par le biais du premier élément de commutation (A) du groupe de précommutation (VS) à l'arbre d'entraînement (1) ;
- la roue solaire (21) du deuxième train planétaire de précommutation (VS2) peut être connectée par le biais du deuxième élément de commutation (B) du groupe de précommutation (VS) à l'arbre d'entraînement (1) et peut être fixée par le biais du troisième élément de commutation (C) du groupe de précommutation (VS) et
- la roue solaire (31) du premier train planétaire de postcommutation (NS1) peut être fixée par le biais du premier élément de commutation (M) du groupe de postcommutation (NS) .

8. Transmission à plusieurs rapports selon la revendication 2 ou 4,
**caractérisée par** les caractéristiques suivantes :
- le groupe de précommutation (VS) comprend cinq éléments de commutation (A, B, C, D, E), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la couronne dentée (13) du premier train planétaire de précommutation (VS1) et le porte-satellites (25) du deuxième train planétaire de précommutation (VS2) sont connectés l'un à l'autre, peuvent être fixés par le biais du quatrième élément de commutation (D) du groupe de précommutation (VS) et peuvent être connectés par le biais du cinquième élément de commutation (E) du groupe de précommutation (VS) à l'arbre d'entraînement (1) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la roue solaire (41) du deuxième train planétaire de postcommutation (NS2) ;
- la couronne dentée (33) du premier train planétaire de postcommutation (NS1) et le porte-satellites (45) du deuxième train planétaire de postcommutation (NS2) sont connectés l'un à l'autre et peuvent être connectés par le biais du deuxième élément de commutation (H) du groupe de postcommutation (NS) à l'arbre d'entraînement (1) ;
- la couronne dentée (43) du deuxième train planétaire de postcommutation (NS2) et le porte-satellites (35) du premier train planétaire de postcommutation (NS1) sont connectés l'un à l'autre et à l'arbre de prise de force (3) ;
- la roue solaire (11) du premier train planétaire de précommutation (VS1) peut être fixée par le biais du premier élément de commutation (A) du groupe de précommutation (VS) ;
- la roue solaire (21) du deuxième train planétaire de précommutation (VS2) peut être connectée par le biais du deuxième élément de commutation (B) du groupe de précommutation (VS) à l'arbre d'entraînement (1) et peut être fixée par le biais du troisième élément de commutation (C) du groupe de précommutation (VS) et
- la roue solaire (31) du premier train planétaire de postcommutation (NS1) peut être fixée par le biais du premier élément de commutation (M) du groupe de postcommutation (NS) .

9. Transmission à plusieurs rapports selon la revendication 2 ou 4,
**caractérisée par** les caractéristiques suivantes :
- le groupe de précommutation (VS) comprend cinq éléments de commutation (A, B, C, D, E), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la couronne dentée (13) du premier train planétaire de précommutation (VS1) et le porte-satellites (25) du deuxième train planétaire de précommutation (VS2) sont connectés l'un à l'autre, peuvent être fixés par le biais du quatrième élément de commutation (D) du groupe de précommutation (VS) et peuvent être connectés par le biais du cinquième élément de commutation (E) du groupe de précommutation (VS) à l'arbre d'entraînement (1) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la couronne dentée (43) du deuxième train planétaire de postcommutation (NS2) ;
- la couronne dentée (33) du premier train planétaire de postcommutation (NS1) et le porte-satellites (45) du deuxième train planétaire de postcommutation (NS2) sont connectés l'un à l'autre et peuvent être connectés par le biais du deuxième élément de commutation (H) du groupe de postcommutation (NS) à l'arbre d'entraînement (1) ;
- le porte-satellites (35) du premier train planétaire de postcommutation (NS1) est connecté à l'arbre de prise de force (3) ;
- la roue solaire (11) du premier train planétaire de précommutation (VS1) peut être connectée par le biais du premier élément de commutation (A) du groupe de précommutation (VS) à l'arbre d'entraînement (1) ;
- la roue solaire (21) du deuxième train planétaire de précommutation (VS2) peut être connectée par le biais du deuxième élément de commutation (B) du groupe de précommutation (VS) à l'arbre d'entraînement (1) et peut être fixée par le biais du troisième élément de commutation (C) du groupe de précommutation (VS) et
- les roues solaires (31, 41) des deux trains planétaires de postcommutation (NS1, NS2) sont connectées l'une à l'autre et peuvent être fixées par le biais du premier élément de commutation (M) du groupe de postcommutation (NS) .

10. Transmission à plusieurs rapports selon la revendication 2 ou 4,
**caractérisée par** les caractéristiques suivantes :
- le groupe de précommutation (VS) comprend cinq éléments de commutation (A, B, C, D, E), un premier train planétaire de précommutation commutable (VS1) avec une roue solaire (11), une couronne dentée (13) et un porte-satellites (15) avec des pignons planétaires (12), un deuxième train planétaire de précommutation commutable (VS2) avec une roue solaire (21), une couronne dentée (23) et un porte-satellites (25) avec des pignons planétaires (22), ainsi qu'un troisième train planétaire de précommutation non commutable (Vsa) avec une roue solaire (11a), une couronne dentée (13a) et deux porte-satellites accouplés (15a', 15a") avec des pignons planétaires intérieurs et extérieurs (12a', 12a") ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la roue solaire (11a) du troisième train planétaire de précommutation (VSa) est fixe ;
- les porte-satellites accouplés (15a', 15a") du troisième train planétaire de précommutation (VSa) sont connectés à l'arbre d'entraînement (1) ;
- la roue solaire (11) du premier train planétaire de précommutation (VS1) peut être connectée par le biais du premier élément de commutation (A) du groupe de précommutation (VS) à l'arbre d'entraînement (1) ;
- la roue solaire (21) du deuxième train planétaire de précommutation (VS2) peut être connectée par le biais du deuxième élément de commutation (B) du groupe de précommutation (VS) à la couronne dentée (13a) du troisième train planétaire de précommutation (VSa) et peut être fixée par le biais du troisième élément de commutation (C) du groupe de précommutation (VS) ;
- la roue solaire (31) du premier train planétaire de postcommutation (NS1) peut être fixée par le biais du premier élément de commutation (M) du groupe de postcommutation (NS) ;
- la couronne dentée (13) du premier train planétaire de précommutation (VS1) et le porte-satellites (25) du deuxième train planétaire de précommutation (VS2) sont connectés l'un à l'autre, peuvent être fixés par le biais du quatrième élément de commutation (D) du groupe de précommutation (VS) et peuvent être connectés par le biais du cinquième élément de commutation (E) du groupe de précommutation (VS) à l'arbre d'entraînement (1) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la roue solaire (41) du deuxième train planétaire de postcommutation (NS2) ;
- la couronne dentée (33) du premier train planétaire de postcommutation (NS1) et le porte-satellites (45) du deuxième train planétaire de postcommutation (NS2) sont connectés l'un à l'autre et peuvent être connectés par le biais du deuxième élément de commutation (H) du groupe de postcommutation (NS) à l'arbre d'entraînement (1) et
- la couronne dentée (43) du deuxième train planétaire de postcommutation (NS2) et le porte-satellites (35) du premier train planétaire de postcommutation (NS1) sont connectés l'un à l'autre et à l'arbre de prise de force (3).

11. Transmission à plusieurs rapports selon la revendication 2 ou 4,
**caractérisée par** les caractéristiques suivantes :
- le groupe de précommutation (VS) comprend cinq éléments de commutation (A, B, C, D, E), un premier train planétaire de précommutation commutable (VS1) avec une roue solaire (11), une couronne dentée (13) et un porte-satellites (15) avec des pignons planétaires (12), un deuxième train planétaire de précommutation commutable (VS2) avec une roue solaire (21), une couronne dentée (23) et un porte-satellites (25) avec des pignons planétaires (22), ainsi qu'un troisième train planétaire de précommutation non commutable (Vsa) avec une roue solaire (11a), une couronne dentée (13a) et un porte-satellites (15a) avec des pignons planétaires étagés présentant des petits et des grands pignons planétaires (12ak, 12ag) ;
- le train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la roue solaire (11a) du troisième train planétaire de précommutation (VSa) s'engrène avec les petits pignons planétaires (12ak) du troisième train planétaire de précommutation (VSa) et est fixe ;
- la couronne dentée (13a) du troisième train planétaire de précommutation (VSa) est connectée à l'arbre d'entraînement (1) et s'engrène avec les grands pignons planétaires (12ag) du troisième train planétaire de précommutation (VSa) ;
- les roues solaires (11, 21) des deux trains planétaires de précommutation (VS1, VS2) sont connectées l'une à l'autre, peuvent être fixées par le biais du troisième élément de commutation (C) du groupe de précommutation (VS) et peuvent être connectées par le biais du deuxième élément de commutation (B) du groupe de précommutation (VS) au porte-satellites (15a) du troisième train planétaire de précommutation (VSa) ;
- les couronnes dentées (13, 23) des deux trains planétaires de précommutation (VS1, VS2) sont connectées l'une à l'autre et peuvent être connectées par le biais du premier élément de commutation (A) du groupe de précommutation (VS) à l'arbre d'entraînement (1) ;
- le porte-satellites (25) du deuxième train planétaire de précommutation (VS2) peut être connecté par le biais du quatrième élément de commutation (D) du groupe de précommutation (VS) au porte-satellites (15a) du troisième train planétaire de précommutation (VSa) ainsi que par le biais du cinquième élément de commutation (E) du groupe de précommutation (VS) à l'arbre d'entraînement (1) ;
- les porte-satellites (35, 45) des deux trains planétaires de postcommutation (NS1, NS2) sont connectés l'un à l'autre et peuvent être connectés par le biais du deuxième élément de commutation (H) du groupe de postcommutation (NS) à l'arbre d'entraînement (1) ;
- la roue solaire (41) du deuxième train planétaire de postcommutation (NS2) et la couronne dentée (33) du premier train planétaire de postcommutation (NS1) sont connectées l'une à l'autre et par le biais de l'arbre de liaison (2) au porte-satellites (15) du premier train planétaire de précommutation (VS1) ;
- la roue solaire (31) du premier train planétaire de postcommutation (NS1) peut être fixée par le biais du premier élément de commutation (M) du groupe de postcommutation (NS) et
- la couronne dentée (43) du deuxième train planétaire de postcommutation (NS2) est connectée à l'arbre de prise de force (3).

12. Transmission à plusieurs rapports selon la revendication 2 ou 4,
**caractérisée par** les caractéristiques suivantes :
- le groupe de précommutation (VS) comprend cinq éléments de commutation (A, B, C, D, E), un premier train planétaire de précommutation commutable (VS1) avec une roue solaire (11), une couronne dentée (13) et un porte-satellites (15) avec des pignons planétaires (12), un deuxième train planétaire de précommutation commutable (VS2) avec une roue solaire (21), une couronne dentée (23) et un porte-satellites (25) avec des pignons planétaires (22), ainsi qu'un troisième train planétaire de précommutation non commutable (Vsa) avec une roue solaire (11a), une couronne dentée (13a) et deux porte-satellites accouplés (15a', 15a") avec des pignons planétaires intérieurs et extérieurs (12a', 12a") ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la roue solaire (11a) du troisième train planétaire de précommutation (VSa) est fixe ;
- les porte-satellites accouplés (15a', 15a") du troisième train planétaire de précommutation (VSa) sont connectés à l'arbre d'entraînement (1) ;
- la roue solaire (11) du premier train planétaire de précommutation (VS1) et la couronne dentée (23) du deuxième train planétaire de précommutation (VS2) sont connectées l'une à l'autre et peuvent être connectées par le biais du premier élément de commutation (A) du groupe de précommutation (VS) ;
- la roue solaire (21) du deuxième train planétaire de précommutation (VS2) peut être fixée par le biais du deuxième élément de commutation (B) du groupe de précommutation (VS) à la couronne dentée (13a) du troisième train planétaire de précommutation (VSa) et par le biais du troisième élément de commutation (C) du groupe de précommutation (VS) ;
- la couronne dentée (13) du premier train planétaire de précommutation (VS1) et le porte-satellites (25) du deuxième train planétaire de précommutation (VS2) sont connectés l'un à l'autre, peuvent être connectés par le biais du quatrième élément de commutation (D) du groupe de précommutation (VS) à la couronne dentée (13a) du troisième train planétaire de précommutation (VSa) et peuvent être connectés par le biais du cinquième élément de commutation (E) du groupe de précommutation (VS) à l'arbre d'entraînement (1) ;
- la roue solaire (41) du deuxième train planétaire de postcommutation (NS2) et la couronne dentée (33) du premier train planétaire de postcommutation (NS1) sont connectées l'une à l'autre et sont connectées par le biais de l'arbre de liaison (2) au porte-satellites (15) du premier train planétaire de précommutation (VS1) ;
- les porte-satellites (35, 45) des deux trains planétaires de postcommutation (NS1, NS2) sont connectés l'un à l'autre et peuvent être connectés par le biais du deuxième élément de commutation (H) du groupe de postcommutation (NS) à l'arbre d'entraînement (1) ;
- la roue solaire (31) du premier train planétaire de postcommutation (NS1) peut être fixée par le biais du premier élément de commutation (M) du groupe de postcommutation (NS) et
- la couronne dentée (43) du deuxième train planétaire de postcommutation (NS2) est connectée à l'arbre de prise de force (3).

13. Transmission à plusieurs rapports selon la revendication 3 ou 4,
**caractérisée par** les caractéristiques suivantes :
- le groupe de précommutation (VS) comprend trois éléments de commutation (A, B, D), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la roue solaire (11) du premier train planétaire de précommutation (VS1) peut être fixée par le biais du premier élément de commutation (A) du groupe de précommutation (VS) ;
- la roue solaire (21) du deuxième train planétaire de précommutation (VS2) peut être connectée par le biais du deuxième élément de commutation (B) du groupe de précommutation (VS) à l'arbre d'entraînement (1) ;
- la roue solaire (31) du premier train planétaire de postcommutation (NS1) peut être connectée par le biais du premier élément de commutation (M) du groupe de postcommutation (NS) à l'arbre d'entraînement (1) ;
- la couronne dentée (13) du premier train planétaire de précommutation (VS1) et le porte-satellites (25) du deuxième train planétaire de précommutation (VS2) sont connectés l'un à l'autre et peuvent être fixés par le biais du troisième élément de commutation (D) du groupe de précommutation (VS) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la roue solaire (41) du deuxième train planétaire de postcommutation (NS2) ;
- la couronne dentée (33) du premier train planétaire de postcommutation (NS1) et le porte-satellites (45) du deuxième train planétaire de postcommutation (NS2) sont connectés l'un à l'autre, peuvent être connectés par le biais du deuxième élément de commutation (H) du groupe de postcommutation (NS) à l'arbre d'entraînement (1) et peuvent être fixés par le biais du troisième élément de commutation (L) du groupe de postcommutation (NS), et
- la couronne dentée (43) du deuxième train planétaire de postcommutation (NS2) et le porte-satellites (35) du premier train planétaire de postcommutation (NS1) sont connectés l'un à l'autre et à l'arbre de prise de force (3).

14. Transmission à plusieurs rapports selon la revendication 3 ou 4,
**caractérisée par** les caractéristiques suivantes :
- le groupe de précommutation (VS) comprend quatre éléments de commutation (A, B, D, E), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la roue solaire (11) du premier train planétaire de précommutation (VS1) peut être fixée par le biais du premier élément de commutation (A) du groupe de précommutation (VS) ;
- la roue solaire (21) du deuxième train planétaire de précommutation (VS2) peut être connectée par le biais du deuxième élément de commutation (B) du groupe de précommutation (VS) à l'arbre d'entraînement (1) ;
- la roue solaire (31) du premier train planétaire de postcommutation (NS1) peut être connectée par le biais du premier élément de commutation (M) du groupe de postcommutation (NS) à l'arbre d'entraînement (1) ;
- la couronne dentée (13) du premier train planétaire de précommutation (VS1) et le porte-satellites (25) du deuxième train planétaire de précommutation (VS2) sont connectés l'un à l'autre, peuvent être fixés par le biais du troisième élément de commutation (D) du groupe de précommutation (VS) et peuvent être connectés par le biais du quatrième élément de commutation (E) du groupe de précommutation (VS) à l'arbre d'entraînement (1) ;
- la couronne dentée (23) du deuxième train planétaire de précommutation (VS2) et le porte-satellites (15) du premier train planétaire de précommutation (VS1) sont connectés l'un à l'autre et par le biais de l'arbre de liaison (2) à la roue solaire (41) du deuxième train planétaire de postcommutation (NS2) ;
- la couronne dentée (33) du premier train planétaire de postcommutation (NS1) et le porte-satellites (45) du deuxième train planétaire de postcommutation (NS2) sont connectés l'un à l'autre, peuvent être connectés par le biais du deuxième élément de commutation (H) du groupe de postcommutation (NS) à l'arbre d'entraînement (1) et peuvent être fixés par le biais du troisième élément de commutation (L) du groupe de postcommutation (NS), et
- la couronne dentée (43) du deuxième train planétaire de postcommutation (NS2) et le porte-satellites (35) du premier train planétaire de postcommutation (NS1) sont connectés l'un à l'autre et à l'arbre de prise de force (3).

15. Transmission à plusieurs rapports selon la revendication 3 ou 4,
**caractérisée par** les caractéristiques suivantes :
- le groupe de précommutation (VS) comprend quatre éléments de commutation (A,B,C,D), un premier train planétaire de précommutation commutable (VS1) avec une roue solaire (11), une couronne dentée (13) et un porte-satellites (15) avec des pignons planétaires (12), ainsi qu'un deuxième train planétaire de précommutation commutable (VS2) avec une roue solaire (21), une couronne dentée (23) et un porte-satellites (25) avec des pignons planétaires (22) ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- la roue solaire (11) du premier train planétaire de précommutation (VS1) peut être connectée par le biais du premier élément de commutation (A) du groupe de précommutation (VS) à l'arbre d'entraînement (1) ;
- la roue solaire (21) du deuxième train planétaire de précommutation (VS2) peut être connectée par le biais du deuxième élément de commutation (B) du groupe de précommutation (VS) à l'arbre d'entraînement (1) et peut être fixée par le biais du troisième élément de commutation (C) du groupe de précommutation (VS) ;
- la couronne dentée (13) du premier train planétaire de précommutation (VS1) et le porte-satellites (25) du deuxième train planétaire de précommutation (VS2) sont connectés l'un à l'autre et peuvent être fixés par le biais du quatrième élément de commutation (D) du groupe de précommutation (VS) ;
- la couronne dentée (23) du deuxième train planétaire de précommutation (VS2) et le porte-satellites (15) du premier train planétaire de précommutation (VS1) sont connectés l'un à l'autre et à l'arbre de liaison (2) ;
- l'arbre de liaison (2) est connecté à la roue solaire (41) du deuxième train planétaire de postcommutation (NS2) et à la couronne dentée (33) accouplée à cette roue solaire (41) du premier train planétaire de postcommutation (NS1) ;
- la roue solaire (31) du premier train planétaire de postcommutation (NS1) peut être connectée par le biais du premier élément de commutation (M) du groupe de postcommutation (NS) à l'arbre d'entraînement (1) ;
- les porte-satellites (35, 45) des deux trains planétaires de postcommutation (NS1, NS2) sont connectés l'un à l'autre, peuvent être connectés par le biais du deuxième élément de commutation (H) du groupe de postcommutation (NS) à l'arbre d'entraînement (1) et peuvent être fixés par le biais du troisième élément de commutation (L) du groupe de postcommutation (NS), et
- la couronne dentée (43) du deuxième train planétaire de postcommutation (NS2) est connectée à l'arbre de prise de force (3).

16. Transmission à plusieurs rapports selon la revendication 3 ou 4,
**caractérisée par** les caractéristiques suivantes :
- le groupe de précommutation (VS) comprend cinq éléments de commutation (A, B, C, D, E), un premier train planétaire de précommutation commutable (VS1) avec une roue solaire (11), une couronne dentée (13) et un porte-satellites (15) avec des pignons planétaires (12), un deuxième train planétaire de précommutation commutable (VS2) avec une roue solaire (21), une couronne dentée (23) et un porte-satellites (25) avec des pignons planétaires (22), ainsi qu'un troisième train planétaire de précommutation non commutable (VSa) avec une roue solaire (11a), une couronne dentée (13a) et deux porte-satellites accouplés (15a', 15a") avec des pignons planétaires intérieurs et extérieurs (12a', 12a") ;
- le premier train planétaire de postcommutation commutable (NS1) comprend une roue solaire (31), une couronne dentée (33) et un porte-satellites (35) avec des pignons planétaires (32) ;
- le deuxième train planétaire de postcommutation commutable (NS2) comprend une roue solaire (41), une couronne dentée (43) et un porte-satellites (45) avec des pignons planétaires (42) ;
- l'arbre d'entraînement (1) est connecté à la roue solaire (11a) du troisième train planétaire de précommutation (VSa) ;
- l'arbre d'entraînement (1) peut être connecté par le biais du premier élément de commutation (A) du groupe de précommutation (VS) à la roue solaire (11) du premier train planétaire de précommutation (VS1) ;
- l'arbre d'entraînement (1) peut être connecté par le biais du cinquième élément de commutation (E) du groupe de précommutation (VS) au porte-satellites (25) du deuxième train planétaire de précommutation (VS2) ;
- l'arbre d'entraînement (1) peut être connecté par le biais du deuxième élément de commutation (H) du groupe de postcommutation (NS) au porte-satellites (45) du deuxième train planétaire de postcommutation (NS2) ;
- les porte-satellites accouplés (15a', 15a") du troisième train planétaire de précommutation (VSa) sont fixes ;
- la roue solaire (21) du deuxième train planétaire de précommutation (VS2) peut être fixée par le biais du troisième élément de commutation (C) du groupe de précommutation (VS), en particulier par le porte-satellites (15a") des pignons planétaires extérieurs (12a") du troisième train planétaire de précommutation (VSa) ;
- la couronne dentée (13a) du troisième train planétaire de précommutation (VSa) peut être connectée par le biais du deuxième élément de commutation (B) du groupe de précommutation (VS) à la roue solaire (21) du deuxième train planétaire de précommutation (VS2) ;
- la couronne dentée (13a) du troisième train planétaire de précommutation (VSa) peut être connectée par le biais du quatrième élément de commutation (D) du groupe de précommutation (VS) au porte-satellites (25) du deuxième train planétaire de précommutation (VS2) ;
- la couronne dentée (13a) du troisième train planétaire de précommutation (VSa) peut être connectée par le biais du troisième élément de commutation (L) du groupe de postcommutation (NS) au porte-satellites (45) du deuxième train planétaire de postcommutation (NS2) ;
- la couronne dentée (13a) du troisième train planétaire de précommutation (VSa) peut être connectée par le biais du premier élément de commutation (M) du groupe de postcommutation (NS) à la roue solaire (31) du premier train planétaire de postcommutation (NS1) ;
- le porte-satellites (25) du deuxième train planétaire de précommutation (VS2) et la couronne dentée (13) du premier train planétaire de précommutation (VS1) sont connectés l'un à l'autre ;
- la roue solaire (11) du premier train planétaire de précommutation (VS1) et la couronne dentée (23) du deuxième train planétaire de précommutation (VS2) sont connectées l'une à l'autre ;
- le porte-satellites (15) du premier train planétaire de précommutation (VS1) est connecté par le biais de l'arbre de liaison (2) à la roue solaire (41) du deuxième train planétaire de postcommutation (NS2) ;
- le porte-satellites (45) du deuxième train planétaire de postcommutation (NS2) est connecté à la couronne dentée (33) du premier train planétaire de postcommutation (NS1), et
- le porte-satellites (35) du premier train planétaire de postcommutation (NS1) est connecté à la couronne dentée (43) du deuxième train planétaire de postcommutation (NS2) et à l'arbre de prise de force (3).

17. Transmission à plusieurs rapports selon la revendication 3 ou 4,
**caractérisée par** les caractéristiques suivantes :
- le groupe de précommutation (VS) comprend un premier train planétaire de précommutation commutable (VS1), un deuxième train planétaire de précommutation commutable (VS2), un troisième train planétaire de précommutation non commutable (VSa), un quatrième train planétaire de précommutation non commutable (VSb), et cinq éléments de commutation (A, B, C, D, E) ;
- l'arbre d'entraînement (1) est connecté à une roue solaire (11b) du quatrième train planétaire de précommutation (VSb) ;
- l'arbre d'entraînement (1) peut être connecté par le biais du deuxième élément de commutation (B) du groupe de précommutation (VS) à une roue solaire (21) du deuxième train planétaire de précommutation commutable (VS2) ;
- l'arbre d'entraînement (1) peut être connecté par le biais du cinquième élément de commutation (E) du groupe de précommutation (VS) à un porte-satellites (25) avec des pignons planétaires (22) du deuxième train planétaire de précommutation commutable (VS2) ;
- l'arbre d'entraînement (1) peut être connecté par le biais du deuxième élément de commutation (H) du groupe de postcommutation (NS) à un porte-satellites (45) avec des pignons planétaires (42) du deuxième train planétaire de postcommutation (NS2) ;
- une roue solaire (11a) du troisième train planétaire de précommutation (VSa) est fixe ;
- un porte-satellites (15a) avec des pignons planétaires (12a) du troisième train planétaire de précommutation (VSa) est connecté à un porte-satellites (15b") avec des pignons planétaires extérieurs (12b") du quatrième train planétaire de précommutation (VSb) ;
- le porte-satellites (15a) du troisième train planétaire de précommutation (VSa) est connecté à un porte-satellites (15b') avec des pignons planétaires intérieurs (12b') du quatrième train planétaire de précommutation (VSb) ;
- le porte-satellites (15a) du troisième train planétaire de précommutation (VSa) peut être connecté par le biais du troisième élément de commutation (C) du groupe de précommutation (VS) à la roue solaire (21) du deuxième train planétaire de précommutation commutable (VS2) ;
- le porte-satellites (15a) du troisième train planétaire de précommutation (VSa) peut être connecté par le biais du quatrième élément de commutation (D) du groupe de précommutation (VS) au porte-satellites (25) du deuxième train planétaire de précommutation commutable (VS2) ;
- le porte-satellites (15a) du troisième train planétaire de précommutation (VSa) peut être connecté par le biais du troisième élément de commutation (L) du groupe de postcommutation (NS) à un porte-satellites (35") avec des pignons planétaires extérieurs (32") du premier train planétaire de postcommutation (NS1) ;
- les pignons planétaires (12a) du troisième train planétaire de précommutation (VSa) et les pignons planétaires extérieurs (12b") du quatrième train planétaire de précommutation (VSb) sont assemblés les uns aux autres ;
- une couronne dentée (13a) du troisième train planétaire de précommutation (VSa) et une couronne dentée (13b) du quatrième train planétaire de précommutation (VSb) sont connectées l'une à l'autre ;
- les couronnes dentées (13a, 13b) du troisième et du quatrième train planétaire de précommutation (Vsa, VSb) peuvent être connectées par le biais du premier élément de commutation (A) du groupe de précommutation (VS) à une roue solaire (11) du premier train planétaire de précommutation commutable (VS1) ;
- les couronnes dentées (13a, 13b) du troisième et du quatrième train planétaire de précommutation (Vsa, VSb) peuvent être connectées par le biais du premier élément de commutation (M) du groupe de postcommutation (NS) à une roue solaire (31) du premier train planétaire de postcommutation (NS1) ;
- la roue solaire (11) du premier train planétaire de précommutation commutable (VS1) est connectée à une couronne dentée (23) du deuxième train planétaire de précommutation commutable (VS2) ;
- le porte-satellites (25) du deuxième train planétaire de précommutation commutable (VS2) est connecté à une couronne dentée (13) du premier train planétaire de précommutation commutable (VS1) ;
- un porte-satellites (15) avec des pignons planétaires (12) du premier train planétaire de précommutation commutable (VS1) est connecté par le biais de l'arbre de liaison (2) à une roue solaire (41) du deuxième train planétaire de postcommutation (NS2) ;
- le porte-satellites (35") avec les pignons planétaires extérieurs (32") du premier train planétaire de postcommutation (NS1) et un porte-satellites (35') avec des pignons planétaires intérieurs (32') du premier train planétaire de postcommutation (NS1) et le porte-satellites (45) avec les pignons planétaires (42) du deuxième train planétaire de postcommutation (NS2) sont connectés les uns aux autres ;
- les pignons planétaires extérieurs (32") du premier train planétaire de postcommutation (NS1) et les pignons planétaires (42) du deuxième train planétaire de postcommutation (NS2) sont assemblés les uns aux autres ;
- une couronne dentée (33) du premier train planétaire de postcommutation (NS1) et une couronne dentée (43) du deuxième train planétaire de postcommutation (NS2) sont connectées l'une à l'autre ;
- les couronnes dentées (33, 43) du premier et du deuxième train planétaire de postcommutation (NS1, NS2) sont connectées à l'arbre de prise de force (3).

18. Transmission à plusieurs rapports selon l'une quelconque des revendications précédentes,
**caractérisée en ce que**
le groupe de postcommutation (NS) est suivi d'un deuxième groupe de postcommutation (NS') réalisé sous la forme d'une transmission commutable à deux porte-satellites et quatre arbres, et **en ce qu'**au moins dix-huit vitesses de marche avant sont produites,
le deuxième groupe de postcommutation (NS') étant formé de deux trains planétaires de postcommutation commutables (NS1', NS2'), d'un premier élément de commutation (M') réalisé sous forme de frein et d'un deuxième élément de commutation (H') réalisé sous forme d'embrayage, étant connecté du côté de l'entrée de manière fixe à l'arbre de prise de force (3) tournant avec le régime de sortie (nns) du groupe de postcommutation (NS), et pouvant être connecté par le biais du deuxième élément de commutation (H') du deuxième groupe de postcommutation (NS') à l'arbre d'entraînement (1), et étant connecté du côté de la sortie à un arbre de sortie (4) de la transmission à plusieurs rapports.

19. Transmission à plusieurs rapports selon la revendication 18,
**caractérisée par** les caractéristiques suivantes :
- le premier train planétaire de postcommutation (NS1') du deuxième groupe de postcommutation (NS') comprend une roue solaire (51), une couronne dentée (53) et un porte-satellites (55) avec des pignons planétaires (52) ;
- le deuxième train planétaire de postcommutation (NS2') du deuxième groupe de postcommutation (NS') comprend une roue solaire (61), une couronne dentée (63) et un porte-satellites (65) avec des pignons planétaires (62) ;
- les roues solaires (51, 61) des deux trains planétaires de postcommutation (NS1', NS2') du deuxième groupe de postcommutation (NS') sont connectées l'une à l'autre et peuvent être fixées par le biais du premier élément de commutation (M') du deuxième groupe de postcommutation (NS') ;
- la couronne dentée (53) du premier train planétaire de postcommutation (NS1') du deuxième groupe de postcommutation (NS') et le porte-satellites (65) du deuxième train planétaire de postcommutation (NS2') du deuxième groupe de postcommutation (NS') sont connectés l'un à l'autre et peuvent être connectés par le biais du deuxième élément de commutation (H') du deuxième groupe de postcommutation (NS') à l'arbre d'entraînement (1) ;
- la couronne dentée (63) du deuxième train planétaire de postcommutation (NS2') du deuxième groupe de postcommutation (NS') est connectée à l'arbre de prise de force (3), et
- le porte-satellites (55) du premier train planétaire de postcommutation (NS1') du deuxième groupe de postcommutation (NS') est connecté à l'arbre de sortie (4).

20. Transmission à plusieurs rapports selon la revendication 18,
**caractérisée par** les caractéristiques suivantes :
- le premier train planétaire de postcommutation (NS1') du deuxième groupe de postcommutation (NS') comprend une roue solaire (51), une couronne dentée (53) et un porte-satellites (55) avec des pignons planétaires (52) ;
- le deuxième train planétaire de postcommutation (NS2') du deuxième groupe de postcommutation (NS') comprend une roue solaire (61), une couronne dentée (63) et deux porte-satellites accouplés (65', 65") avec des pignons planétaires intérieurs et extérieurs (62', 62") ;
- la roue solaire (51) du premier train planétaire de postcommutation (NS1') du deuxième groupe de postcommutation (NS') peut être fixée par le biais du premier élément de commutation (M') du deuxième groupe de postcommutation (NS') ;
- les couronnes dentées (53, 63) des deux trains planétaires de postcommutation (NS1', NS2') du deuxième groupe de postcommutation (NS') sont connectées l'une à l'autre et peuvent être connectées par le biais du deuxième élément de commutation (H') du deuxième groupe de postcommutation (NS') à l'arbre d'entraînement (1) ;
- la roue solaire (61) du deuxième train planétaire de postcommutation (NS2') du deuxième groupe de postcommutation (NS') est connectée à l'arbre de prise de force (3), et
- les porte-satellites (55, 65', 65") des deux trains planétaires de postcommutation (NS1', NS2') du deuxième groupe de postcommutation (NS') sont connectés les uns aux autres et à l'arbre de sortie (4).

21. Transmission à plusieurs rapports selon la revendication 19,
**caractérisée par** les caractéristiques suivantes :
- l'arbre d'entraînement (1) est connecté à une roue solaire (11a) du troisième train planétaire de précommutation (VSa) ;
- l'arbre d'entraînement (1) peut être connecté par le biais du cinquième élément de commutation (E) du groupe de précommutation (VS) à un porte-satellites (25) avec des pignons planétaires (22) du deuxième train planétaire de précommutation (VS2) ;
- l'arbre d'entraînement (1) peut être connecté par le biais du premier élément de commutation (A) du groupe de précommutation (VS) à une couronne dentée (13) du premier train planétaire de précommutation (VS1) ;
- l'arbre d'entraînement (1) peut être connecté par le biais du deuxième élément de commutation (H) du groupe de postcommutation (NS) à un porte-satellites (45) avec des pignons planétaires (42) du deuxième train planétaire de postcommutation (NS2) ;
- le troisième train planétaire de précommutation (VSa) est réalisé sous forme de transmission positive ;
- un porte-satellites (15a') avec des pignons planétaires (12a') du troisième train planétaire de précommutation (VSa) et un porte-satellites (15a") avec des pignons planétaires extérieurs (12a") du troisième train planétaire de précommutation (VSa) sont connectés et fixés l'un à l'autre ;
- une couronne dentée (13a) du troisième train planétaire de précommutation (VSa) peut être connectée par le biais du deuxième élément de commutation (B) du groupe de précommutation (VS) à une roue solaire (21) du deuxième train planétaire de précommutation (VS2) ;
- la couronne dentée (13a) du troisième train planétaire de précommutation (VSa) peut être connectée par le biais du quatrième élément de commutation (D) du groupe de précommutation (VS) au porte-satellites (25) du deuxième train planétaire de précommutation (VS2) ;
- la roue solaire (21) du deuxième train planétaire de précommutation (VS2) est connectée à une roue solaire (11) du premier train planétaire de précommutation (VS1) ;
- la roue solaire (21) du deuxième train planétaire de précommutation (VS2) peut être fixée par le biais du troisième élément de commutation (C) du groupe de précommutation (VS) ;
- la couronne dentée (13) du premier train planétaire de précommutation (VS1) est connectée à une couronne dentée (23) du deuxième train planétaire de précommutation (VS2) ;
- un porte-satellites (15) avec des pignons planétaires (12) du premier train planétaire de précommutation (VS1) est connecté par le biais de l'arbre de liaison (2) à une roue solaire (41) du deuxième train planétaire de postcommutation (NS2) ;
- le porte-satellites (15) du premier train planétaire de précommutation (VS1) est connecté à une couronne dentée (33) du premier train planétaire de postcommutation (NS1) ;
- le porte-satellites (45) du deuxième train planétaire de postcommutation (NS2) et un porte-satellites (35) avec des pignons planétaires (32) du premier train planétaire de postcommutation (NS1) sont connectés l'un à l'autre ;
- une roue solaire (31) du premier train planétaire de postcommutation (NS1) peut être fixée par le biais du premier élément de commutation (M) du groupe de postcommutation (NS), et
- une couronne dentée (43) du deuxième train planétaire de postcommutation (NS2) est connectée par le biais de l'arbre de prise de force (3) au deuxième groupe de postcommutation (NS').
